(19) Europäisches Patentamt
European Patent Office
Office européen des brevets

(11) **EP 4 261 476 B1**

(12) **EUROPEAN PATENT SPECIFICATION**

(45) Date of publication and mention
of the grant of the patent:
**15.04.2026 Bulletin 2026/16**

(21) Application number: **21906627.1**

(22) Date of filing: **14.12.2021**

(51) International Patent Classification (IPC):
**C09K 5/04** *(2006.01)* **F25B 1/00** *(2006.01)*

(52) Cooperative Patent Classification (CPC):
**C09K 5/045;** C09K 2205/126; C09K 2205/22;
C09K 2205/40; F25B 2400/12

(86) International application number:
**PCT/JP2021/046094**

(87) International publication number:
**WO 2022/131265 (23.06.2022 Gazette 2022/25)**

(54) **REFRIGERANT-CONTAINING COMPOSITION, USE THEREOF, REFRIGERATOR HAVING SAME, AND METHOD FOR OPERATING SAID REFRIGERATOR**

KÄLTEMITTELHALTIGE ZUSAMMENSETZUNG, VERWENDUNG DAVON, KÜHLSCHRANK DAMIT UND VERFAHREN ZUM BETRIEB DES KÜHLSCHRANKS

COMPOSITION CONTENANT UN FLUIDE FRIGORIGÈNE, SON UTILISATION, RÉFRIGÉRATEUR DOTÉ DE LADITE COMPOSITION, ET PROCÉDÉ D'ACTIONNEMENT DUDIT RÉFRIGÉRATEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.12.2020 JP 2020206857**

(43) Date of publication of application:
**18.10.2023 Bulletin 2023/42**

(73) Proprietor: **DAIKIN INDUSTRIES, LTD.**
**Osaka-shi, Osaka 530-0001 (JP)**

(72) Inventors:
• **ITANO, Mitsushi**
**Osaka-shi, Osaka 530-0001 (JP)**
• **OHKUBO, Shun**
**Osaka-shi, Osaka 530-0001 (JP)**
• **KARUBE, Daisuke**
**Osaka-shi, Osaka 530-0001 (JP)**

(74) Representative: **Hoffmann Eitle**
**Patent- und Rechtsanwälte PartmbB**
**Arabellastraße 30**
**81925 München (DE)**

(56) References cited:
**WO-A1-2015/125874 WO-A1-2020/035690**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Technical Field

The present disclosure relates to a composition comprising a refrigerant, use of the composition, a refrigerating machine comprising the composition, and a method for operating the refrigerating machine.

Background Art

R410A is currently used as an air conditioning refrigerant for e.g. home air conditioners R410A is a two-component mixed refrigerant of difluoromethane ($CH_2F_2$; HFC-32 or R32) and pentafluoroethane ($C_2HF_5$; HFC-125 or R125) and is a pseudo-azeotropic composition.

However, the global warming potential (GWP) of R410A is 2088. Due to growing concerns about global warming, R32, which has a GWP of 675, has been increasingly used.

For this reason, various low-GWP mixed refrigerants that can replace R410A have been proposed (WO2 015/141678).

WO 2015/125874 discloses a working medium for heat cycle, comprising trifluoroethylene and difluoroethylene, wherein the ratio of the difluoroethylene content to the working medium is < 1.5 mass%.

WO 2020/035690 relates to the use as a refrigerant in a heat pump system in an electric vehicle of a composition comprising 1,1-difluoroethylene (R-1 132a) and at least one fluorocarbon refrigerant compound selected from 2,3,3,3-tetrafluoropropene (R-1234yf), difluoromethane (R-32), 1,3,3,3-tetrafluoropropene (R-1234ze(E)) and 1,1-difluoroethane (R-152a).

Summary of Invention

Technical Problem

An object of the present disclosure is to provide a novel low-GWP mixed refrigerant.

Solution to Problem

The present invention provides a composition (1) comprising a refrigerant comprising, based on the entire refrigerant, $\geq$ 99.5 mass% in total of 1,1-difluoroethylene (HFO-1132a), difluoromethane (R32) and 1,3,3,3-tetrafluoropropene (R1234ze) , wherein, when the mass% of HFO-1132a, R32, and R1234ze based on their sum in the refrigerant is respectively represented by x, y, and z, the coordinates (x,y,z) in a ternary composition diagram in which the sum of HFO-1132a, R32, and R1234ze is 100 mass% are within the range of a figure surrounded by straight lines IB, BE, EF, and FI connecting the four points I, B, E and F, or on the straight lines:

I (10.0, 74.0, 16.0)
B (1.5, 73.9, 24.6)
E (1.5, 56.2, 42.3)
F (10.0, 37.7, 52.3).

Also, the present invention provides a composition (2) comprising a refrigerant comprising, based on the entire refrigerant, $\geq$ 99.5 mass% in total of R32, R1234yf, R1234ze and HFO-1132a, wherein, when the mass% of R32, R1234yf, R1234ze and HFO-1132a, based on their sum in the refrigerant, is respectively represented by x, y, z and a, the coordinates (x,y,z) in a ternary composition diagram in which the sum of R32, R1234yf, and R1234ze is (100-a) mass% are within the range of a figure surrounded by straight lines AB, BC, CD, and DA connecting the four points A, B, D and C:

A (74.0, -a+26.0, 0.0),
B (73.9, 0.0, -a+26.1),
D ($0.0098a^2$-2.1856a+39.064, 0.0, $-0.0098a^2$+1.1856a+60.936),
C ($0.0138a^2$-1.6252a+26.785, $-0.0138a^2$+0.6252a+73.215, 0.0),

or on the straight lines AB and CD (excluding the points A, B, C, and D).

Further, the present invention provides a composition (3) comprising a refrigerant comprising, based on the entire refrigerant, $\geq$ 99.5 mass% in total of R32, R1234yf, R1234ze and HFO-1132a, wherein, when the mass% of R32, R1234yf, R1234ze and HFO-1132a, based on their sum in the refrigerant, is respectively represented by x, y, z and a, the coordinates (x,y,z) in a ternary composition diagram in which the sum of R32, R1234yf, and R1234ze is (100-a) mass% are within the range of a figure surrounded by straight lines AB, BF, FE, and EA connecting the four points A, NB, F and E:

A (74.0, -a+26.0, 0.0),
B (73.9, 0.0, -a+26.1),
F ($0.0102a^2$-2.2922a+59.604, 0.0, $-0.0102a^2$+1.2922a+40.396),
E ($0.0208a^2$-2.0723a+47.748, $-0.0208a^2$+1.0723a+52.252, 0.0),
or on the straight lines AB and FE (excluding the points A, B, F, and E).

Yet further, the present invention provides a composition (4) comprising a refrigerant comprising, based on the entire refrigerant, ≥ 99.5 mass% in total of R32, R1234yf, R1234ze and HFO-1132a, wherein, when the mass% of R32, R1234yf, R1234ze and HFO-1132a, based on their sum in the refrigerant, is respectively represented by x, y, z and a, the coordinates (x,y,z) in a ternary composition diagram in which the sum of R32, R1234yf, and R1234ze is (100-a) mass% are within the following ranges:

if 5.0≥x≥1.5:
a figure surrounded by straight lines AB, BH, HG, and GA connecting the four points A, B, H and G:
A (74.0, -a+26.0, 0.0),
B (73.9, 0.0, -a+26.1),
H ($-0.1143a^2$+2.3143a+62.686, 0.0, $0.1143a^2$-3.3143a+37.314),
G ($-0.0505a^2$+2.6396a+34.049, $0.0505a^2$-3.6396a+65.951, 0.0),
or on the straight lines AB and HG (excluding the points A, B, H, and G);
if 7.5≥x>5.0:
a figure surrounded by straight lines AB, BH, HG, and GA connecting the four points A, B, H and G:

A (74.0, -a+26.0, 0.0),
B (73.9, 0.0, -a+26.1),
H ($-0.072a^2$+1.9a+63.7, 0.0, $0.072a^2$-2.9a+36.3), and
G ($-0.0505a^2$+2.6396a+34.049, $0.0505a^2$-3.6396a+65.951, 0.0),
or on the straight lines AB and HG (excluding the points A, B, H, and G); or

if 10.0≥x>7.5:
a figure surrounded by straight lines AR, RG, and GA connecting the three points A, R and G:

A (74.0, -a+26.0, 0.0),
R (73.9, 1.12a-8.4, -2.12a+34.5), and
G ($-0.0505a^2$+2.6396a+34.049, $0.0505a^2$-3.6396a+65.951, 0.0),
or on the straight lines AR and RG (excluding the points A and G) .

Even further, the present invention provides a composition (5) comprising a refrigerant comprising, based on the entire refrigerant, ≥ 99.5 mass% in total of R32, R1234yf, R1234ze and HFO-1132a, wherein, when the mass% of R32, R1234yf, R1234ze and HFO-1132a, based on their sum in the refrigerant, is respectively represented by x, y, z and a, the coordinates (x,y,z) in a ternary composition diagram in which the sum of R32, R1234yf, and R1234ze is (100-a) mass% are within the range of a figure surrounded by straight lines A'B', B'D, DC, and CA' connecting the four points A', B', D and C:

A' (59.0, -a+41.0,0),
B' (58.9, 0.0, -a+41.1),
D ($0.0098a^2$-2.1856a+39.064, 0.0, $-0.0098a^2$+1.1856a+60.936)
C ($0.0138a^2$-1.6252a+26.785, $-0.0138a^2$+0.6252a+73.215, 0.0),
or on the straight lines A'B' and DC (excluding the points A', B', D, and C).

Still further, the present invention provides a composition (6) comprising a refrigerant comprising, based on the entire refrigerant, ≥ 99.5 mass% in total of R32, R1234yf, R1234ze and HFO-1132a, wherein, when the mass% of R32, R1234yf,

R1234ze and HFO-1132a, based on their sum in the refrigerant, is respectively represented by x, y, z and a, the coordinates (x,y,z) in a ternary composition diagram in which the sum of R32, R1234yf, and R1234ze is (100-a) mass% are within the range of a figure surrounded by straight lines A'B', B'F, FE, and EA' connecting the four points A', B' F and E:

A' (59.0, -a+41.0, 0.0),
B' (58.9, 0.0, -a+41.1),
F ($0.0102a^2$-2.2922a+59.604, 0.0, $-0.0102a^2$+1.2922a+40.396),
E ($0.0208a^2$-2.0723a+47.748, $-0.0208a^2$+1.0723a+52.252, 0.0),
or on the straight lines A'B' and FE (excluding the points A', B', F, and E).

In addition, the present invention provides a composition (7) comprising a refrigerant comprising, based on the entire refrigerant, $\geq$ 99.5 mass% in total of R32, R1234yf, R1234ze and HFO-1132a, wherein, when the mass% of R32, R1234yf, R1234ze and HFO-1132a, based on their sum in the refrigerant, is respectively represented by x, y, z and a, the coordinates (x,y,z) in a ternary composition diagram in which the sum of R32, R1234yf, and R1234ze is (100-a) mass% are within the following ranges:

if $5.0{\geq}x{\geq}1.5$:
a figure surrounded by straight lines A'P, PG, and GA' connecting the three points A', P and G:

A' (59.0, -a+41.0, 0.0),
P ($-0.019a^2$+0.1524a+58.714, $-0.2571a^2$+4.1571a+9.5429, $0.2761a^2$-5.3095a+31.7431),
G ($-0.0505a^2$+2.6396a+34.049, $0.0505a^2$-3.6396a+65.951, 0.0),
or on the straight lines A'P and PG (excluding the points A' and G); or

if $10.0{\geq}x{>}5$:
a figure surrounded by straight lines A'P, PG, and GA' connecting the three points A', P and G:

A' (59.0, -a+41.0, 0.0),
P (59.0, $-0.136a^2$+2.94a+12.6, $0.136a^2$-3.94a+28.4),
G ($-0.0505a^2$+2.6396a+34.049, $0.0505a^2$-3.6396a+65.951, 0.0),
or on the straight lines A'P and PG (excluding the points A' and G).

Also, the present invention further provides a composition (8) comprising a refrigerant comprising, based on the entire refrigerant, $\geq$ 99.5 mass% in total of R32, R1234yf, R1234ze and HFO-1132a, wherein, when the mass% of R32, R1234yf, R1234ze and HFO-1132a, based on their sum in the refrigerant, is respectively represented by x, y, z and a, the coordinates (x,y,z) in a ternary composition diagram in which the sum of R32, R1234yf, and R1234ze is (100-a) mass% are within the following ranges:

if $1.9{\geq}x{\geq}1.5$:
a figure surrounded by straight lines A"T, TM, and MA" connecting the three points A", T and M:

A" (21.8, -a+78.2, 0.0),
T (21.5, -15.0a+28.5, 14.0a+50.0), and
M ($0.0035a^2$-0.9809a+10.358, $-0.0035a^2$-0.0191a+89.642, 0.0),
or on the straight lines A"T and TM (excluding the points A'' and M); or

if $10.0{\geq}x{>}1.9$:
a figure surrounded by straight lines A"B", B''L, LM, and MA" connecting the four points A", B'', L and M:

A" (21.8, -a+78.2, 0.0),
B'' (0.0108a+21.473, 0.0, -1.0108a+78.527),
L ($0.0098a^2$-1.2237a+23.804, 0.0, $-0.0098a^2$+0.2237a+76.196),
M ($0.0035a^2$-0.9809a+10.358, $-0.0035a^2$-0.0191a+89.642, 0.0),
or on the straight lines A"B" and LM (excluding the points A", B'', L, and M).

In addition to the foregoing, the present invention also provides (i) a refrigerating machine comprising any of the above compositions (1)-(8) as a working fluid, (ii) a method for operating a refrigerating machine, comprising circulating in a refrigerating machine any of the above compositions (1)-(8), and (iii) the use of the above compositions (1)-(7) as an alternative refrigerant for R410A and (iv) the use of the above composition (8) as an alternative refrigerant for R404A.

Advantageous Effects of Invention

The present refrigerant has a low GWP.

Brief Description of Drawings

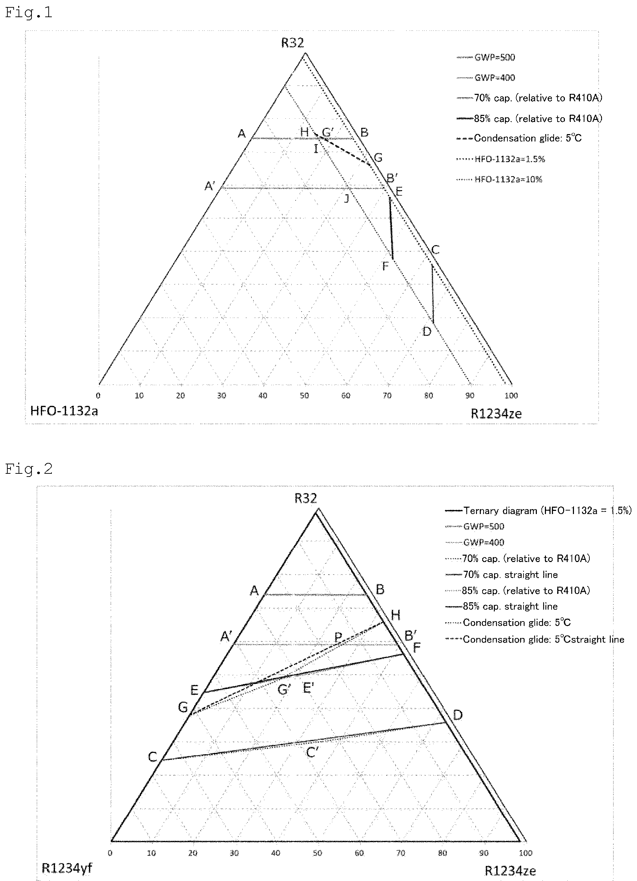

Fig. 1 is a diagram showing points A to J, A', B', and G', and line segments that connect these points to each other in a ternary composition diagram in which the sum of R32, HFO-1132a, and R1234ze is 100 mass%.
Fig. 2 is a diagram showing points A to H, P, A', B', C', G', and E', and line segments that connect these points to each other in a ternary composition diagram in which the sum of R32, R1234yf, and R1234ze is 98.5 mass% (HFO-1132a content is 1.5 mass%).

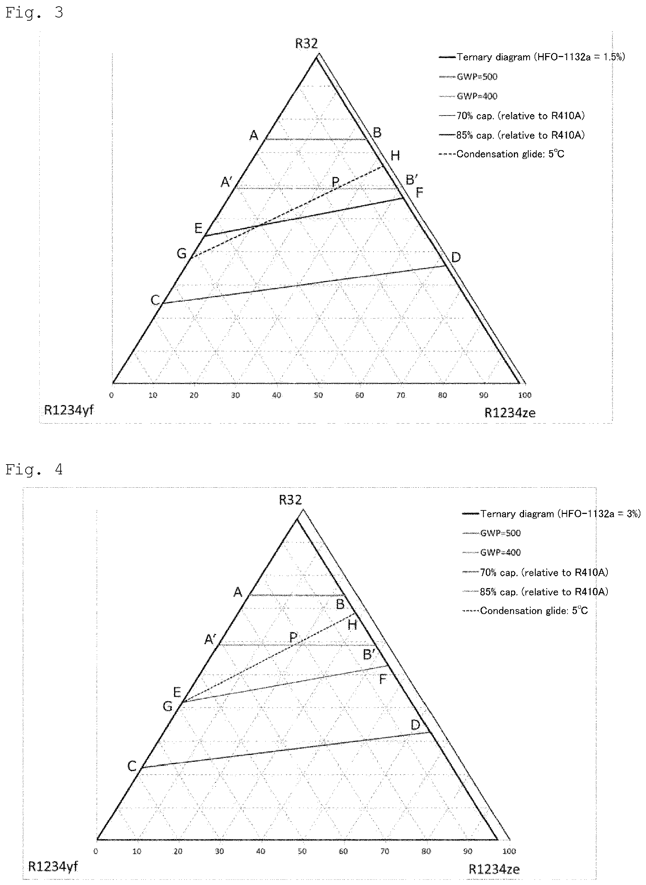

Fig. 3 is a diagram showing points A to H, P, A', and B', and line segments that connect these points to each other in a ternary composition diagram in which the sum of R32, R1234yf, and R1234ze is 98.5 mass% (HFO-1132a content is 1.5 mass%).
Fig. 4 is a diagram showing points A to H, P, A', and B', and line segments that connect these points to each other in a ternary composition diagram in which the sum of R32, R1234yf, and R1234ze is 97.0 mass% (HFO-1132a content is 3.0 mass%).

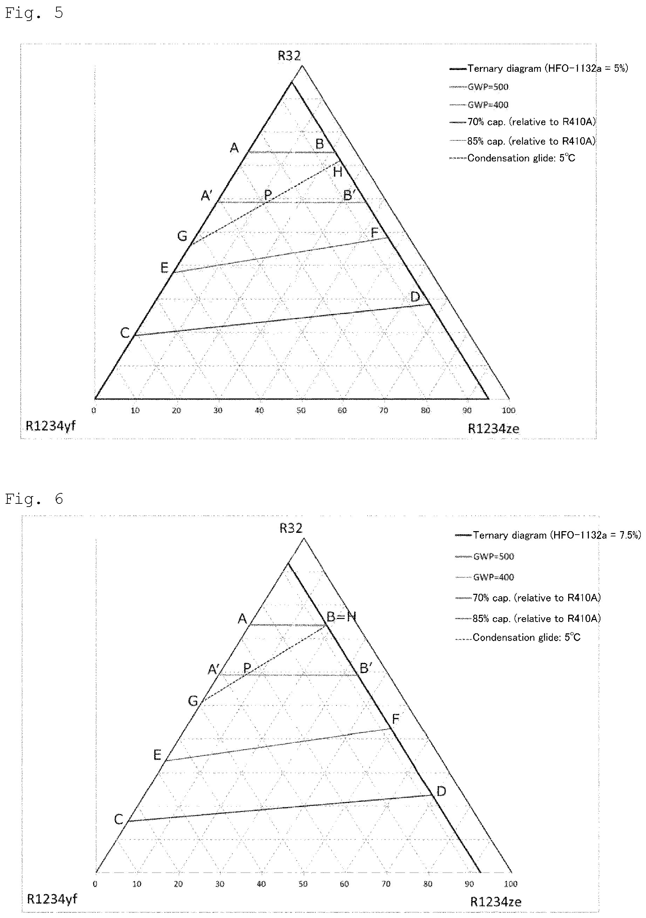

Fig. 5 is a diagram showing points A to H, P, A', and B', and line segments that connect these points to each other in a ternary composition diagram in which the sum of R32, R1234yf, and R1234ze is 95.0 mass% (HFO-1132a content is 5.0 mass%).
Fig. 6 is a diagram showing points A to H, P, A', and B', and line segments that connect these points to each other in a ternary composition diagram in which the sum of R32, R1234yf, and R1234ze is 92.5 mass% (HFO-1132a content is 7.5 mass%).

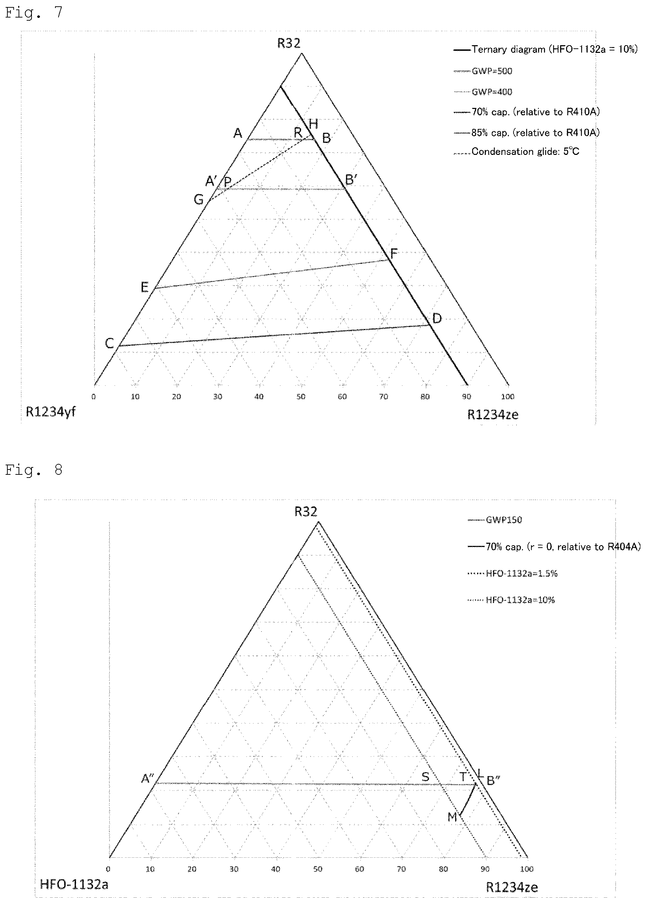

Fig. 7 is a diagram showing points A to H, P, A', and B', and line segments that connect these points to each other in a ternary composition diagram in which the sum of R32, R1234yf, and R1234ze is 90.0 mass% (HFO-1132a content: 10.0 mass%).
Fig. 8 is a diagram showing points A", B", L, M, S, and T, and line segments that connect these points to each other in a ternary composition diagram in which the sum of R32, HFO-1132a, and R1234ze is 100 mass%.

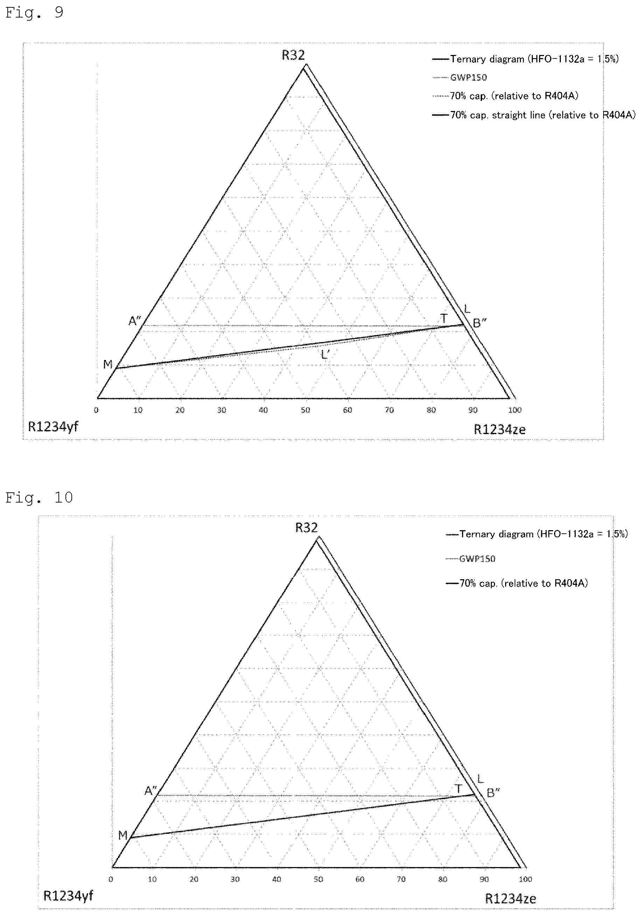

Fig. 9 is a diagram showing points A", B", L, L', M, and T, and line segments that connect these points to each other in a ternary composition diagram in which the sum of R32, R1234yf, and R1234ze is 98.5 mass% (HFO-1132a content is 1.5 mass%).
Fig. 10 is a diagram showing points A", B", L, L', M, and T, and line segments that connect these points to each other in a ternary composition diagram in which the sum of R32, R1234yf, and R1234ze is 98.5 mass% (HFO-1132a content is 1.5 mass%).

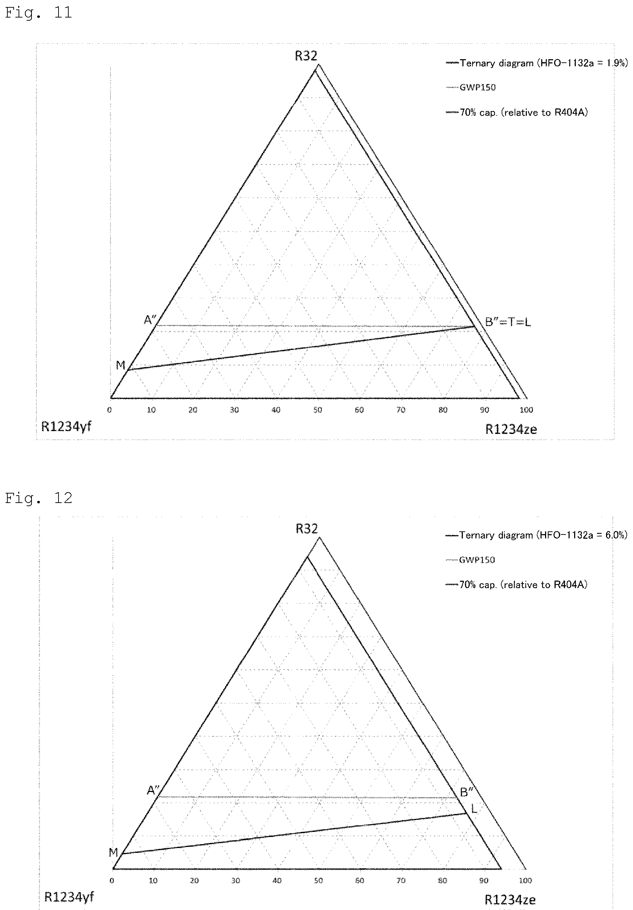

Fig. 11 is a diagram showing points A", B", L, M, and T, and line segments that connect these points to each other in a ternary composition diagram in which the sum of R32, R1234yf, and R1234ze is 98.1 mass% (HFO-1132a content is 1.9 mass%).
Fig. 12 is a diagram showing points A", B", L, and M, and line segments that connect these points to each other in a ternary composition diagram in which the sum of R32, R1234yf, and R1234ze is 94.0 mass% (HFO-1132a content is 6.0 mass%).

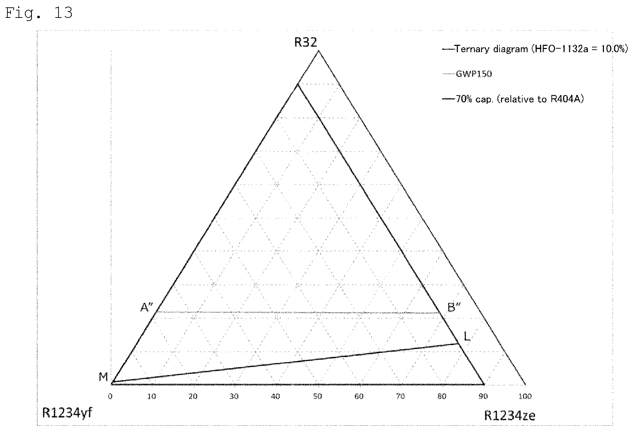

Fig. 13 is a diagram showing points A", B", L, and M, and line segments that connect these points to each other in a ternary composition diagram in which the sum of R32, R1234yf, and R1234ze is 90.0 mass% (HFO-1132a content is 10.0 mass%).

Description of Embodiments

The present inventors conducted intensive study to solve the above problem, and consequently found that a mixed refrigerant comprising HFO-1132a, R32, and R1234ze has the above properties.
The present disclosure has been completed as a result of further research based on this finding. The present disclosure includes the following embodiments.

Definition of Terms

In the present specification, the term "refrigerant" includes at least compounds that are specified in ISO 817 (International Organization for Standardization), and that are given a refrigerant number (ASHRAE number) representing the type of refrigerant with "R" at the beginning; and further includes refrigerants that have properties equivalent to those of such refrigerants, even though a refrigerant number is not yet given. Refrigerants are broadly divided into fluorocarbon compounds and non-fluorocarbon compounds in terms of the structure of the compounds. Fluorocarbon compounds include chlorofluorocarbons (CFC), hydrochlorofluorocarbons (HCFC), and hydrofluorocarbons (HFC).

In the present specification, the phrase "composition comprising a refrigerant" at least includes (1) a refrigerant itself (including a mixture of refrigerants), (2) a composition that further comprises other components and that can be mixed with at least a refrigeration oil to obtain a working fluid for a refrigerating machine, and (3) a working fluid for a refrigerating machine containing a refrigeration oil. In the present specification, of these three embodiments, the composition (2) is referred to as a "refrigerant composition" so as to distinguish it from a refrigerant itself (including a mixture of refrigerants). Further, the working fluid for a refrigerating machine (3) is referred to as a "refrigeration oil-containing working fluid" so as to distinguish it from the "refrigerant composition."

In the present specification, when the term "alternative" is used in a context in which the first refrigerant is replaced with the second refrigerant, the first type of "alternative" means that equipment designed for operation using the first refrigerant can be operated using the second refrigerant under optimum conditions, optionally with changes of only a few parts (at least one of the following: refrigeration oil, gasket, packing, expansion valve, dryer, and other parts) and equipment adjustment. In other words, this type of alternative means that the same equipment is operated with an alternative refrigerant. Embodiments of this type of "alternative" include "drop-in alternative," "nearly drop-in alternative," and "retrofit," in the order in which the extent of changes and adjustment necessary for replacing the first refrigerant with the second refrigerant is smaller.

The term "alternative" also includes a second type of "alternative," which means that equipment designed for operation using the second refrigerant is operated for the same use as the existing use with the first refrigerant by using the second refrigerant. This type of alternative means that the same use is achieved with an alternative refrigerant.

In the present specification, the term "refrigerating machine" refers to machines in general that draw heat from an object or space to make its temperature lower than the temperature of ambient air, and maintain a low temperature. In other words, refrigerating machines refer to conversion machines that gain energy from the outside to do work, and that perform energy conversion, in order to transfer heat from where the temperature is lower to where the temperature is higher.

In the present specification, the term "condensation temperature glide" refers to the temperature gradient in which the condensation start temperature and the condensation end temperature in a heat exchanger differ due to the difference in composition between the liquid phase and the gas phase in a non-azeotropic mixed refrigerant as described herein.

1. Refrigerant

1.1 Essential Refrigerant Components

The refrigerant according to the present disclosure ("the present refrigerant" hereinafter) comprises HFO-1132a, R32, and R1234ze.

The present refrigerant is a low-GWP mixed refrigerant.

The present refrigerant preferably comprises HFO-1132a in an amount of 1.5-10 mass% based on the entire refrigerant. The content of R32 is preferably 74 mass% or less, and more preferably 59 mass% or less, based on the entire refrigerant. When the refrigerant is an alternative refrigerant for R404A, the content of R32 is more preferably 21.8 mass% or less.

When the present refrigerant comprises HFO-1132a, R32, R1234ze, and R1234yf, and when the refrigerant is an alternative refrigerant for R410A, the content of R32 is preferably 11.9 mass% or more, more preferably 29.1 mass% or more, and even more preferably 37.9 mass% or more, based on the entire refrigerant. The total content of R1234ze and R1234yf is preferably 14.5 mass% or more, more preferably 16.0 mass% or more, and even more preferably 31.0 mass% or more, based on the entire refrigerant. The content of R1234ze is preferably 71.8 mass% or less, more preferably 52.3 mass% or less, and even more preferably 32.6 mass% or less, based on the entire refrigerant. The content of R1234yf is preferably 78.1 mass% or less, more preferably 60.9 mass% or less, and even more preferably 60.6 mass% or less, based on the entire refrigerant.

When the present refrigerant comprises HFO-1132a, R32, R1234ze, and R1234yf, and when the refrigerant is an alternative refrigerant for R404A, the content of R32 is preferably 0.9 mass% or more based on the entire refrigerant. The total content of R1234ze and R1234yf is preferably 68.2 mass% or more based on the entire refrigerant. The content of R1234ze is preferably 77.5 mass% or less based on the entire refrigerant. The content of R1234yf is preferably 89.6 mass% or less based on the entire refrigerant.

The present refrigerant preferably satisfies the following requirements. In this case, the present refrigerant has a GWP of 500 or less and a refrigerating capacity ratio of 85% or more relative to that of R410A.

Requirements

When the mass% of HFO-1132a, R32, and R1234ze based on their sum in the refrigerant is respectively represented by x, y, and z, coordinates (x,y,z) in a ternary composition diagram in which the sum of HFO-1132a, R32, and R1234ze is 100 mass% are within the range of a figure surrounded by straight lines IB, BE, EF, and FI that connect the following four points:

> point I (10.0, 74.0, 16.0),
> point B (1.5, 73.9, 24.6),
> point E (1.5, 56.2, 42.3), and
> point F (10.0, 37.7, 52.3),
> or on the straight lines.

The present refrigerant preferably satisfies the following requirements. In this case, the present refrigerant has a GWP of 500 or less and a condensation temperature glide of 5°C or less.

Requirements

When the mass% of HFO-1132a, R32, and R1234ze based on their sum in the refrigerant is respectively represented by x, y, and z, coordinates (x,y,z) in a ternary composition diagram in which the sum of HFO-1132a, R32, and R1234ze is 100 mass% are within the range of a figure surrounded by straight lines G'B, BG, and GG' that connect the following three points:

> point G' (8.6, 73.9, 17.5),
> point B (1.5, 73.9, 24.6), and
> point G (1.5, 65.9, 32.6),
> or on the straight lines.

The present refrigerant preferably satisfies the following requirements. In this case, the present refrigerant has a GWP of 400 or less and a refrigerating capacity ratio of 85% or more relative to that of R410A.

Requirements

When the mass% of HFO-1132a, R32, and R1234ze based on their sum in the refrigerant is respectively represented by x, y, and z, coordinates (x,y,z) in a ternary composition diagram in which the sum of HFO-1132a, R32, and R1234ze is 100 mass% are within the range of a figure surrounded by straight lines JB', B'E, EF, and FJ that connect the following four points:

> point J (10.0, 59.0, 31.0),
> point B' (1.5, 58.9, 39.6),
> point E (1.5, 56.2, 42.3), and
> point F (10.0, 37.7, 52.3),
> or on the straight lines.

The present refrigerant may further comprise 2,3,3,3-tetrafluoro-1-propene (R1234yf).
When the present refrigerant further comprises R1234yf, the refrigerant preferably satisfies the following requirements. In this case, the present refrigerant has a GWP of 500 or less and a refrigerating capacity ratio of 70% or more relative to that of R410A.

Requirements

When the mass% of R32 is represented by x, the mass% of R1234yf is represented by y, the mass% of R1234ze is represented by z, and the mass% of HFO-1132a is represented by a, based on the sum of R32, R1234yf, R1234ze, and HFO-1132a in the refrigerant, coordinates (x,y,z) in a ternary composition diagram in which the sum of R32, R1234yf, and R1234ze is (100-a) mass% are within the range of a figure surrounded by straight lines AB, BC, CD, and DA that connect the following four points:

> point A (74.0, -a+26.0, 0.0),

point B (73.9, 0.0, -a+26.1),
point D (0.0098a$^2$-2.1856a+39.064, 0.0, -0.0098a$^2$+1.1856a+60.936), and
point C (0.0138a$^2$-1.6252a+26.785, -0.0138a$^2$+0.6252a+73.215, 0.0), or on the straight lines AB and CD (excluding the points A, B, C, and D).

When the present refrigerant further comprises R1234yf, the refrigerant preferably satisfies the following requirements. In this case, the present refrigerant has a GWP of 500 or less and a refrigerating capacity ratio of 85% or more relative to that of R410A.

Requirements

When the mass% of R32 is represented by x, the mass% of R1234yf is represented by y, the mass% of R1234ze is represented by z, and the mass% of HFO-1132a is represented by a, based on the sum of R32, R1234yf, R1234ze, and HFO-1132a in the refrigerant, coordinates (x,y,z) in a ternary composition diagram in which the sum of R32, R1234yf, and R1234ze is (100-a) mass% are within the range of a figure surrounded by straight lines AB, BF, FE, and EA that connect the following four points:

point A (74.0, -a+26.0, 0.0),
point B (73.9, 0.0, -a+26.1),
point F (0.0102a$^2$-2.2922a+59.604, 0.0, -0.0102a$^2$+1.2922a+40.396), and
point E (0.0208a$^2$-2.0723a+47.748, -0.0208a$^2$+1.0723a+52.252, 0.0), or on the straight lines AB and FE (excluding the points A, B, F, and E).

When the present refrigerant further comprises R1234yf, the refrigerant preferably satisfies the following requirements. In this case, the present refrigerant has a GWP of 500 or less and a condensation temperature glide of 5°C or less.

Requirements

When the mass% of R32 is represented by x, the mass% of R1234yf is represented by y, the mass% of R1234ze is represented by z, and the mass% of HFO-1132a is represented by a, based on the sum of R32, R1234yf, R1234ze, and HFO-1132a in the refrigerant,

if 5.0≥x≥1.5, coordinates (x,y,z) in a ternary composition diagram in which the sum of R32, R1234yf, and R1234ze is (100-a) mass% are within the range of a figure surrounded by straight lines AB, BH, HG, and GA that connect the following four points:

point A (74.0, -a+26.0, 0.0),
point B (73.9, 0.0, -a+26.1),
point H (-0.1143a$^2$+2.3143a+62.686, 0.0, 0.1143a$^2$-3.3143a+37.314), and
point G (-0.0505a$^2$+2.6396a+34.049, 0.0505a$^2$-3.6396a+65.951, 0.0), or on the straight lines AB and HG (excluding the points A, B, H, and G);

if 7.5≥x>5.0, coordinates (x,y,z) in the ternary composition diagram are within the range of a figure surrounded by straight lines AB, BH, HG, and GA that connect the following four points:

point A (74.0, -a+26.0, 0.0),
point B (73.9, 0.0, -a+26.1),
point H (-0.072a$^2$+1.9a+63.7, 0.0, 0.072a$^2$-2.9a+36.3), and
point G (-0.0505a$^2$+2.6396a+34.049, 0.0505a$^2$-3.6396a+65.951, 0.0), or on the straight lines AB and HG (excluding the points A, B, H, and G); or

if 10.0≥x>7.5, coordinates (x,y,z) in the ternary composition diagram are within the range of a figure surrounded by straight lines AR, RG, and GA that connect the following three points:

point A (74.0, -a+26.0, 0.0),
point R (73.9, 1.12a-8.4, -2.12a+34.5), and
point G (-0.0505a$^2$+2.6396a+34.049, 0.0505a$^2$-3.6396a+65.951, 0.0), or on the straight lines AR and RG (excluding the points A and G) .

When the present refrigerant further comprises R1234yf, the refrigerant preferably satisfies the following requirements. In this case, the present refrigerant has a GWP of 400 or less and a refrigerating capacity ratio of 70% or more relative to that of R410A.

Requirements

When the mass% of R32 is represented by x, the mass% of R1234yf is represented by y, the mass% of R1234ze is represented by z, and the mass% of HFO-1132a is represented by a, based on the sum of R32, R1234yf, R1234ze, and HFO-1132a in the refrigerant, coordinates (x,y,z) in a ternary composition diagram in which the sum of R32, R1234yf, and R1234ze is (100-a) mass% are within the range of a figure surrounded by straight lines A'B', B'D, DC, and CA' that connect the following four points:

point A' (59.0, -a+41.0,0),
point B' (58.9, 0.0, -a+41.1),
point D ($0.0098a^2$-2.1856a+39.064, 0.0, $-0.0098a^2$+1.1856a+60.936), and
point C ($0.0138a^2$-1.6252a+26.785, $-0.0138a^2$+0.6252a+73.215, 0.0), or on the straight lines A'B' and DC (excluding the points A', B', D, and C).

When the present refrigerant further comprises R1234yf, the refrigerant preferably satisfies the following requirements. In this case, the present refrigerant has a GWP of 400 or less and a refrigerating capacity ratio of 85% or more relative to that of R410A.

Requirements

When the mass% of R32 is represented by x, the mass% of R1234yf is represented by y, the mass% of R1234ze is represented by z, and the mass% of HFO-1132a is represented by a, based on the sum of R32, R1234yf, R1234ze, and HFO-1132a in the refrigerant, coordinates (x,y,z) in a ternary composition diagram in which the sum of R32, R1234yf, and R1234ze is (100-a) mass% are within the range of a figure surrounded by straight lines A'B', B'F, FE, and EA' that connect the following four points:

point A' (59.0, -a+41.0, 0.0),
point B' (58.9, 0.0, -a+41.1),
point F ($0.0102a^2$-2.2922a+59.604, 0.0, $-0.0102a^2$+1.2922a+40.396), and
point E ($0.0208a^2$-2.0723a+47.748, $-0.0208a^2$+1.0723a+52.252, 0.0), or on the straight lines A'B' and FE (excluding the points A', B', F, and E).

When the present refrigerant further comprises R1234yf, the refrigerant preferably satisfies the following requirements. In this case, the present refrigerant has a GWP of 400 or less and a condensation temperature glide of 5°C or less.

Requirements

When the mass% of R32 is represented by x, the mass% of R1234yf is represented by y, the mass% of R1234ze is represented by z, and the mass% of HFO-1132a is represented by a, based on the sum of R32, R1234yf, R1234ze, and HFO-1132a in the refrigerant,

if 5.0≥x≥1.5, coordinates (x,y,z) in a ternary composition diagram in which the sum of R32, R1234yf, and R1234ze is (100-a) mass% are within the range of a figure surrounded by straight lines A'P, PG, and GA' that connect the following three points:

point A' (59.0, -a+41.0, 0.0),
point P ($-0.019a^2$+0.1524a+58.714, $-0.2571a^2$+4.1571a+9.5429, $0.2761a^2$-5.3095a+31.7431), and
point G ($-0.0505a^2$+2.6396a+34.049, $0.0505a^2$-3.6396a+65.951, 0.0), or on the straight lines A'P and PG (excluding the points A' and G); or

if 10.0≥x>5, coordinates (x,y,z) in the ternary composition diagram are within the range of a figure surrounded by straight lines A'P, PG, and GA' that connect the following three points:

point A' (59.0, -a+41.0, 0.0),
point P (59.0, $-0.136a^2+2.94a+12.6$, $0.136a^2-3.94a+28.4$), and
point G ($-0.0505a^2+2.6396a+34.049$, $0.0505a^2-3.6396a+65.951$, 0.0), or on the straight lines A'P and PG (excluding the points A' and G) .

The refrigerants described above can be preferably used as working fluids in a refrigerating machine and are particularly suitable as alternative refrigerants for R410A.

The refrigerants described below can be preferably used as working fluids in a refrigerating machine and are particularly suitable as alternative refrigerants for R404A.

The present refrigerant also preferably satisfies the following requirements. In this case, the present refrigerant has a GWP of 150 or less and a refrigerating capacity ratio of 70% or more relative to that of R404A

Requirements

When the mass% of R32 is represented by x, the mass% of R1234yf is represented by y, the mass% of R1234ze is represented by z, and the mass% of HFO-1132a is represented by a, based on the sum of R32, R1234yf, R1234ze, and HFO-1132a in the refrigerant,

if $1.9 \geq x \geq 1.5$, coordinates (x,y,z) in a ternary composition diagram in which the sum of R32, R1234yf, and R1234ze is (100-a) mass% are within the range of a figure surrounded by straight lines A"T, TM, and MA'' that connect the following three points:

point A'' (21.8, -a+78.2, 0.0),
point T (21.5, -15.0a+28.5, 14.0a+50.0), and
point M ($0.0035a^2-0.9809a+10.358$, $-0.0035a^2-0.0191a+89.642$, 0.0), or on the straight lines A"T and TM (excluding the points A'' and M); or

if $10.0 \geq x > 1.9$, coordinates (x,y,z) in the ternary composition diagram are within the range of a figure surrounded by straight lines A"B", B''L, LM, and MA'' that connect the following four points:

point A'' (21.8, -a+78.2, 0.0),
point B'' (0.0108a+21.473, 0.0, -1.0108a+78.527),
point L ($0.0098a^2-1.2237a+23.804$, 0.0, $-0.0098a^2+0.2237a+76.196$), and
point M ($0.0035a^2-0.9809a+10.358$, $-0.0035a^2-0.0191a+89.642$, 0.0), or on the straight lines A"B" and LM (excluding the points A", B'', L, and M).

1.2 Additional Refrigerant Components

Additional refrigerants that may be contained in the present refrigerant are described below. The present refrigerant may further comprise other additional refrigerants in addition to HFO-1132a, R32, and R1234ze as long as the above properties and effects are not impaired. In this respect, in an embodiment, the present refrigerant comprises HFO-1132a, R32, and R1234ze in a total amount of 99.5 mass% or more, preferably 99.75 mass% or more, more preferably 99.9 mass% or more, even more preferably 99.99 mass% or more, and most preferably 99.9999 mass% or more, based on the entire refrigerant. The present refrigerant may consist essentially of HFO-1132a, R32, and R1234ze or may consist of HFO-1132a, R32, and R1234ze. When the present refrigerant consists essentially of HFO-1132a, R32, and R1234ze, it may consist of HFO-1132a, R32, R1234ze, and inevitable impurities. In another embodiments, the present refrigerant may further comprise other additional refrigerants in addition to HFO-1132a, R32, R1234ze, and R1234yf as long as the above properties and effects are not impaired. The present refrigerant comprises HFO-1132a, R32, R1234ze, and R1234yf in a total amount of 99.5 mass% or more, preferably 99.75 mass% or more, more preferably 99.9 mass% or more, even more preferably 99.99 mass% or more, and most preferably 99.9999 mass% or more, based on the entire refrigerant. The present refrigerant may consist essentially of HFO-1132a, R32, R1234ze, and R1234yf or may consist of HFO-1132a, R32, R1234ze, and R1234yf. When the present refrigerant consists essentially of HFO-1132a, R32, R1234ze, and R1234yf, it may consist of HFO-1132a, R32, R1234ze, R1234yf, and inevitable impurities.

Such additional refrigerants are not limited, and can be selected from a wide range of refrigerants. The mixed refrigerant may contain a single additional refrigerant, or two or more additional refrigerants.

2. Refrigerant Composition

The refrigerant composition according to the present disclosure ("the present refrigerant composition" hereinafter) comprises at least the present refrigerant, and can be used for the same use as the present refrigerant. Moreover, the present refrigerant composition can be further mixed with at least a refrigeration oil to thereby obtain a working fluid for a refrigerating machine.

The present refrigerant composition further comprises at least one other component in addition to the present refrigerant. The present refrigerant composition may comprise at least one of the following other components, if necessary. As described above, when the present refrigerant composition is used as a working fluid in a refrigerating machine, it is generally used as a mixture with at least a refrigeration oil. Therefore, it is preferable that the present refrigerant composition does not substantially comprise a refrigeration oil. Specifically, in the present refrigerant composition, the content of the refrigeration oil based on the entire refrigerant composition is preferably 0-1 mass%, and more preferably 0-0.1 mass%.

2.1 Water

The present refrigerant composition may contain a small amount of water. The water content of the refrigerant composition is preferably 0.1 mass% or less based on the entire refrigerant. A small amount of water contained in the refrigerant composition stabilizes double bonds in the molecules of unsaturated fluorocarbon compounds that can be present in the refrigerant, and makes it less likely that the unsaturated fluorocarbon compounds will be oxidized, thus increasing the stability of the refrigerant composition.

2.2. Tracer

A tracer is added to the present refrigerant composition at a detectable concentration such that when the refrigerant composition has been diluted, contaminated, or undergone other changes, the tracer can trace the changes.

The present refrigerant composition may comprise a single tracer, or two or more tracers.

The tracer is not limited, and can be suitably selected from commonly used tracers.

Examples of tracers include hydrofluorocarbons, hydrochlorofluorocarbons, chlorofluorocarbons, hydrochlorocarbons, fluorocarbons, deuterated hydrocarbons, deuterated hydrofluorocarbons, perfluorocarbons, fluoroethers, brominated compounds, iodinated compounds, alcohols, aldehydes, ketones, and nitrous oxide ($N_2O$). The tracer is particularly preferably a hydrofluorocarbon, a hydrochlorofluorocarbon, a chlorofluorocarbon, a hydrochlorocarbon, a fluorocarbon, or a fluoroether.

The following compounds are preferable as the tracer.

FC-14 (tetrafluoromethane, $CF_4$)
HCC-40 (chloromethane, $CH_3Cl$)
HFC-23 (trifluoromethane, $CHF_3$)
HFC-41 (fluoromethane, $CH_3Cl$)
HFC-125 (pentafluoroethane, $CF_3CHF_2$)
HFC-134a (1,1,1,2-tetrafluoroethane, $CF_3CH_2F$)
HFC-134 (1,1,2,2-tetrafluoroethane, $CHF_2CHF_2$)
HFC-143a (1,1,1-trifluoroethane, $CF_3CH_3$)
HFC-143 (1,1,2-trifluoroethane, $CHF_2CH_2F$)
HFC-152a (1,1-difluoroethane, $CHF_2CH_3$)
HFC-152 (1,2-difluoroethane, $CH_2FCH_2F$)
HFC-161 (fluoroethane, $CH_3CH_2F$)
HFC-245fa (1, 1, 1, 3, 3-pentafluoropropane, $CF_3CH_2CHF_2$)
HFC-236fa (1,1,1,3,3,3-hexafluoropropane, $CF_3CH_2CF_3$)
HFC-236ea (1,1,1,2,3,3-hexafluoropropane, $CF_3CHFCHF_2$)
HFC-227ea (1,1,1,2,3,3,3-heptafluoropropane, $CF_3CHFCF_3$)
HCFC-22 (chlorodifluoromethane, $CHClF_2$)
HCFC-31 (chlorofluoromethane, $CH_2ClF$)
CFC-1113 (chlorotrifluoroethylene, $CF_2=CClF$)
HFE-125 (trifluoromethyl-difluoromethyl ether, $CF_3OCHF_2$)
HFE-134a (trifluoromethyl-fluoromethyl ether, $CF_3OCH_2F$)
HFE-143a (trifluoromethyl-methyl ether, $CF_3OCH_3$)
HFE-227ea (trifluoromethyl-tetrafluoroethyl ether, $CF_3OCHFCF_3$)

HFE-236fa (trifluoromethyl-trifluoroethyl ether, $CF_3OCH2CF_3$)

The refrigerant composition of the present disclosure may contain the tracer in a total amount of 10-1000 parts per million by weight (ppm) based on the entire refrigerant composition. The refrigerant composition of the present disclosure may contain the tracer in a total amount of preferably 30-500 ppm, and more preferably 50-300 ppm, based on the entire refrigerant composition.

2.3. Ultraviolet Fluorescent Dye

The present refrigerant composition may comprise a single ultraviolet fluorescent dye, or two or more ultraviolet fluorescent dyes.
The ultraviolet fluorescent dye is not limited, and can be suitably selected from commonly used ultraviolet fluorescent dyes.
Examples of ultraviolet fluorescent dyes include naphthalimide, coumarin, anthracene, phenanthrene, xanthene, thioxanthene, naphthoxanthene, fluorescein, and derivatives thereof. The ultraviolet fluorescent dye is particularly preferably either naphthalimide or coumarin, or both.

2.4. Stabilizer

The present refrigerant composition may comprise a single stabilizer, or two or more stabilizers.
The stabilizer is not limited, and can be suitably selected from commonly used stabilizers.
Examples of stabilizers include nitro compounds, ethers, and amines.
Examples of nitro compounds include aliphatic nitro compounds, such as nitromethane and nitroethane; and aromatic nitro compounds, such as nitro benzene and nitro styrene.
Examples of ethers include 1,4-dioxane.
Examples of amines include 2,2,3,3-pentafluoropropylamine and diphenylamine.
Examples of stabilizers also include butylhydroxyxylene and benzotriazole.
The content of the stabilizer is not limited. Generally, the content of the stabilizer is preferably 0.01-5 mass%, and more preferably 0.05-2 mass%, based on the entire refrigerant.

2.5. Polymerization Inhibitor

The present refrigerant composition may comprise a single polymerization inhibitor, or two or more polymerization inhibitors.
The polymerization inhibitor is not limited, and can be suitably selected from commonly used polymerization inhibitors.
Examples of polymerization inhibitors include 4-methoxy-1-naphthol, hydroquinone, hydroquinone methyl ether, dimethyl-t-butylphenol, 2,6-di-tert-butyl-p-cresol, and benzotriazole.
The content of the polymerization inhibitor is not limited. Generally, the content of the polymerization inhibitor is preferably 0.01-5 mass%, and more preferably 0.05-2 mass%, based on the entire refrigerant.

3. Refrigeration Oil-Containing Working Fluid

The refrigeration oil-containing working fluid according to the present disclosure comprises at least the refrigerant or present refrigerant composition and a refrigeration oil, for use as a working fluid in a refrigerating machine. Specifically, the refrigeration oil-containing working fluid according to the present disclosure is obtained by mixing a refrigeration oil used in a compressor of a refrigerating machine with the refrigerant or the refrigerant composition. The refrigeration oil-containing working fluid generally comprises 10-50 mass% of refrigeration oil.

3.1. Refrigeration Oil

The composition according to the present disclosure may comprise a single refrigeration oil, or two or more refrigeration oils.
The refrigeration oil is not limited, and can be suitably selected from commonly used refrigeration oils. In this case, refrigeration oils that are superior in the action of increasing the miscibility with the mixture and the stability of the mixture, for example, can be suitably selected as necessary.
The base oil of the refrigeration oil is preferably, for example, at least one member selected from polyalkylene glycols (PAG), polyol esters (POE), and polyvinyl ethers (PVE).

The refrigeration oil may further contain additives in addition to the base oil. The additive may be at least one member selected from antioxidants, extreme-pressure agents, acid scavengers, oxygen scavengers, copper deactivators, rust inhibitors, oil agents, and antifoaming agents.

A refrigeration oil with a kinematic viscosity of 5-400 cSt at 40°C is preferable from the standpoint of lubrication.

The refrigeration oil-containing working fluid according to the present disclosure may further optionally contain at least one additive. Examples of additives include compatibilizing agents described below.

### 3.2. Compatibilizing Agent

The refrigeration oil-containing working fluid according to the present disclosure may comprise a single compatibilizing agent, or two or more compatibilizing agents.

The compatibilizing agent is not limited, and can be suitably selected from commonly used compatibilizing agents.

Examples of compatibilizing agents include polyoxyalkylene glycol ethers, amides, nitriles, ketones, chlorocarbons, esters, lactones, aryl ethers, fluoroethers, and 1,1,1-trifluoroalkanes. The compatibilizing agent is particularly preferably a polyoxyalkylene glycol ether.

### 4. Method for Operating Refrigerating Machine

The method for operating a refrigerating machine according to the present disclosure is a method for operating a refrigerating machine using the present refrigerant.

Specifically, the method for operating a refrigerating machine according to the present disclosure comprises the step of circulating the present refrigerant in a refrigerating machine.

The embodiments are described above; however, it will be understood that various changes in forms and details can be made without departing from the spirit and scope of the claims.

Examples

The present disclosure is described in more detail below with reference to Examples. However, the present disclosure is not limited to the Examples.

Mixed refrigerants were prepared by mixing HFO-1132a, R32, and R1234ze at the mass% shown in Table 1 based on their sum.

The GWPs of R410A (R32 = 50%/R125 = 50%) and the above mixed refrigerants were evaluated based on the values stated in the Intergovernmental Panel on Climate Change (IPCC), fourth report. The GWP of HFO-1132a was assumed to be 1. The refrigerating capacities of R410A and the above mixed refrigerants were determined by performing theoretical refrigeration cycle calculations for the mixed refrigerants by using the National Institute of Science and Technology (NIST) Reference Fluid Thermodynamic and Transport Properties Database (Refprop 9.0) under the following conditions.

For each of these mixed refrigerants, the COP ratio and refrigerating capacity ratio relative to those of R410A were determined. The calculation conditions were as follows:

Evaporating temperature: 5°C
Condensation temperature: 45°C
Superheating temperature: 5 K
Subcooling temperature: 5 K
Compressor efficiency: 70%

Table 1 shows these values together with the GWP of each mixed refrigerant. The COP and refrigerating capacity are ratios relative to R410A.

The coefficient of performance (COP) was determined according to the following formula.

COP = (refrigerating capacity or heating capacity)/power consumption

Table 1

| Item | Unit | Comp. Ex. 1 | Comp. Ex. 2 | Comp. Ex. 3 | Ex. 1 | Ex. 2 | Ex. 3 | Ex. 4 | Ex. 5 | Comp. Ex. 4 | Comp. Ex. 5 |
|---|---|---|---|---|---|---|---|---|---|---|---|
| HFO-1132a | mass% | | 0.0 | 0.75 | 1.5 | 3.0 | 5.0 | 7.5 | 10.0 | 12.5 | 15.0 |
| R32 | mass% | R410A | 50.0 | 50.0 | 50.0 | 50.0 | 50.0 | 50.0 | 50.0 | 50.0 | 50.0 |
| R1234ze | mass% | | 50.0 | 49.25 | 48.5 | 47.0 | 45.0 | 42.5 | 40.0 | 37.5 | 35.0 |
| GWP | - | 2088 | 341 | 340 | 340 | 340 | 340 | 340 | 340 | 340 | 340 |
| COP ratio | % (relative to R410A) | 100.0 | 104.7 | 104.4 | 104.0 | 103.4 | 102.5 | 101.6 | 100.7 | 99.8 | 98.9 |
| Refrigerating capacity ratio | % (relative to R410A) | 100.0 | 78.2 | 79.4 | 806 | 83.0 | 86.1 | 90.0 | 93.8 | 97.5 | 101.1 |
| Condensation temperature glide | °C | 0 | 7.2 | 7.7 | 8.1 | 8.9 | 9.7 | 10.3 | 10.8 | 11.0 | 11.0 |

| Item | Unit | Comp. Ex. 6 | Ex. 6 | Comp. Ex. 7 | Ex. 7 | Ex. 8 | Ex. 9 | Ex. 10 | Ex. 11 |
|---|---|---|---|---|---|---|---|---|---|
| | | A | B | A' | B' | C | D | E | F |
| HFO-1132a | mass% | 26.0 | 1.5 | 41.0 | 1.5 | 1.5 | 10.0 | 1.5 | 10.0 |
| R32 | mass% | 74.0 | 73.9 | 59.0 | 58.9 | 35.8 | 18.2 | 56.2 | 37.7 |
| R1234ze | mass% | 0.0 | 24.6 | 0.0 | 39.6 | 62.7 | 71.8 | 42.3 | 52.3 |
| GWP | - | 500 | 500 | 399 | 400 | 245 | 127 | 382 | 258 |
| COP ratio | % (relative to R410A) | 94.9 | 102.9 | 89.0 | 103.5 | 105.4 | 103.2 | 103.6 | 101.5 |
| Refrigerating capacity ratio | % (relative to R410A) | 131.0 | 97.0 | 139.0 | 86.9 | 70.0 | 70.0 | 85.0 | 85.0 |
| Condensation temperature glide | °C | 4.6 | 3.6 | 3.9 | 6.3 | 11.0 | 21.4 | 6.9 | 14.5 |

| Item | Unit | Ex. 12 | Ex. 13 | Comp. Ex. 8 | Ex. 14 | Ex. 15 |
|---|---|---|---|---|---|---|
| | | G | G' | H | I | J |
| HFO-1132a | mass% | 1.5 | 8.6 | 10.0 | 10.0 | 10.0 |
| R32 | mass% | 65.9 | 73.9 | 755 | 74.0 | 59.0 |
| R1234ze | mass% | 32.6 | 17.5 | 14.5 | 16.0 | 31.0 |
| GWP | - | 447 | 500 | 511 | 501 | 400 |
| COP ratio | % (relative to R410A) | 103.1 | 100.5 | 100.0 | 100.1 | 100.4 |
| Refrigerating capacity ratio | % (relative to R410A) | 91.7 | 107.7 | 120.7 | 109.8 | 100.1 |
| Condensation temperature glide | °C | 5.0 | 5.1 | 5.0 | 5.3 | 8.4 |

These results indicate that the mixed refrigerants have a GWP of 500 or less and a refrigerating capacity ratio of 70% or more relative to that of R410A when they satisfy the following requirements.

Requirements

When the mass% of HFO-1132a, R32, and R1234ze based on their sum in the refrigerant is respectively represented by x, y, and z, coordinates (x,y,z) in a ternary composition diagram in which the sum of HFO-1132a, R32, and R1234ze is 100 mass% are within the range of a figure surrounded by straight lines IB, BC, CD, and DI that connect the following four points:

> point I (10.0, 74.0, 16.0),
> point B (1.5, 73.9, 24.6),
> point C (1.5, 35.8, 62.7), and
> point D (10.0, 18.2, 71.8),
> or on the straight lines.

These results indicate that the mixed refrigerants have a GWP of 500 or less and a refrigerating capacity ratio of 85% or more relative to that of R410A when they satisfy the following requirements.

Requirements

When the mass% of HFO-1132a, R32, and R1234ze based on their sum in the refrigerant is respectively represented by x, y, and z, coordinates (x,y,z) in a ternary composition diagram in which the sum of HFO-1132a, R32, and R1234ze is 100 mass% are within the range of a figure surrounded by straight lines IB, BE, EF, and FI that connect the following four points:

> point I (10.0, 74.0, 16.0),
> point B (1.5, 73.9, 24.6),
> point E (1.5, 56.2, 42.3), and
> point F (10.0, 37.7, 52.3),
> or on the straight lines.

These results indicate that the mixed refrigerants have a GWP of 500 or less and a condensation temperature glide of 5°C or less when they satisfy the following requirements.

Requirements

When the mass% of HFO-1132a, R32, and R1234ze based on their sum in the refrigerant is respectively represented by x, y, and z, coordinates (x,y,z) in a ternary composition diagram in which the sum of HFO-1132a, R32, and R1234ze is 100 mass% are within the range of a figure surrounded by straight lines G'B, BG, and GG' that connect the following three points:

> point G' (8.6, 73.9, 17.5),
> point B (1.5, 73.9, 24.6), and
> point G (1.5, 65.9, 32.6),
> or on the straight lines.

These results indicate that the mixed refrigerants have a GWP of 400 or less and a refrigerating capacity ratio of 70% or more relative to that of R410A when they satisfy the following requirements.

Requirements

When the mass% of HFO-1132a, R32, and R1234ze based on their sum in the refrigerant is respectively represented by x, y, and z, coordinates (x,y,z) in a ternary composition diagram in which the sum of HFO-1132a, R32, and R1234ze is 100 mass% are within the range of a figure surrounded by straight lines JB', B'C, CD, and DJ that connect the following four points:

> point J (10.0, 59.0, 31.0),
> point B' (1.5, 58.9, 39.6),
> point C (1.5, 35.8, 62.7), and
> point D (10.0, 18.2, 71.8),

or on the straight lines.

These results indicate that the mixed refrigerants have a GWP of 400 or less and a refrigerating capacity ratio of 85% or more relative to that of R410A when they satisfy the following requirements.

Requirements

When the mass% of HFO-1132a, R32, and R1234ze based on their sum in the refrigerant is respectively represented by x, y, and z, coordinates (x,y,z) in a ternary composition diagram in which the sum of HFO-1132a, R32, and R1234ze is 100 mass% are within the range of a figure surrounded by straight lines JB', B'E, EF, and FJ that connect the following four points:

point J (10.0, 59.0, 31.0),
point B' (1.5, 58.9, 39.6),
point E (1.5, 56.2, 42.3), and
point F (10.0, 37.7, 52.3),
or on the straight lines.

Mixed refrigerants further comprising R1234yf in addition to HFO-1132a, R32, and R1234ze were evaluated in the same manner as described above. Tables 2 to 4 shows the results.

Table 2

| Item | Unit | Comp. Ex. 9 | Comp. Ex. 10 | Ex. 16 | Ex. 17 | Ex. 18 | Ex. 19 | Ex. 20 | Comp. Ex. 11 | Comp. Ex. 12 |
|---|---|---|---|---|---|---|---|---|---|---|
| HFO-1132a | mass% | 0.0 | 0.75 | 1.5 | 3.0 | 5.0 | 7.5 | 10.0 | 12.5 | 15.0 |
| R32 | mass% | 65.0 | 65.0 | 65.0 | 65.0 | 65.0 | 65.0 | 65.0 | 65.0 | 65.0 |
| R1234yf | mass% | 20.0 | 20.0 | 20.0 | 20.0 | 20.0 | 20.0 | 20.0 | 20.0 | 20.0 |
| R1234ze | mass% | 15.0 | 14.25 | 13.5 | 12.0 | 10.0 | 7.5 | 5.0 | 2.5 | 0.0 |
| GWP | - | 440 | 440 | 440 | 440 | 440 | 440 | 440 | 440 | 440 |
| COP ratio | % (relative to R410A) | 102.9 | 102.7 | 102.4 | 101.9 | 101.2 | 100.4 | 996 | 98.8 | 97.9 |
| Refrigerating capacity ratio | % (relative to R410A) | 92.4 | 93.6 | 94.7 | 97.0 | 100.0 | 103.7 | 107.3 | 110.8 | 114.2 |
| Condensation temperature glide | °C | 2.7 | 3.0 | 3.2 | 3.6 | 4.0 | 4.4 | 4.7 | 4.8 | 4.8 |

| Item | Unit | Comp. Ex. 13 | Comp. Ex. 14 | Ex. 21 | Ex. 22 | Ex. 23 | Ex. 24 | Ex. 25 | Comp. Ex. 15 | Comp. Ex. 16 |
|---|---|---|---|---|---|---|---|---|---|---|
| HFO-1132a | mass% | 0.0 | 0.8 | 1.5 | 3.0 | 5.0 | 7.5 | 10.0 | 12.5 | 15.0 |
| R32 | mass% | 65.0 | 65.0 | 65.0 | 65.0 | 65.0 | 65.0 | 65.0 | 65.0 | 65.0 |
| R1234yf | mass% | 20.0 | 19.3 | 18.5 | 17.0 | 15.0 | 12.5 | 10.0 | 7.5 | 5.0 |
| R1234ze | mass% | 15.0 | 15.00 | 15.0 | 15.0 | 15.0 | 15.0 | 15.0 | 15.0 | 15.0 |
| GWP | - | 440 | 440 | 440 | 440 | 440 | 440 | 440 | 440 | 440 |
| COP ratio | % (relative to R410A) | 102.9 | 102.7 | 102.4 | 102.0 | 101.4 | 100.6 | 99.9 | 99.2 | 98.5 |

(continued)

| Item | Unit | Comp. Ex. 13 | Comp. Ex. 14 | Ex. 21 | Ex. 22 | Ex. 23 | Ex. 24 | Ex. 25 | Comp. Ex. 15 | Comp. Ex. 16 |
|---|---|---|---|---|---|---|---|---|---|---|
| Refrigerating capacity ratio | % (relative to R410A) | 92.4 | 93.4 | 94.5 | 96.5 | 99.2 | 102.5 | 105.7 | 108.9 | 112.1 |
| Condensation temperature glide | °C | 2.7 | 3.0 | 3.3 | 3.9 | 4.6 | 5.2 | 5.8 | 6.2 | 6.5 |

| Item | Unit | Comp. Ex. 17 | Comp. Ex. 18 | Ex. 26 | Ex. 27 | Ex. 28 | Ex. 29 | Ex. 30 | Comp. Ex. 19 | Comp. Ex. 20 |
|---|---|---|---|---|---|---|---|---|---|---|
| HFO-1132a | mass% | 0.0 | 0.75 | 1.5 | 3.0 | 5.0 | 7.5 | 10.0 | 10.0 | 15.0 |
| R32 | mass% | 65.0 | 64.3 | 63.5 | 62.0 | 60.0 | 57.5 | 55.0 | 52.5 | 50.0 |
| R1234yf | mass% | 20.0 | 20.0 | 20.0 | 20.0 | 20.0 | 20.0 | 20.0 | 20.0 | 20.0 |
| R1234ze | mass% | 15.0 | 15.00 | 15.0 | 15.0 | 15.0 | 15.0 | 15.0 | 15.0 | 15.0 |
| GWP | - | 440 | 435 | 430 | 420 | 407 | 390 | 373 | 356 | 339 |
| COP ratio | % (relative to R410A) | 102.9 | 102.7 | 102.4 | 101.9 | 101.3 | 100.5 | 99.8 | 99.7 | 98.2 |
| Refrigerating capacity ratio | % (relative to R410A) | 92.4 | 93.1 | 93.7 | 94.9 | 96.6 | 98.5 | 100.4 | 100.0 | 104.0 |
| Condensation temperature glide | °C | 2.7 | 3.1 | 3.4 | 4.1 | 5.0 | 5.9 | 6.7 | 7.0 | 8.0 |

Table 3

| Item | Unit | Comp. Ex. 21 | Comp. Ex. 22 | Comp. Ex. 23 | Comp. Ex. 24 | Comp. Ex. 25 | Comp. Ex. 26 | Comp. Ex. 27 | Comp. Ex. 28 |
|---|---|---|---|---|---|---|---|---|---|
|  |  | A | B | A' | B' | C | D | E | F |
| HFO-1132a | mass% | 1.5 | 1.5 | 1.5 | 1.5 | 1.5 | 1.5 | 1.5 | 1.5 |
| R32 | mass% | 74.0 | 73.9 | 59.0 | 58.9 | 24.4 | 35.8 | 44.7 | 56.2 |
| R1234yf | mass% | 24.5 | 0.0 | 39.5 | 0.0 | 74.1 | 0.0 | 53.8 | 0.0 |
| R1234ze | mass% | 0.0 | 24.6 | 0.0 | 39.6 | 0.0 | 62.7 | 0.0 | 42.3 |
| GWP | - | 50.0 | 50.0 | 200 | 400 | 168 | 245 | 304 | 382 |
| COP ratio | % (relative to R410A) | 101.9 | 102.9 | 101.8 | 103.5 | 102.6 | 105.4 | 101.7 | 103.6 |
| Refrigerating capacity ratio | % (relative to R410A) | 101.4 | 97.0 | 93.7 | 86.9 | 70.0 | 70.0 | 85.0 | 85.0 |
| Condensation temperature glide | °C | 1.5 | 3.6 | 2.5 | 6.3 | 7.1 | 11.0 | 4.0 | 6.9 |

| Item | Unit | Comp. Ex. 29 | Ex. 31 | Comp. Ex. 30 | Comp. Ex. 31 | Comp. Ex. 32 | Comp. Ex. 33 |
|---|---|---|---|---|---|---|---|
| | | G | P | H | C' | E' | G' |
| HFO-1132a | mass% | 1.5 | 1.5 | 1.5 | 1.5 | 1.5 | 1.5 |
| R32 | mass% | 37.9 | 58.9 | 65.9 | 30.1 | 50.4 | 51.9 |
| R1234yf | mass% | 60.6 | 15.2 | 0.0 | 32.6 | 24.9 | 26.2 |
| R1234ze | mass% | 0.0 | 24.4 | 32.6 | 35.8 | 23.2 | 20.4 |
| GWP | - | 258 | 400 | 247 | 207 | 343 | 353 |
| COP ratio | % (relative to R410A) | 101.8 | 102.8 | 103.1 | 104.1 | 102.8 | 102.6 |
| Refrigerating capacity ratio | % (relative to R410A) | 80.3 | 89.6 | 91.7 | 70.0 | 85.0 | 86.4 |
| Condensation temperature glide | °C | 5.0 | 4.7 | 0.0 | 9.0 | 5.4 | 5.0 |

| Item | Unit | Comp. Ex. 34 | Comp. Ex. 35 | Comp. Ex. 36 | Comp. Ex. 37 | Comp. Ex. 38 | Comp. Ex. 39 | Comp. Ex. 40 | Comp. Ex. 41 |
|---|---|---|---|---|---|---|---|---|---|
| | | A | B | A' | B' | C | D | E | F |
| HFO-1132a | mass% | 3.0 | 3.0 | 3.0 | 3.0 | 3.0 | 3.0 | 3.0 | 3.0 |
| R32 | mass% | 74.0 | 73.9 | 59.0 | 58.9 | 22.0 | 32.6 | 41.7 | 52.8 |
| R1234yf | mass% | 23.0 | 0.0 | 38.0 | 0.0 | 75.0 | 0.0 | 55.3 | 0.0 |
| R1234ze | mass% | 0.0 | 23.1 | 0.0 | 38.1 | 0.0 | 64.4 | 0.0 | 44.2 |
| GWP | - | 50.0 | 50.0 | 200 | 400 | 152 | 224 | 284 | 359 |
| COP ratio | % (relative to R410A) | 101.5 | 102.3 | 101.3 | 102.8 | 102.4 | 104.9 | 101.3 | 103.2 |
| Refrigerating capacity ratio | % (relative to R410A) | 103.3 | 99.3 | 95.7 | 89.3 | 70.0 | 70.0 | 85.0 | 85.0 |
| Condensation temperature glide | °C | 2.0 | 4.1 | 3.0 | 6.9 | 8.1 | 12.9 | 5.0 | 8.2 |

| Item | Unit | Comp. Ex. 42 | Ex. 32 | Comp. Ex. 43 | Comp. Ex. 44 | Comp. Ex. 45 | Comp. Ex. 46 | Comp. Ex. 47 | Comp. Ex. 48 |
|---|---|---|---|---|---|---|---|---|---|
| | | G | P | H | A | B | A' | B' | C |
| HFO-1132a | mass% | 3.0 | 3.0 | 3.0 | 5.0 | 5.0 | 5.0 | 5.0 | 5.0 |
| R32 | mass% | 41.5 | 59.0 | 68.6 | 74.0 | 73.9 | 59.0 | 58.9 | 19.0 |
| R1234yf | mass% | 55.5 | 19.7 | 0.0 | 21.0 | 0.0 | 36.0 | 0.0 | 76.0 |
| R1234ze | mass% | 0.0 | 18.3 | 28.4 | 0.0 | 21.1 | 0.0 | 36.1 | 0.0 |
| GWP | - | 282 | 400 | 265 | 500 | 500 | 400 | 400 | 131 |
| COP ratio | % (relative to R410A) | 101.3 | 102.1 | 102.5 | 100.9 | 101.7 | 100.7 | 102.1 | 102.1 |

(continued)

| Item | Unit | Comp. Ex. 42 | Ex. 32 | Comp. Ex. 43 | Comp. Ex. 44 | Comp. Ex. 45 | Comp. Ex. 46 | Comp. Ex. 47 | Comp. Ex. 48 |
|---|---|---|---|---|---|---|---|---|---|
| | | G | P | H | A | B | A' | B' | C |
| Refrigerating capacity ratio | % (relative to R410A) | 84.8 | 92.8 | 95.9 | 105.9 | 102.4 | 98.4 | 92.4 | 70.0 |
| Condensation temperature glide | °C | 5.0 | 4.7 | 5.0 | 2.5 | 4.6 | 3.6 | 7.5 | 9.5 |

| Item | Unit | Comp. Ex. 49 | Comp. Ex. 50 | Comp. Ex. 51 | Comp. Ex. 52 | Ex. 33 | Comp. Ex. 53 |
|---|---|---|---|---|---|---|---|
| | | D | E | F | G | P | H |
| HFO-1132a | mass% | 5.0 | 5.0 | 5.0 | 5.0 | 5.0 | 5.0 |
| R32 | mass% | 28.4 | 37.9 | 28.4 | 46.0 | 59.0 | 71.4 |
| R1234yf | mass% | 0.0 | 57.1 | 0.0 | 49.0 | 23.9 | 0.0 |
| R1234ze | mass% | 66.6 | 0.0 | 26.6 | 0.0 | 12.1 | 23.6 |
| GWP | - | 196 | 258 | 330 | 313 | 400 | 483 |
| COP ratio | % (relative to R410A) | 104.3 | 100.7 | 102.6 | 100.6 | 101.2 | 101.7 |
| Refrigerating capacity ratio | % (relative to R410A) | 70.0 | 85.0 | 85.0 | 90.5 | 96.5 | 100.8 |
| Condensation temperature glide | °C | 15.3 | 6.2 | 10.1 | 5.0 | 4.8 | 5.0 |

Table 4

| Item | Unit | Comp. Ex. 54 | Comp. Ex. 55 | Comp. Ex. 56 | Comp. Ex. 57 | Comp. Ex. 58 | Comp. Ex. 59 | Comp. Ex. 60 | Comp. Ex. 61 |
|---|---|---|---|---|---|---|---|---|---|
| | | A | B=H | A' | B' | C | D | E | F |
| HFO-1132a | mass% | 7.5 | 7.5 | 7.5 | 7.5 | 7.5 | 7.5 | 7.5 | 7.5 |
| R32 | mass% | 74.0 | 73.9 | 59.0 | 58.9 | 15.4 | 23.2 | 33.4 | 43.0 |
| R1234yf | mass% | 18.5 | 0.0 | 33.5 | 0.0 | 77.1 | 0.0 | 59.1 | 0.0 |
| R1234ze | mass% | 0.0 | 18.6 | 0.0 | 33.6 | 0.0 | 69.3 | 0.0 | 49.5 |
| GWP | - | 500 | 500 | 400 | 400 | 107 | 161 | 228 | 293 |
| COP ratio | % (relative to R410A) | 100.2 | 100.8 | 100.0 | 101.2 | 101.8 | 103.7 | 100.2 | 102.0 |
| Refrigerating capacity ratio | % (relative to R410A) | 109.1 | 106.1 | 101.6 | 96.2 | 70.0 | 70.0 | 85.0 | 85.0 |
| Condensation temperature glide | °C | 3.1 | 5.0 | 4.2 | 8.1 | 11.1 | 18.4 | 7.7 | 12.3 |

| Item | Unit | Comp. Ex. 62 | Ex. 34 | Comp. Ex. 63 | Comp. Ex. 64 | Comp. Ex. 65 | Comp. Ex. 66 | Comp. Ex. 67 | Comp. Ex. 68 |
|---|---|---|---|---|---|---|---|---|---|
| | | G | P | A | B | A' | B' | C | D |
| HFO-1132a | mass% | 7.5 | 7.5 | 10.0 | 10.0 | 10.0 | 10.0 | 10.0 | 10.0 |
| R32 | mass% | 51.0 | 59.0 | 74.0 | 73.9 | 59.0 | 58.9 | 11.9 | 18.2 |
| R1234yf | mass% | 41.5 | 27.0 | 16.0 | 0.0 | 31.0 | 0.0 | 78.1 | 0.0 |
| R1234ze | mass% | 0.0 | 6.5 | 0.0 | 16.1 | 0.0 | 31.1 | 0.0 | 71.8 |
| GWP | - | 346 | 400 | 500 | 500 | 400 | 400 | 84 | 127 |
| COP ratio | % (relative to R410A) | 99.9 | 100.2 | 99.5 | 100.1 | 99.3 | 100.4 | 101.6 | 103.2 |
| Refrigerating capacity ratio | % (relative to R410A) | 97.0 | 100.7 | 112.3 | 109.7 | 104.8 | 100.0 | 70.0 | 70.0 |
| Condensation temperature glide | °C | 5.0 | 4.8 | 3.6 | 5.3 | 4.6 | 8.4 | 12.5 | 21.4 |

| Item | Unit | Comp. Ex. 69 | Comp. Ex. 70 | Comp. Ex. 71 | Ex. 35 | Comp. Ex. 72 | Comp. Ex. 73 |
|---|---|---|---|---|---|---|---|
| | | E | F | G | P | R | H |
| HFO-1132a | mass% | 10.0 | 10.0 | 10.0 | 10.0 | 10.0 | 10.0 |
| R32 | mass% | 29.1 | 37.7 | 55.4 | 59.0 | 73.9 | 75.5 |
| R1234yf | mass% | 60.9 | 0.0 | 34.6 | 28.4 | 2.8 | 0.0 |
| R1234ze | mass% | 0.0 | 52.3 | 0.0 | 2.6 | 13.3 | 14.5 |
| GWP | - | 199 | 258 | 375 | 400 | 500 | 511 |
| COP ratio | % (relative to R410A) | 99.7 | 101.5 | 99.2 | 99.4 | 100.0 | 100.0 |
| Refrigerating capacity ratio | % (relative to R410A) | 85.0 | 85.0 | 102.8 | 104.5 | 110.2 | 110.7 |
| Condensation temperature glide | °C | 9.1 | 14.5 | 5.0 | 4.9 | 5.0 | 5.0 |

These results indicate that the mixed refrigerants have a GWP of 500 or less and a refrigerating capacity ratio of 70% or more relative to that of R410A when they satisfy the following requirements.

Requirements

When the mass% of R32 is represented by x, the mass% of R1234yf is represented by y, the mass% of R1234ze is represented by z, and the mass% of HFO-1132a is represented by a, based on the sum of R32, R1234yf, R1234ze, and HFO-1132a in the refrigerant, coordinates (x,y,z) in a ternary composition diagram in which the sum of R32, R1234yf, and R1234ze is (100-a) mass% are within the range of a figure surrounded by straight lines AB, BC, CD, and DA that connect the following four points:

point A (74.0, -a+26.0, 0.0),
point B (73.9, 0.0, -a+26.1),
point D ($0.0098a^2$-2.1856a+39.064, 0.0, $-0.0098a^2$+1.1856a+60.936), and
point C ($0.0138a^2$-1.6252a+26.785, $-0.0138a^2$+0.6252a+73.215, 0.0), or on the straight lines AB and CD (excluding the points A, B, C, and D).

These results indicate that the mixed refrigerants have a GWP of 500 or less and a refrigerating capacity ratio of 85% or more relative to that of R410A when they satisfy the following requirements.

Requirements

When the mass% of R32 is represented by x, the mass% of R1234yf is represented by y, the mass% of R1234ze is represented by z, and the mass% of HFO-1132a is represented by a, based on the sum of R32, R1234yf, R1234ze, and HFO-1132a in the refrigerant, coordinates (x,y,z) in a ternary composition diagram in which the sum of R32, R1234yf, and R1234ze is (100-a) mass% are within the range of a figure surrounded by straight lines AB, BF, FE, and EA that connect the following four points:

point A (74.0, -a+26.0, 0.0),
point B (73.9, 0.0, -a+26.1),
point F $(0.0102a^2-2.2922a+59.604, 0.0, -0.0102a^2+1.2922a+40.396)$, and
point E $(0.0208a^2-2.0723a+47.748, -0.0208a^2+1.0723a+52.252, 0.0)$, or on the straight lines AB and FE (excluding the points A, B, F, and E) .

These results indicate that the mixed refrigerants have a GWP of 500 or less and a condensation temperature glide of 5°C or less when they satisfy the following requirements.

Requirements

When the mass% of R32 is represented by x, the mass% of R1234yf is represented by y, the mass% of R1234ze is represented by z, and the mass% of HFO-1132a is represented by a, based on the sum of R32, R1234yf, R1234ze, and HFO-1132a in the refrigerant,

if $5.0 \geq x \geq 1.5$, coordinates (x,y,z) in a ternary composition diagram in which the sum of R32, R1234yf, and R1234ze is (100-a) mass% are within the range of a figure surrounded by straight lines AB, BH, HG, and GA that connect the following four points:

point A (74.0, -a+26.0, 0.0),
point B (73.9, 0.0, -a+26.1),
point H $(-0.1143a^2+2.3143a+62.686, 0.0, 0.1143a^2-3.3143a+37.314)$, and
point G $(-0.0505a^2+2.6396a+34.049, 0.0505a^2-3.6396a+65.951, 0.0)$, or on the straight lines AB and HG (excluding the points A, B, H, and G);

if $7.5 \geq x > 5.0$, coordinates (x,y,z) in the ternary composition diagram are within the range of a figure surrounded by straight lines AB, BH, HG, and GA that connect the following four points:

point A (74.0, -a+26.0, 0.0),
point B (73.9, 0.0, -a+26.1),
point H $(-0.072a^2+1.9a+63.7, 0.0, 0.072a^2-2.9a+36.3)$, and
point G $(-0.0505a^2+2.6396a+34.049, 0.0505a^2-3.6396a+65.951, 0.0)$, or on the straight lines AB and HG (excluding the points A, B, H, and G); or

if $10.0 \geq x > 7.5$, coordinates (x,y,z) in the ternary composition diagram are within the range of a figure surrounded by straight lines AR, RG, and GA that connect the following three points:

point A (74.0, -a+26.0, 0.0),
point R (73.9, 1.12a-8.4, -2.12a+34.5), and
point G $(-0.0505a^2+2.6396a+34.049, 0.0505a^2-3.6396a+65.951, 0.0)$, or on the straight lines AR and RG (excluding the points A and G) .

These results indicate that the mixed refrigerants have a GWP of 400 or less and a refrigerating capacity ratio of 70% or more relative to that of R410A when they satisfy the following requirements.

Requirements

When the mass% of R32 is represented by x, the mass% of R1234yf is represented by y, the mass% of R1234ze is represented by z, and the mass% of HFO-1132a is represented by a, based on the sum of R32, R1234yf, R1234ze, and HFO-1132a in the refrigerant, coordinates (x,y,z) in a ternary composition diagram in which the sum of R32, R1234yf, and R1234ze is (100-a) mass% are within the range of a figure surrounded by straight lines A'B', B'D, DC, and CA' that connect the following four points:

> point A' (59.0, -a+41.0,0),
> point B' (58.9, 0.0, -a+41.1),
> point D ($0.0098a^2$-2.1856a+39.064, 0.0, $-0.0098a^2$+1.1856a+60.936), and
> point C ($0.0138a^2$-1.6252a+26.785, $-0.0138a^2$+0.6252a+73.215, 0.0), or on the straight lines A'B' and DC (excluding the points A', B', D, and C).

These results indicate that the mixed refrigerants have a GWP of 400 or less and a refrigerating capacity ratio of 85% or more relative to that of R410A when they satisfy the following requirements.

Requirements

When the mass% of R32 is represented by x, the mass% of R1234yf is represented by y, the mass% of R1234ze is represented by z, and the mass% of HFO-1132a is represented by a, based on the sum of R32, R1234yf, R1234ze, and HFO-1132a in the refrigerant, coordinates (x,y,z) in a ternary composition diagram in which the sum of R32, R1234yf, and R1234ze is (100-a) mass% are within the range of a figure surrounded by straight lines A'B', B'F, FE, and EA' that connect the following four points:

> point A' (59.0, -a+41.0, 0.0),
> point B' (58.9, 0.0, -a+41.1),
> point F ($0.0102a^2$-2.2922a+59.604, 0.0, $-0.0102a^2$+1.2922a+40.396), and
> point E ($0.0208a^2$-2.0723a+47.748, $-0.0208a^2$+1.0723a+52.252, 0.0), or on the straight lines A'B' and FE (excluding the points A', B', F, and E).

These results indicate that the mixed refrigerants have a GWP of 400 or less and a condensation temperature glide of 5°C or less when they satisfy the following requirements.

Requirements

When the mass% of R32 is represented by x, the mass% of R1234yf is represented by y, the mass% of R1234ze is represented by z, and the mass% of HFO-1132a is represented by a, based on the sum of R32, R1234yf, R1234ze, and HFO-1132a in the refrigerant,

> if 5.0≥x≥1.5, coordinates (x,y,z) in a ternary composition diagram in which the sum of R32, R1234yf, and R1234ze is (100-a) mass% are within the range of a figure surrounded by straight lines A'P, PG, and GA' that connect the following three points:

> > point A' (59.0, -a+41.0, 0.0),
> > point P ($-0.019a^2$+0.1524a+58.714, $-0.2571a^2$+4.1571a+9.5429, $0.2761a^2$-5.3095a+31.7431), and
> > point G ($-0.0505a^2$+2.6396a+34.049, $0.0505a^2$-3.6396a+65.951, 0.0), or on the straight lines A'P and PG (excluding the points A' and G), or

> if 10.0≥x>5, coordinates (x,y,z) in the ternary composition diagram are within the range of a figure surrounded by straight lines A'P, PG, and GA' that connect the following three points:

> > point A' (59.0, -a+41.0, 0.0),
> > point P (59.0, $-0.136a^2$+2.94a+12.6, $0.136a^2$-3.94a+28.4), and
> > point G ($-0.0505a^2$+2.6396a+34.049, $0.0505a^2$-3.6396a+65.951, 0.0), or on the straight lines A'P and PG (excluding the points A' and G) .

Approximate expressions indicating the coordinates of each point were obtained by determining approximate expressions for the curves connecting three points, as shown in Tables 5 and 6.

Table 5

| Point A | | | | | | |
|---|---|---|---|---|---|---|
| a=HFO-1132a | mass% | 1.5 | 3.0 | 5.0 | 7.5 | 10.0 |
| R32 | mass% | 74.0 | 74.0 | 74.0 | 74.0 | 74.0 |
| R1234yf | mass% | 24.5 | 23.0 | 21.0 | 18.5 | 16.0 |
| R1234ze | mass% | 0.0 | 0.0 | 0.0 | 0.0 | 0.0 |
| R32 approximate expression | | 74.0 | | | | |
| R1234yf approximate expression | | -a+26 | | | | |
| R1234ze approximate expression | | 0.0 | | | | |

Point B

| a=HFO-1132a | mass% | 1.5 | 3.0 | 5.0 | 7.5 | 10.0 |
|---|---|---|---|---|---|---|
| R32 | mass% | 73.9 | 73.9 | 73.9 | 73.9 | 73.9 |
| R1234yf | mass% | 0.0 | 0.0 | 0.0 | 0.0 | 0.0 |
| R1234ze | mass% | 24.6 | 23.1 | 21.1 | 18.6 | 16.1 |
| R32 approximate expression | | 73.9 | | | | |
| R1234yf approximate expression | | 0.0 | | | | |
| R1234ze approximate expression | | -a+26.1 | | | | |

Point A'

| a=HFO-1132a | mass% | 1.5 | 3.0 | 5.0 | 7.5 | 10.0 |
|---|---|---|---|---|---|---|
| R32 | mass% | 59.0 | 59.0 | 59.0 | 59.0 | 59.0 |
| R1234yf | mass% | 39.5 | 38.0 | 36.0 | 33.5 | 31.0 |
| R1234ze | mass% | 0.0 | 0.0 | 0.0 | 0.0 | 0.0 |
| R32 approximate expression | | 59.0 | | | | |
| R1234yf approximate expression | | -a+41.0 | | | | |
| R1234ze approximate expression | | 0.0 | | | | |

Point B'

| a=HFO-1132a | mass% | 1.5 | 3.0 | 5.0 | 7.5 | 10.0 |
|---|---|---|---|---|---|---|
| R32 | mass% | 58.9 | 58.9 | 58.9 | 58.9 | 58.9 |
| R1234yf | mass% | 0.0 | 0.0 | 0.0 | 0.0 | 0.0 |
| R1234ze | mass% | 39.6 | 38.1 | 36.1 | 33.6 | 31.1 |
| R32 approximate expression | | 58.9 | | | | |

(continued)

| R1234yf approximate expression | 0.0 |
|---|---|
| R1234ze approximate expression | -a+41.1 |

**Point C**

| a=HFO-1132a | mass% | 1.5 | 3.0 | 5.0 | 7.5 | 10.0 |
|---|---|---|---|---|---|---|
| R32 | mass% | 24.4 | 22.0 | 19.0 | 15.4 | 11.9 |
| R1234yf | mass% | 74.1 | 75.0 | 76.0 | 77.1 | 78.1 |
| R1234ze | mass% | 0.0 | 0.0 | 0.0 | 0.0 | 0.0 |
| R32 approximate expression | $0.0138a^2-1.6252a+26.785$ | | | | | |
| R1234yf approximate expression | $-0.0138a^2+0.6252a+73.215$ | | | | | |
| R1234ze approximate expression | 0.0 | | | | | |

**Point D**

| a=HFO-1132a | mass% | 1.5 | 3.0 | 5.0 | 7.5 | 10.0 |
|---|---|---|---|---|---|---|
| R32 | mass% | 35.8 | 32.6 | 28.4 | 23.2 | 18.2 |
| R1234yf | mass% | 0.0 | 0.0 | 0.0 | 0.0 | 0.0 |
| R1234ze | mass% | 62.7 | 64.4 | 66.6 | 69.3 | 71.8 |
| R32 approximate expression | $0.0098a^2-2.1856a+39.064$ | | | | | |
| R1234yf approximate expression | 0.0 | | | | | |
| R1234ze approximate expression | $-0.0098a^2+1.1856a+60.936$ | | | | | |

Table 6

| Point E | | | | | | |
|---|---|---|---|---|---|---|
| a=HFO-1132a | mass% | 1.5 | 3.0 | 5.0 | 7.5 | 10.0 |
| R32 | mass% | 44.7 | 41.7 | 37.9 | 33.4 | 29.1 |
| R1234yf | mass% | 53.8 | 55.3 | 57.1 | 59.1 | 60.9 |
| R1234ze | mass% | 0.0 | 0.0 | 0.0 | 0.0 | 0.0 |
| R32 approximate expression | $0.0208a^2-2.0723a+47.748$ | | | | | |
| R1234yf approximate expression | $-0.0208a^2+1.0723a+52.252$ | | | | | |
| R1234ze approximate expression | 0.0 | | | | | |

**Point F**

| a=HFO-1132a | mass% | 1.5 | 3.0 | 5.0 | 7.5 | 10.0 |
|---|---|---|---|---|---|---|
| R32 | mass% | 56.2 | 52.8 | 48.4 | 43.0 | 37.7 |

(continued)

| | | | | | | |
|---|---|---|---|---|---|---|
| R1234yf | mass% | 0.0 | 0.0 | 0.0 | 0.0 | 0.0 |
| R1234ze | mass% | 42.3 | 44.2 | 46.6 | 49.5 | 52.3 |
| R32 approximate expression | | $0.0102a^2-2.2922a+59.604$ | | | | |
| R1234yf approximate expression | | 0.0 | | | | |
| R1234ze approximate expression | | $-0.0102a^2+1.2922a+40.396$ | | | | |

Point G

| | | | | | | |
|---|---|---|---|---|---|---|
| a=HFO-1132a | mass% | 1.5 | 3.0 | 5.0 | 7.5 | 10.0 |
| R32 | mass% | 37.9 | 41.5 | 46.0 | 51.0 | 55.4 |
| R1234yf | mass% | 60.6 | 55.5 | 49.0 | 41.5 | 34.6 |
| R1234ze | mass% | 0.0 | 0.0 | 0.0 | 0.0 | 0.0 |
| R32 approximate expression | | $-0.0505a^2+2.6396a+34.049$ | | | | |
| R1234yf approximate expression | | $0.0505a^2-3.6396a+65.951$ | | | | |
| R1234ze approximate expression | | 0.0 | | | | |

Point H

| | | | | | | | |
|---|---|---|---|---|---|---|---|
| a=HFO-1132a | mass% | 1.5 | 3.0 | 5.0 | 5.0 | 7.5 | 10.0 |
| R32 | mass% | 65.9 | 68.6 | 71.4 | 71.4 | 73.9 | 75.5 |
| R1234yf | mass% | 0.0 | 0.0 | 0.0 | 0.0 | 0.0 | 0.0 |
| R1234ze | mass% | 32.6 | 28.4 | 23.6 | 23.6 | 18.6 | 14.5 |
| R32 approximate expression | | $-0.1143a^2+2.3143a+62.686$ | | | $-0.072a^2+1.9a+63.7$ | | |
| R1234yf approximate expression | | 0.0 | | | 0.0 | | |
| R1234ze approximate expression | | $0.1143a^2-3.3143a+37.314$ | | | $0.072a^2-2.9a+36.3$ | | |

Point P

| | | | | | | | |
|---|---|---|---|---|---|---|---|
| a=HFO-1132a | mass% | 1.5 | 3.0 | 5.0 | 5.0 | 7.5 | 10.0 |
| R32 | mass% | 58.9 | 59.0 | 59.0 | 59.0 | 59.0 | 59.0 |
| R1234yf | mass% | 15.2 | 19.7 | 23.9 | 23.9 | 27.0 | 28.4 |
| R1234ze | mass% | 24.4 | 18.3 | 12.1 | 12.1 | 6.5 | 2.6 |
| R32 approximate expression | | $-0.019a^2+0.1524a+58.714$ | | | 59.0 | | |
| R1234yf approximate expression | | $-0.2571a^2+4.1571a+9.5429$ | | | $-0.136a^2+2.94a+12.6$ | | |
| R1234ze approximate expression | | $0.2761a^2-5.3095a+31.7431$ | | | $0.136a^2-3.94a+28.4$ | | |

**Point R**

| x-HFO-1132a | mass% | 7.5 | 10.0 |
|---|---|---|---|
| R32 | mass% | 73.9 | 73.9 |
| R1234yf | mass% | 0.0 | 2.8 |
| R1234ze | mass% | 18.6 | 13.3 |
| R32 approximate expression | | 73.9 | |
| R1234yf approximate expression | | 1.12a-8.4 | |
| R1234ze approximate expression | | -2.12a+34.5 | |

For each mixed refrigerant, the COP ratio and refrigerating capacity ratio relative to those of R404A were determined. The calculation conditions were as follows:

Evaporating temperature: -40°C
Condensation temperature: 40°C
Superheating temperature: 20 K
Subcooling temperature: 0 K
Compressor efficiency: 70%

Tables 7 and 8 show these values together with the GWP of each mixed refrigerant. The COP and refrigerating capacity are ratios relative to R404A.
The coefficient of performance (COP) was determined according the following formula.

COP = (refrigerating capacity or heating capacity)/power consumption

Various properties of the mixed refrigerants were evaluated as shown in Tables 7 and 8 while changing the concentration of HFO-1132a.

Table 7

| Item | Unit | Comp. Ex. 56 | Comp. Ex. 74 | Comp. Ex. 75 | Ex. 36 | Ex. 37 | Ex. 38 | Ex. 39 | Ex. 40 | Comp. Ex. 76 | Comp. Ex. 77 |
|---|---|---|---|---|---|---|---|---|---|---|---|
| HFO-1132a | mass% | | 0.0 | 0.75 | 1.5 | 3.0 | 5.0 | 7.5 | 10.0 | 12.5 | 15.0 |
| R32 | mass% | R404A | 21.5 | 21.5 | 21.5 | 21.5 | 21.5 | 21.5 | 21.5 | 21.5 | 21.5 |
| R1234ze | mass% | | 78.5 | 77.75 | 77.0 | 75.5 | 73.5 | 71.0 | 68.5 | 66.0 | 63.5 |
| GWP | - | 2088 | 150 | 150 | 150 | 150 | 150 | 149 | 149 | 149 | 149 |
| COP ratio | % (relative to R404A) | 100.0 | 113.1 | 112.6 | 112.0 | 111.0 | 109.6 | 108.0 | 106.5 | 105.0 | 103.6 |
| Refrigerating capacity ratio | % (relative to R404A) | 100.0 | 66.4 | 67.9 | 69.3 | 72.1 | 75.8 | 80.6 | 85.3 | 90.2 | 95.2 |
| Condensation temperature glide | °C | 0 | 10.9 | 12.3 | 13.5 | 15.6 | 17.8 | 19.8 | 21.1 | 21.9 | 22.3 |
| Evaporation temperature glide | °C | 0.1 | 6.4 | 6.7 | 7.0 | 7.7 | 8.5 | 9.6 | 10.5 | 11.5 | 12.4 |

Table 8

| Item | Unit | Comp. Ex. 78 | Ex. 41 | Ex. 42 | Comp. Ex. 79 | Ex. 43 | Comp. Ex. 80 |
|---|---|---|---|---|---|---|---|
| | | L | T | M | A | S | B" |
| HFO-1132a | mass% | 1.5 | 1.9 | 10.0 | 77.9 | 10.0 | 1.5 |
| R32 | mass% | 22.0 | 21.5 | 12.5 | 22.1 | 21.5 | 21.5 |
| R1234ze | mass% | 76.5 | 76.6 | 77.5 | 0.0 | 68.5 | 77.0 |
| GWP | - | 153 | 150 | 89 | 150 | 149 | 150 |
| COP ratio | % (relative to R410A) | 112.0 | 111.7 | 105.7 | | 106.5 | 112.0 |
| Refrigerating capacity ratio | % (relative to R410A) | 70.0 | 70.0 | 70.0 | - | 85.3 | 69.3 |
| Condensation temperature glide | °C | 13.4 | 14.1 | 24.5 | | 21.1 | 13.5 |
| Evaporation temperature glide | °C | 7.1 | 7.2 | 8.4 | | 10.5 | 7.0 |

| Item | Unit | Comp. Ex. 81 | Comp. Ex. 82 | Comp. Ex. 83 | Comp. Ex. 84 | Comp. Ex. 85 | Ex. 44 | Comp. Ex. 86 | Ex. 45 | Comp. Ex. 87 |
|---|---|---|---|---|---|---|---|---|---|---|
| | | A" | B" | L | L' | M | T | A" | B"= L=T | M |
| HFO-1132a | mass% | 1.5 | 1.5 | 1.5 | 1.5 | 1.5 | 1.5 | 1.9 | 1.9 | 1.9 |
| R32 | mass% | 21.8 | 21.5 | 21.8 | 21.5 | 8.9 | 21.5 | 21.8 | 21.5 | 8.5 |
| R1234yf | mass% | 76.7 | 0.00 | 76.7 | 0.0 | 89.6 | 6.0 | 76.3 | 0.0 | 89.6 |
| R1234ze | mass% | 0.0 | 77.00 | 0.0 | 77.0 | 0.0 | 71.0 | 0.0 | 76.6 | 0.0 |
| GWP | - | 150 | 150 | 153 | 109 | 64 | 150 | 150 | 150 | 61 |
| COP ratio | % (relative to R404A) | 107.4 | 112.0 | 112.0 | 109.5 | 106.7 | 111.7 | 107.3 | 111.7 | 106.5 |
| Refrigerating capacity ratio | % (relative to R404A) | 91.7 | 69.3 | 70.0 | 70.0 | 70.0 | 70.9 | 92.4 | 70.0 | 70.0 |
| Condensation temperature glide | °C | 7.7 | 13.5 | 13.4 | 10.8 | 7.7 | 13.0 | 7.9 | 14.1 | 7.9 |
| Evaporation temperature glide | °C | 4.4 | 7.0 | 7.1 | 5.2 | 2.5 | 7.0 | 4.5 | 7.2 | 2.5 |

| Item | Unit | Comp. Ex. 88 | Ex. 46 | Ex. 47 | Comp. Ex. 89 | Comp. Ex. 90 | Ex. 48 | Ex. 49 | Comp. Ex. 91 |
|---|---|---|---|---|---|---|---|---|---|
| | | A" | B" | L | M | A" | B" | L | M |
| HFO-1132a | mass% | 6.0 | 6.0 | 6.0 | 6.0 | 10.0 | 10.0 | 10.0 | 10.0 |
| R32 | mass% | 21.8 | 21.5 | 16.8 | 4.6 | 21.8 | 21.6 | 12.5 | 0.9 |
| R1234yf | mass% | 72.2 | 0.00 | 0.0 | 89.4 | 68.2 | 0.0 | 0.0 | 89.1 |
| R1234ze | mass% | 0.0 | 72.50 | 77.2 | 0.0 | 0.0 | 68.4 | 77.5 | 0.0 |

(continued)

| Item | Unit | Comp. Ex. 88 | Ex. 46 | Ex. 47 | Comp. Ex. 89 | Comp. Ex. 90 | Ex. 48 | Ex. 49 | Comp. Ex. 91 |
|---|---|---|---|---|---|---|---|---|---|
| | | A" | B" | L | M | A" | B" | L | M |
| GWP | - | 150 | 150 | 118 | 35 | 150 | 150 | 89 | 10 |
| COP ratio | % (relative to R404A) | 105.9 | 109.0 | 108.7 | 105.3 | 104.5 | 106.5 | 105.7 | 104.3 |
| Refrigerating capacity ratio | % (relative to R404A) | 100.2 | 77.7 | 70.0 | 70.0 | 108.0 | 85.5 | 70.0 | 70.0 |
| Condensation temperature glide | °C | 9.9 | 18.6 | 19.9 | 10.5 | 11.3 | 21.1 | 24.5 | 12.4 |
| Evaporation temperature glide | °C | 5.5 | 8.9 | 7.9 | 2.7 | 6.4 | 106 | 8.4 | 3.0 |

Tables 7 and 8 indicate that the mixed refrigerants have a GWP of 150 or less and a refrigerating capacity ratio of 70% or more relative to that of R404A when they satisfy the following requirements.

Requirements

When the mass% of HFO-1132a, R32, and R1234ze based on their sum in the refrigerant is respectively represented by x, y, and z, coordinates (x,y,z) in a ternary composition diagram in which the sum of HFO-1132a, R32, and R1234ze is 100 mass% are within the range of a figure surrounded by straight lines ST, TM, and MS that connect the following three points:

point S (10.0, 21.5, 68.5),
point T (1.9, 21.5, 76.6), and
point M (10.0, 12.5, 77.5),
or on the straight lines.

Tables 7 and 8 indicate that the mixed refrigerants have a GWP of 150 or less and a refrigerating capacity ratio of 70% or more relative to that of R404A when they satisfy the following requirements.

Requirements

When the mass% of R32 is represented by x, the mass% of R1234yf is represented by y, the mass% of R1234ze is represented by z, and the mass% of HFO-1132a is represented by a, based on the sum of R32, R1234yf, R1234ze, and HFO-1132a in the refrigerant,

if $1.9 \geq x \geq 1.5$, coordinates (x,y,z) in a ternary composition diagram in which the sum of R32, R1234yf, and R1234ze is (100-a) mass% are within the range of a figure surrounded by straight lines A"T, TM, and MA'' that connect the following three points:

point A'' (21.8, -a+78.2, 0.0),
point T (21.5, -15.0a+28.5, 14.0a+50.0), and
point M ($0.0035a^2$-0.9809a+10.358, $-0.0035a^2$-0.0191a+89.642, 0.0), or on the straight lines A"T and TM (excluding the points A'' and M), or

if $10.0 \geq x > 1.9$, coordinates (x,y,z) in the ternary composition diagram are within the range of a figure surrounded by straight lines A"B", B''L, LM, and MA'' that connect the following four points:

point A'' (21.8, -a+78.2, 0.0),
point B'' (0.0108a+21.473, 0.0, -1.0108a+78.527),
point L (0.0098a$^2$-1.2237a+23.804, 0.0, -0.0098a$^2$+0.2237a+76.196), and
point M (0.0035a$^2$-0.9809a+10.358, -0.0035a$^2$-0.0191a+89.642, 0.0), or on the straight lines A"B" and LM
(excluding the points A", B'', L, and M).

Approximate expressions indicating the coordinates of each point were obtained by determining approximate expressions for the curves connecting three points, as shown in Table 9.

Table 9

| A" | | | | | |
|---|---|---|---|---|---|
| a=HFO-1132a | mass% | 1.5 | 1.9 | 6.0 | 10.0 |
| R32 | mass% | 21.8 | 21.8 | 21.8 | 21.8 |
| R1234yf | mass% | 76.7 | 76.3 | 72.2 | 68.2 |
| R1234ze | mass% | 0.0 | 0.0 | 0.0 | 0.0 |
| R32 approximate expression | | 21.8 | | | |
| R1234yf approximate expression | | -a+78.2 | | | |
| R1234ze approximate expression | | 0.0 | | | |

B"

| a=HFO-1132a | mass% | 1.5 | 1.9 | 6.0 | 10.0 |
|---|---|---|---|---|---|
| R32 | mass% | 21.5 | 21.5 | 21.5 | 21.6 |
| R1234yf | mass% | 0.0 | 0.0 | 0.0 | 0.0 |
| R1234ze | mass% | 77.0 | 76.6 | 72.5 | 68.4 |
| R32 approximate expression | | 0.0108a+21.473 | | | |
| R1234yf approximate expression | | 0.0 | | | |
| R1234ze approximate expression | | -1.0108a+ 78.527 | | | |

L

| a=HFO-1132a | mass% | 1.5 | 1.9 | 6.0 | 10.0 |
|---|---|---|---|---|---|
| R32 | mass% | 22.0 | 21.5 | 16.8 | 12.5 |
| R1234yf | mass% | 0.0 | 0.0 | 0.0 | 0.0 |
| R1234ze | mass% | 76.5 | 76.6 | 77.2 | 77.5 |
| R32 approximate expression | | 0.0098a$^2$-1.2237a+23.804 | | | |
| R1234yf approximate expression | | 0.0 | | | |
| R1234ze approximate expression | | -0.0098a$^2$+0.2237a+76.196 | | | |

M

| a=HFO-1132a | mass% | 1.5 | 1.9 | 6.0 | 10.0 |
|---|---|---|---|---|---|
| R32 | mass% | 8.9 | 8.5 | 4.6 | 0.9 |
| R1234yf | mass% | 89.6 | 89.6 | 89.4 | 89.1 |
| R1234ze | mass% | 0.0 | 0.0 | 0.0 | 0.0 |
| R32 approximate expression | | $0.0035a^2-0.9809a+10.358$ | | | |
| R1234yf approximate expression | | $-0.0035a^2-0.0191a+89.642$ | | | |
| R1234ze approximate expression | | 0.0 | | | |

T

| a=HFO-1132a | mass% | 1.5 | 1.9 |
|---|---|---|---|
| R32 | mass% | 21.5 | 21.5 |
| R1234yf | mass% | 6.0 | 0.0 |
| R1234ze | mass% | 71.0 | 76.6 |
| R32 approximate expression | | 21.5 | |
| R1234yf approximate expression | | $-15.0a+28.5$ | |
| R1234ze approximate expression | | $14.0a+50.0$ | |

The following mixed refrigerants were also evaluated in the same manner.

Table 10

| Item | Unit | Comp. Ex. 92 | Comp. Ex. 93 | Comp. Ex. 94 | Comp. Ex. 95 | Comp. Ex. 96 | Comp. Ex. 97 | Comp. Ex. 98 | Comp. Ex. 99 |
|---|---|---|---|---|---|---|---|---|---|
| HFO-1132a | mass% | 3.0 | 5.0 | 7.0 | 12.5 | 3.0 | 5.0 | 7.0 | 12.5 |
| R32 | mass% | 15.0 | 15.0 | 15.0 | 15.0 | 20.0 | 20.0 | 20.0 | 20.0 |
| R1234yf | mass% | 0.0 | 0.0 | 0.0 | 0.0 | 0.0 | 0.0 | 0.0 | 0.0 |
| R1234ze | mass% | 82.0 | 800 | 78.0 | 72.5 | 77.0 | 75.0 | 73.0 | 67.5 |
| GWP | - | 106 | 106 | 106 | 106 | 140 | 140 | 139 | 139 |
| COP ratio | % (relative to R410A) | 105.6 | 104.7 | 104.1 | 102.7 | 105.7 | 104.8 | 104.1 | 102.4 |
| Refrigerating capacity ratio | % (relative to R410A) | 54.9 | 58.5 | 62.1 | 71.5 | 59.5 | 63.0 | 66.5 | 75.6 |
| Condensation temperature glide | °C | 15.7 | 18.4 | 20.5 | 23.6 | 15.2 | 17.4 | 19.0 | 21.5 |

| Item | Unit | Comp. Ex. 100 | Comp. Ex. 101 | Ex. 50 | Comp. Ex. 102 | Comp. Ex. 103 | Ex. 51 | Ex. 52 | Comp. Ex. 104 |
|---|---|---|---|---|---|---|---|---|---|
| HFO-1132a | mass% | 3.0 | 5.0 | 7.0 | 12.5 | 3.0 | 5.0 | 7.0 | 12.5 |
| R32 | mass% | 25.0 | 25.0 | 25.0 | 25.0 | 30.0 | 30.0 | 30.0 | 30.0 |
| R1234yf | mass% | 0.0 | 0.0 | 0.0 | 0.0 | 0.0 | 0.0 | 0.0 | 0.0 |

(continued)

| Item | Unit | Comp. Ex. 100 | Comp. Ex. 101 | Ex. 50 | Comp. Ex. 102 | Comp. Ex. 103 | Ex. 51 | Ex. 52 | Comp. Ex. 104 |
|---|---|---|---|---|---|---|---|---|---|
| R1234ze | mass% | 72.0 | 70.0 | 68.0 | 62.5 | 67.0 | 65.0 | 63.0 | 57.5 |
| GWP | - | 173 | 173 | 173 | 173 | 207 | 206 | 206 | 206 |
| COP ratio | % (relative to R410A) | 105.5 | 104.6 | 103.8 | 101.9 | 105.1 | 104.2 | 103.4 | 101.3 |
| Refrigerating capacity ratio | % (relative to R410A) | 63.8 | 67.3 | 706 | 79.4 | 67.9 | 71.3 | 74.5 | 83.1 |
| Condensation temperature glide | °C | 14.4 | 16.2 | 17.5 | 19.5 | 13.4 | 14.9 | 16.0 | 17.6 |

| Item | Unit | Ex. 53 | Ex. 54 | Ex. 55 | Comp. Ex. 105 | Ex. 56 | Ex. 57 | Ex. 58 | Comp. Ex. 106 |
|---|---|---|---|---|---|---|---|---|---|
| HFO-1132a | mass% | 3.0 | 5.0 | 7.0 | 12.5 | 3.0 | 5.0 | 7.0 | 12.5 |
| R32 | mass% | 35.0 | 35.0 | 35.0 | 35.0 | 40.0 | 40.0 | 400 | 40.0 |
| R1234yf | mass% | 0.0 | 0.0 | 0.0 | 0.0 | 0.0 | 0.0 | 0.0 | 0.0 |
| R1234ze | mass% | 62.0 | 60.0 | 58.0 | 52.5 | 57.0 | 55.0 | 53.0 | 47.5 |
| GWP | - | 240 | 240 | 240 | 240 | 273 | 273 | 273 | 273 |
| COP ratio | % (relative to R410A) | 104.7 | 103.7 | 102.9 | 100.8 | 104.2 | 103.3 | 102.5 | 100.4 |
| Refrigerating capacity ratio | % (relative to R410A) | 71.8 | 75.1 | 78.3 | 86.8 | 75.6 | 78.8 | 82.0 | 90.4 |
| Condensation temperature glide | °C | 12.3 | 13.6 | 14.5 | 15.8 | 11.2 | 12.2 | 13.0 | 14.1 |

| Item | Unit | Ex. 59 | Ex. 60 | Ex. 61 | Comp. Ex. 107 | Ex. 62 | Ex. 63 | Ex. 64 | Comp. Ex. 108 |
|---|---|---|---|---|---|---|---|---|---|
| HFO-1132a | mass% | 3.0 | 5.0 | 7.0 | 12.5 | 3.0 | 5.0 | 7.0 | 12.5 |
| R32 | mass% | 45.0 | 45.0 | 45.0 | 45.0 | 50.0 | 50.0 | 50.0 | 50.0 |
| R1234yf | mass% | 0.0 | 0.0 | 0.0 | 0.0 | 0.0 | 0.0 | 0.0 | 0.0 |
| R1234ze | mass% | 52.0 | 50.0 | 48.0 | 42.5 | 47.0 | 45.0 | 43.0 | 37.5 |
| GWP | - | 307 | 307 | 307 | 306 | 340 | 340 | 340 | 340 |
| COP ratio | % (relative to R410A) | 103.7 | 102.9 | 102.1 | 100.0 | 103.4 | 102.5 | 101.8 | 99.8 |
| Refrigerating capacity ratio | % (relative to R410A) | 79.3 | 82.5 | 85.6 | 94.0 | 83.0 | 86.1 | 89.2 | 97.5 |

(continued)

| Item | Unit | Ex. 59 | Ex. 60 | Ex. 61 | Comp. Ex. 107 | Ex. 62 | Ex. 63 | Ex. 64 | Comp. Ex. 108 |
|---|---|---|---|---|---|---|---|---|---|
| Condensation temperature glide | °C | 10.0 | 10.9 | 11.6 | 12.5 | 8.9 | 9.7 | 10.2 | 11.0 |

Table 10 (continued)

| Item | Unit | Ex. 65 | Ex. 66 | Ex. 67 | Comp. Ex. 109 | Ex. 68 | Ex. 69 | Ex. 70 | Comp. Ex. 110 |
|---|---|---|---|---|---|---|---|---|---|
| HFO-1132a | mass% | 3.0 | 5.0 | 7.0 | 12.5 | 3.0 | 5.0 | 7.0 | 12.5 |
| R32 | mass% | 55.0 | 55.0 | 55.0 | 55.0 | 60.0 | 60.0 | 60.0 | 60.0 |
| R1234yf | mass% | 0.0 | 0.0 | 0.0 | 0.0 | 0.0 | 0.0 | 0.0 | 0.0 |
| R1234ze | mass% | 42.0 | 40.0 | 38.0 | 32.5 | 37.0 | 35.0 | 33.0 | 27.5 |
| GWP | - | 374 | 374 | 374 | 373 | 407 | 407 | 407 | 407 |
| COP ratio | % (relative to R410A) | 103.0 | 102.3 | 101.5 | 99.6 | 102.8 | 102.0 | 101.3 | 99.5 |
| Refrigerating capacity ratio | % (relative to R410A) | 86.5 | 89.7 | 92.8 | 101.0 | 900 | 93.2 | 96.2 | 104.4 |
| Condensation temperature glide | °C | 7.7 | 8.4 | 8.9 | 9.6 | 6.7 | 7.3 | 7.8 | 8.3 |

| Item | Unit | Ex. 71 | Ex. 72 | Ex. 73 | Comp. Ex. 111 | Ex. 74 | Ex. 75 | Ex. 76 | Comp. Ex. 112 |
|---|---|---|---|---|---|---|---|---|---|
| HFO-1132a | mass% | 3.0 | 5.0 | 7.0 | 12.5 | 3.0 | 5.0 | 7.0 | 12.5 |
| R32 | mass% | 65.0 | 65.0 | 65.0 | 65.0 | 70.0 | 70.0 | 70.0 | 70.0 |
| R1234yf | mass% | 0.0 | 0.0 | 0.0 | 0.0 | 0.0 | 0.0 | 0.0 | 0.0 |
| R1234ze | mass% | 32.0 | 30.0 | 28.0 | 22.5 | 27.0 | 25.0 | 23.0 | 17.5 |
| GWP | - | 441 | 441 | 441 | 440 | 474 | 474 | 474 | 474 |
| COP ratio | % (relative to R410A) | 102.6 | 101.9 | 101.2 | 99.4 | 102.4 | 101.8 | 101.1 | 99.3 |
| Refrigerating capacity ratio | % (relative to R410A) | 93.5 | 96.6 | 99.6 | 107.7 | 96.8 | 99.9 | 102.9 | 110.9 |
| Condensation temperature glide | °C | 5.7 | 6.2 | 6.7 | 7.2 | 4.8 | 5.3 | 5.6 | 6.1 |

| Item | Unit | Comp. Ex. 113 | Comp. Ex. 114 | Comp. Ex. 115 | Comp. Ex. 116 |
|---|---|---|---|---|---|
| HFO-1132a | mass% | 3.0 | 5.0 | 7.0 | 12.5 |
| R32 | mass% | 80.0 | 800 | 800 | 800 |

(continued)

| Item | Unit | Comp. Ex. 113 | Comp. Ex. 114 | Comp. Ex. 115 | Comp. Ex. 116 |
|---|---|---|---|---|---|
| R1234yf | mass% | 0.0 | 0.0 | 0.0 | 0.0 |
| R1234ze | mass% | 17.0 | 15.0 | 13.0 | 7.5 |
| GWP | - | 541 | 541 | 541 | 541 |
| COP ratio | % (relative to R410A) | 102.2 | 101.5 | 100.9 | 99.2 |
| Refrigerating capacity ratio | % (relative to R410A) | 103.1 | 106.1 | 109.0 | 116.8 |
| Condensation temperature glide | °C | 3.1 | 3.6 | 3.9 | 4.4 |

Table 11

| Item | Unit | Comp. Ex. 117 | Comp. Ex. 118 | Comp. Ex. 119 | Comp. Ex. 120 | Comp. Ex. 121 | Comp. Ex. 122 | Comp. Ex. 123 | Ex. 77 |
|---|---|---|---|---|---|---|---|---|---|
| HFO-1132a | mass% | 1.5 | 1.5 | 1.5 | 1.5 | 1.5 | 1.5 | 1.5 | 1.5 |
| R32 | mass% | 20.0 | 20.0 | 20.0 | 20.0 | 20.0 | 20.0 | 20.0 | 30.0 |
| R1234yf | mass% | 68.5 | 58.5 | 48.5 | 38.5 | 28.5 | 18.5 | 8.5 | 58.5 |
| R1234ze | mass% | 10.0 | 20.0 | 30.0 | 40.0 | 50.0 | 60.0 | 70.0 | 10.0 |
| GWP | - | 138 | 139 | 139 | 139 | 139 | 139 | 140 | 205 |
| COP ratio | % (relative to R410A) | 103.5 | 103.9 | 104.4 | 104.9 | 105.4 | 105.8 | 106.3 | 102.7 |
| Refrigerating capacity ratio | % (relative to R410A) | 65.2 | 64.1 | 63.0 | 61.7 | 60.5 | 59.2 | 57.9 | 73.3 |
| Condensation temperature glide | °C | 8.1 | 8.8 | 9.4 | 10.1 | 10.9 | 11.7 | 12.4 | 6.9 |

| Item | Unit | Ex. 78 | Ex. 79 | Comp. Ex. 124 | Comp. Ex. 125 | Comp. Ex. 126 | Ex. 80 | Ex. 81 | Ex. 82 |
|---|---|---|---|---|---|---|---|---|---|
| HFO-1132a | mass% | 1.5 | 1.5 | 1.5 | 1.5 | 1.5 | 1.5 | 1.5 | 1.5 |
| R32 | mass% | 30.0 | 30.0 | 30.0 | 30.0 | 30.0 | 40.0 | 40.0 | 40.0 |
| R1234yf | mass% | 48.5 | 38.5 | 28.5 | 18.5 | 8.5 | 48.5 | 38.5 | 28.5 |
| R1234ze | mass% | 20.0 | 30.0 | 40.0 | 50.0 | 60.0 | 10.0 | 20.0 | 30.0 |
| GWP | - | 206 | 206 | 206 | 206 | 206 | 273 | 273 | 273 |
| COP ratio | % (relative to R410A) | 103.3 | 103.8 | 104.4 | 104.9 | 105.5 | 102.3 | 102.8 | 103.3 |
| Refrigerating capacity ratio | % (relative to R410A) | 72.0 | 70.7 | 69.4 | 68.0 | 66.6 | 80.5 | 79.0 | 77.5 |
| Condensation temperature glide | °C | 7.7 | 8.5 | 9.4 | 10.3 | 11.2 | 5.5 | 6.4 | 7.3 |

| Item | Unit | Ex. 83 | Ex. 84 | Ex. 85 | Ex. 86 | Ex. 87 | Ex. 88 | Ex. 89 | Ex. 90 |
|---|---|---|---|---|---|---|---|---|---|
| HFO-1132a | mass% | 1.5 | 1.5 | 1.5 | 1.5 | 1.5 | 1.5 | 1.5 | 1.5 |
| R32 | mass% | 40.0 | 40.0 | 50.0 | 50.0 | 50.0 | 50.0 | 60.0 | 60.0 |
| R1234yf | mass% | 18.5 | 8.5 | 38.5 | 28.5 | 18.5 | 8.5 | 28.5 | 18.5 |
| R1234ze | mass% | 40.0 | 50.0 | 10.0 | 20.0 | 30.0 | 40.0 | 10.0 | 20.0 |
| GWP | - | 273 | 273 | 340 | 340 | 340 | 340 | 407 | 407 |
| COP ratio | % (relative to R410A) | 103.9 | 104.4 | 102.2 | 102.6 | 103.1 | 103.6 | 102.2 | 102.6 |
| Refrigerating capacity ratio | % (relative to R410A) | 76.0 | 74.5 | 86.9 | 85.3 | 83.6 | 82.0 | 92.7 | 91.0 |
| Condensation temperature glide | °C | 8.3 | 9.3 | 4.2 | 5.2 | 6.2 | 7.2 | 3.3 | 4.2 |

| Item | Unit | Ex. 91 | Ex. 92 | Ex. 93 | Comp. Ex. 127 |
|---|---|---|---|---|---|
| HFO-1132a | mass% | 1.5 | 1.5 | 1.5 | 1.5 |
| R32 | mass% | 60.0 | 70.0 | 70.0 | 80.0 |
| R1234yf | mass% | 8.5 | 18.5 | 8.5 | 8.5 |
| R1234ze | mass% | 30.0 | 10.0 | 20.0 | 10.0 |
| GWP | - | 407 | 474 | 474 | 541 |
| COP ratio | % (relative to R410A) | 103.0 | 102.3 | 102.7 | 102.4 |
| Refrigerating capacity ratio | % (relative to R410A) | 89.2 | 97.8 | 96.0 | 102.4 |
| Condensation temperature glide | °C | 5.2 | 2.5 | 3.4 | 2.0 |

Table 12

| Item | Unit | Comp. Ex. 128 | Comp. Ex. 129 | Comp. Ex. 130 | Comp. Ex. 131 | Comp. Ex. 132 | Comp. Ex. 133 | Comp. Ex. 134 | Ex. 94 |
|---|---|---|---|---|---|---|---|---|---|
| HFO-1132a | mass% | 3.0 | 3.0 | 3.0 | 3.0 | 3.0 | 3.0 | 3.0 | 3.0 |
| R32 | mass% | 20.0 | 20.0 | 20.0 | 20.0 | 20.0 | 20.0 | 20.0 | 30.0 |
| R1234yf | mass% | 67.0 | 57.0 | 47.0 | 37.0 | 27.0 | 17.0 | 7.0 | 57.0 |
| R1234ze | mass% | 10.0 | 20.0 | 30.0 | 40.0 | 50.0 | 60.0 | 70.0 | 10.0 |
| GWP | - | 138 | 139 | 139 | 139 | 139 | 139 | 140 | 205 |
| COP ratio | % (relative to R410A) | 103.0 | 103.4 | 103.9 | 104.3 | 104.7 | 105.1 | 105.5 | 102.2 |
| Refrigerating capacity ratio | % (relative to R410A) | 67.3 | 66.2 | 65.1 | 64.0 | 62.8 | 61.6 | 60.4 | 75.3 |
| Condensation temperature glide | °C | 9.0 | 9.8 | 10.6 | 11.5 | 12.4 | 13.4 | 14.4 | 7.6 |

| Item | Unit | Ex. 95 | Ex. 96 | Ex. 97 | Comp. Ex. 135 | Ex. 98 | Ex. 99 | Ex. 100 | Ex. 101 |
|---|---|---|---|---|---|---|---|---|---|
| HFO-1132a | mass% | 3.0 | 3.0 | 3.0 | 3.0 | 3.0 | 3.0 | 3.0 | 3.0 |
| R32 | mass% | 30.0 | 30.0 | 30.0 | 30.0 | 40.0 | 40.0 | 40.0 | 40.0 |
| R1234yf | mass% | 47.0 | 37.0 | 27.0 | 7.0 | 47.0 | 37.0 | 27.0 | 17.0 |
| R1234ze | mass% | 20.0 | 30.0 | 40.0 | 60.0 | 10.0 | 20.0 | 30.0 | 40.0 |
| GWP | - | 206 | 206 | 206 | 206 | 273 | 273 | 273 | 273 |
| COP ratio | % (relative to R410A) | 102.7 | 103.2 | 103.8 | 104.8 | 101.8 | 102.3 | 102.8 | 103.3 |
| Refrigerating capacity ratio | % (relative to R410A) | 74.1 | 72.8 | 71.5 | 68.9 | 82.5 | 81.1 | 79.6 | 78.1 |
| Condensation temperature glide | °C | 8.5 | 9.5 | 10.5 | 12.6 | 6.1 | 7.1 | 8.1 | 9.2 |

| Item | Unit | Ex. 102 | Ex. 103 | Ex. 104 | Ex. 105 | Ex. 106 | Ex. 107 | Ex. 108 | Ex. 109 |
|---|---|---|---|---|---|---|---|---|---|
| HFO-1132a | mass% | 3.0 | 3.0 | 3.0 | 3.0 | 3.0 | 3.0 | 3.0 | 3.0 |
| R32 | mass% | 40.0 | 50.0 | 50.0 | 50.0 | 50.0 | 60.0 | 60.0 | 60.0 |
| R1234yf | mass% | 7.0 | 37.0 | 27.0 | 17.0 | 7.0 | 27.0 | 17.0 | 7.0 |
| R1234ze | mass% | 50.0 | 10.0 | 20.0 | 30.0 | 40.0 | 10.0 | 20.0 | 30.0 |
| GWP | - | 273 | 340 | 340 | 340 | 340 | 407 | 407 | 407 |
| COP ratio | % (relative to R410A) | 103.8 | 101.7 | 102.1 | 102.6 | 103.0 | 101.7 | 102.1 | 102.5 |
| Refrigerating capacity ratio | % (relative to R410A) | 76.7 | 88.9 | 87.4 | 85.7 | 84.1 | 94.7 | 93.0 | 91.3 |
| Condensation temperature glide | °C | 10.4 | 4.8 | 5.8 | 6.9 | 8.1 | 3.8 | 4.8 | 5.9 |

| Item | Unit | Ex. 110 | Ex. 111 | Comp. Ex. 136 |
|---|---|---|---|---|
| HFO-1132a | mass% | 3.0 | 3.0 | 3.0 |
| R32 | mass% | 70.0 | 70.0 | 80.0 |
| R1234yf | mass% | 17.0 | 7.0 | 7.0 |
| R1234ze | mass% | 10.0 | 20.0 | 10.0 |
| GWP | - | 474 | 474 | 541 |
| COP ratio | % (relative to R410A) | 101.8 | 102.2 | 101.9 |
| Refrigerating capacity ratio | % (relative to R410A) | 99.8 | 98.1 | 104.3 |
| Condensation temperature glide | °C | 3.1 | 4.0 | 2.5 |

Table 13

| Item | Unit | Comp. Ex. 137 | Comp. Ex. 138 | Comp. Ex. 139 | Comp. Ex. 140 | Comp. Ex. 141 | Comp. Ex. 142 | Ex. 112 | Ex. 113 |
|---|---|---|---|---|---|---|---|---|---|
| HFO-1132a | mass% | 5.0 | 5.0 | 5.0 | 5.0 | 5.0 | 5.0 | 5.0 | 5.0 |
| R32 | mass% | 20.0 | 20.0 | 20.0 | 20.0 | 20.0 | 20.0 | 30.0 | 30.0 |
| R1234yf | mass% | 55.0 | 45.0 | 35.0 | 25.0 | 15.0 | 5.0 | 55.0 | 45.0 |
| R1234ze | mass% | 20.0 | 30.0 | 40.0 | 50.0 | 60.0 | 70.0 | 10.0 | 20.0 |
| GWP | - | 138 | 139 | 139 | 139 | 139 | 139 | 205 | 206 |
| COP ratio | % (relative to R410A) | 102.8 | 103.2 | 103.6 | 104.0 | 104.3 | 104.7 | 101.6 | 102.1 |
| Refrigerating capacity ratio | % (relative to R410A) | 69.0 | 68.0 | 66.9 | 65.8 | 64.7 | 63.6 | 78.0 | 76.9 |
| Condensation temperature glide | °C | 11.0 | 12.0 | 13.0 | 14.2 | 15.4 | 16.7 | 8.4 | 9.4 |

| Item | Unit | Ex. 114 | Ex. 115 | Ex. 116 | Ex. 117 | Ex. 118 | Ex. 119 | Ex. 120 | Ex. 121 |
|---|---|---|---|---|---|---|---|---|---|
| HFO-1132a | mass% | 5.0 | 5.0 | 5.0 | 5.0 | 5.0 | 5.0 | 5.0 | 5.0 |
| R32 | mass% | 30.0 | 30.0 | 30.0 | 30.0 | 40.0 | 40.0 | 40.0 | 40.0 |
| R1234yf | mass% | 35.0 | 25.0 | 15.0 | 5.0 | 45.0 | 35.0 | 25.0 | 15.0 |
| R1234ze | mass% | 30.0 | 40.0 | 50.0 | 60.0 | 10.0 | 20.0 | 30.0 | 40.0 |
| GWP | - | 206 | 206 | 206 | 206 | 272 | 273 | 273 | 273 |
| COP ratio | % (relative to R410A) | 102.5 | 103.0 | 103.5 | 104.0 | 101.1 | 101.6 | 102.1 | 102.5 |
| Refrigerating capacity ratio | % (relative to R410A) | 75.7 | 74.4 | 73.1 | 71.9 | 85.2 | 83.8 | 82.4 | 81.0 |
| Condensation temperature glide | °C | 10.5 | 11.7 | 13.0 | 14.2 | 6.8 | 7.9 | 9.1 | 10.3 |

| Item | Unit | Ex. 122 | Ex. 123 | Ex. 124 | Ex. 125 | Ex. 126 | Ex. 127 | Ex. 128 | Ex. 129 |
|---|---|---|---|---|---|---|---|---|---|
| HFO-1132a | mass% | 5.0 | 5.0 | 5.0 | 5.0 | 5.0 | 5.0 | 5.0 | 5.0 |
| R32 | mass% | 40.0 | 50.0 | 50.0 | 50.0 | 50.0 | 60.0 | 60.0 | 60.0 |
| R1234yf | mass% | 5.0 | 35.0 | 25.0 | 15.0 | 5.0 | 25.0 | 15.0 | 5.0 |
| R1234ze | mass% | 50.0 | 10.0 | 20.0 | 30.0 | 40.0 | 10.0 | 20.0 | 30.0 |
| GWP | - | 273 | 340 | 340 | 340 | 340 | 407 | 407 | 407 |
| COP ratio | % (relative to R410A) | 103.0 | 101.1 | 101.5 | 101.9 | 102.3 | 101.1 | 101.5 | 101.9 |
| Refrigerating capacity ratio | % (relative to R410A) | 796 | 91.6 | 90.1 | 88.5 | 86.9 | 97.4 | 95.7 | 94.0 |

(continued)

| Item | Unit | Ex. 122 | Ex. 123 | Ex. 124 | Ex. 125 | Ex. 126 | Ex. 127 | Ex. 128 | Ex. 129 |
|---|---|---|---|---|---|---|---|---|---|
| Condensation temperature glide | °C | 11.6 | 5.5 | 6.6 | 7.8 | 9.0 | 4.5 | 5.5 | 6.7 |

| Item | Unit | Ex. 130 | Ex. 131 | Comp. Ex. 143 |
|---|---|---|---|---|
| HFO-1132a | mass% | 5.0 | 5.0 | 5.0 |
| R32 | mass% | 70.0 | 70.0 | 80.0 |
| R1234yf | mass% | 15.0 | 5.0 | 5.0 |
| R1234ze | mass% | 10.0 | 20.0 | 10.0 |
| GWP | - | 474 | 474 | 541 |
| COP ratio | % (relative to R410A) | 101.2 | 101.6 | 101.3 |
| Refrigerating capacity ratio | % (relative to R410A) | 102.4 | 100.7 | 107.0 |
| Condensation temperature glide | °C | 3.7 | 4.7 | 3.1 |

Table 14

| Item | Unit | Comp. Ex. 144 | Comp. Ex. 145 | Comp. Ex. 146 | Comp. Ex. 147 | Comp. Ex. 148 | Comp. Ex. 149 | Comp. Ex. 150 | Comp. Ex. 151 |
|---|---|---|---|---|---|---|---|---|---|
| HFO-1132a | mass% | 7.5 | 7.5 | 7.5 | 7.5 | 7.5 | 7.5 | 7.5 | 7.5 |
| R32 | mass% | 10.0 | 10.0 | 10.0 | 10.0 | 10.0 | 10.0 | 10.0 | 10.0 |
| R1234yf | mass% | 72.5 | 62.5 | 52.5 | 42.5 | 32.5 | 22.5 | 12.5 | 2.5 |
| R1234ze | mass% | 10.0 | 20.0 | 30.0 | 40.0 | 50.0 | 60.0 | 70.0 | 80.0 |
| GWP | - | 71 | 71 | 71 | 72 | 72 | 72 | 72 | 72 |
| COP ratio | % (relative to R410A) | 102.5 | 102.7 | 102.9 | 103.1 | 103.3 | 103.4 | 103.5 | 103.6 |
| Refrigerating capacity ratio | % (relative to R410A) | 63.9 | 63.3 | 62.5 | 61.8 | 61.0 | 60.1 | 59.3 | 58.5 |
| Condensation temperature glide | °C | 12.4 | 13.3 | 14.4 | 15.6 | 16.9 | 18.4 | 20.1 | 21.8 |

| Item | Unit | Ex. 132 | Ex. 133 | Ex. 134 | Comp. Ex. 152 | Comp. Ex. 153 | Comp. Ex. 154 | Ex. 135 | Ex. 136 |
|---|---|---|---|---|---|---|---|---|---|
| HFO-1132a | mass% | 7.5 | 7.5 | 7.5 | 7.5 | 7.5 | 7.5 | 7.5 | 7.5 |
| R32 | mass% | 20.0 | 20.0 | 20.0 | 20.0 | 20.0 | 20.0 | 30.0 | 30.0 |
| R1234yf | mass% | 62.5 | 52.5 | 42.5 | 22.5 | 12.5 | 2.5 | 52.5 | 42.5 |
| R1234ze | mass% | 10.0 | 20.0 | 30.0 | 50.0 | 60.0 | 70.0 | 10.0 | 20.0 |
| GWP | - | 138 | 138 | 139 | 139 | 139 | 139 | 205 | 205 |
| COP ratio | % (relative to R410A) | 101.7 | 102.0 | 102.4 | 103.2 | 103.5 | 103.8 | 100.8 | 101.2 |

(continued)

| Item | Unit | Ex. 132 | Ex. 133 | Ex. 134 | Comp. Ex. 152 | Comp. Ex. 153 | Comp. Ex. 154 | Ex. 135 | Ex. 136 |
|---|---|---|---|---|---|---|---|---|---|
| Refrigerating capacity ratio | % (relative to R410A) | 73.4 | 72.5 | 71.6 | 69.6 | 68.6 | 67.6 | 81.4 | 80.3 |
| Condensation temperature glide | °C | 11.2 | 12.2 | 13.3 | 15.9 | 17.4 | 19.0 | 9.3 | 10.4 |

| Item | Unit | Ex. 137 | Ex. 138 | Ex. 139 | Ex. 140 | Ex. 141 | Ex. 142 | Ex. 143 | Ex. 144 |
|---|---|---|---|---|---|---|---|---|---|
| HFO-1132a | mass% | 7.5 | 7.5 | 7.5 | 7.5 | 7.5 | 7.5 | 7.5 | 7.5 |
| R32 | mass% | 30.0 | 30.0 | 30.0 | 30.0 | 40.0 | 40.0 | 40.0 | 40.0 |
| R1234yf | mass% | 32.5 | 22.5 | 12.5 | 2.5 | 42.5 | 32.5 | 22.5 | 12.5 |
| R1234ze | mass% | 30.0 | 40.0 | 50.0 | 60.0 | 10.0 | 20.0 | 30.0 | 40.0 |
| GWP | - | 206 | 206 | 206 | 206 | 272 | 273 | 273 | 273 |
| COP ratio | % (relative to R410A) | 101.7 | 102.1 | 102.6 | 103.1 | 100.4 | 100.8 | 101.2 | 101.7 |
| Refrigerating capacity ratio | % (relative to R410A) | 79.1 | 78.0 | 76.8 | 75.6 | 88.5 | 87.2 | 85.9 | 84.5 |
| Condensation temperature glide | °C | 11.6 | 13.0 | 14.4 | 15.9 | 7.6 | 8.7 | 100 | 11.4 |

| Item | Unit | Ex. 145 | Ex. 146 | Ex. 147 | Ex. 148 | Ex. 149 | Ex. 150 | Ex. 151 | Ex. 152 |
|---|---|---|---|---|---|---|---|---|---|
| HFO-1132a | mass% | 7.5 | 7.5 | 7.5 | 7.5 | 7.5 | 7.5 | 7.5 | 7.5 |
| R32 | mass% | 40.0 | 50.0 | 50.0 | 50.0 | 50.0 | 60.0 | 60.0 | 60.0 |
| R1234yf | mass% | 2.5 | 32.5 | 22.5 | 12.5 | 2.5 | 22.5 | 12.5 | 2.5 |
| R1234ze | mass% | 50.0 | 10.0 | 20.0 | 30.0 | 40.0 | 10.0 | 20.0 | 30.0 |
| GWP | - | 273 | 339 | 340 | 340 | 340 | 407 | 407 | 407 |
| COP ratio | % (relative to R410A) | 102.2 | 100.3 | 100.7 | 101.1 | 101.5 | 100.4 | 100.7 | 101.1 |
| Refrigerating capacity ratio | % (relative to R410A) | 83.1 | 950 | 93.5 | 91.9 | 90.4 | 100.7 | 99.1 | 97.4 |
| Condensation temperature glide | °C | 12.8 | 6.2 | 7.3 | 8.6 | 10.0 | 5.1 | 6.3 | 7.5 |

| Item | Unit | Ex. 153 | Ex. 154 | Comp. Ex. 155 |
|---|---|---|---|---|
| HFO-1132a | mass% | 7.5 | 7.5 | 7.5 |
| R32 | mass% | 70.0 | 70.0 | 80.0 |
| R1234yf | mass% | 12.5 | 2.5 | 2.5 |

(continued)

| Item | Unit | Ex. 153 | Ex. 154 | Comp. Ex. 155 |
|---|---|---|---|---|
| R1234ze | mass% | 10.0 | 20.0 | 10.0 |
| GWP | - | 474 | 474 | 541 |
| COP ratio | % (relative to R410A) | 100.5 | 100.8 | 100.6 |
| Refrigerating capacity ratio | % (relative to R410A) | 105.7 | 104.1 | 110.2 |
| Condensation temperature glide | °C | 4.3 | 5.4 | 3.7 |

Table 15

| Item | Unit | Comp. Ex. 156 | Comp. Ex. 157 | Comp. Ex. 158 | Comp. Ex. 159 | Comp. Ex. 160 | Comp. Ex. 161 | Comp. Ex. 162 | Ex. 155 |
|---|---|---|---|---|---|---|---|---|---|
| HFO-1132a | mass% | 10.0 | 10.0 | 10.0 | 10.0 | 10.0 | 10.0 | 10.0 | 10.0 |
| R32 | mass% | 10.0 | 10.0 | 10.0 | 10.0 | 10.0 | 10.0 | 10.0 | 20.0 |
| R1234yf | mass% | 70.0 | 60.0 | 50.0 | 40.0 | 30.0 | 20.0 | 10.0 | 60.0 |
| R1234ze | mass% | 10.0 | 20.0 | 30.0 | 40.0 | 50.0 | 60.0 | 70.0 | 10.0 |
| GWP | - | 71 | 71 | 71 | 72 | 72 | 72 | 72 | 138 |
| COP ratio | % (relative to R410A) | 101.9 | 102.1 | 102.3 | 102.5 | 102.7 | 102.9 | 103.0 | 101.0 |
| Refrigerating capacity ratio | % (relative to R410A) | 67.5 | 66.9 | 66.2 | 65.5 | 64.9 | 64.2 | 63.5 | 76.8 |
| Condensation temperature glide | °C | 13.6 | 14.7 | 15.9 | 17.3 | 18.8 | 20.5 | 22.3 | 12.0 |

| Item | Unit | Ex. 156 | Ex. 157 | Ex. 158 | Ex. 159 | Ex. 160 | Ex. 161 | Ex. 162 | Ex. 163 |
|---|---|---|---|---|---|---|---|---|---|
| HFO-1132a | mass% | 10.0 | 10.0 | 10.0 | 10.0 | 10.0 | 10.0 | 10.0 | 10.0 |
| R32 | mass% | 20.0 | 20.0 | 20.0 | 20.0 | 20.0 | 30.0 | 30.0 | 30.0 |
| R1234yf | mass% | 50.0 | 40.0 | 30.0 | 20.0 | 10.0 | 50.0 | 40.0 | 30.0 |
| R1234ze | mass% | 20.0 | 30.0 | 40.0 | 50.0 | 60.0 | 10.0 | 20.0 | 30.0 |
| GWP | - | 138 | 139 | 139 | 139 | 139 | 205 | 205 | 206 |
| COP ratio | % (relative to R410A) | 101.3 | 101.7 | 102.0 | 102.4 | 102.8 | 100.0 | 100.4 | 100.9 |
| Refrigerating capacity ratio | % (relative to R410A) | 76.0 | 75.1 | 74.2 | 73.3 | 72.4 | 84.7 | 83.7 | 82.6 |
| Condensation temperature glide | °C | 13.1 | 14.4 | 15.8 | 17.3 | 18.9 | 10.0 | 11.2 | 12.5 |

| Item | Unit | Ex. 164 | Ex. 165 | Ex. 166 | Ex. 167 | Ex. 168 | Ex. 169 | Ex. 170 | Ex. 171 |
|---|---|---|---|---|---|---|---|---|---|
| HFO-1132a | mass% | 10.0 | 10.0 | 10.0 | 10.0 | 10.0 | 10.0 | 10.0 | 10.0 |
| R32 | mass% | 30.0 | 30.0 | 40.0 | 40.0 | 40.0 | 40.0 | 50.0 | 50.0 |

(continued)

| Item | Unit | Ex. 164 | Ex. 165 | Ex. 166 | Ex. 167 | Ex. 168 | Ex. 169 | Ex. 170 | Ex. 171 |
|---|---|---|---|---|---|---|---|---|---|
| R1234yf | mass% | 20.0 | 10.0 | 40.0 | 30.0 | 20.0 | 10.0 | 30.0 | 20.0 |
| R1234ze | mass% | 40.0 | 50.0 | 10.0 | 20.0 | 30.0 | 40.0 | 10.0 | 20.0 |
| GWP | - | 206 | 206 | 272 | 273 | 273 | 273 | 339 | 340 |
| COP ratio | % (relative to R410A) | 101.3 | 101.8 | 99.6 | 100.0 | 100.4 | 100.9 | 99.6 | 99.9 |
| Refrigerating capacity ratio | % (relative to R410A) | 81.5 | 80.4 | 91.8 | 90.6 | 89.3 | 87.9 | 98.2 | 96.8 |
| Condensation temperature glide | °C | 13.9 | 15.5 | 8.1 | 9.4 | 10.8 | 12.2 | 6.7 | 8.0 |

| Item | Unit | Ex. 172 | Ex. 173 | Ex. 174 | Ex. 175 | Comp. Ex. 163 |
|---|---|---|---|---|---|---|
| HFO-1132a | mass% | 10.0 | 10.0 | 10.0 | 10.0 | 10.0 |
| R32 | mass% | 50.0 | 60.0 | 60.0 | 70.0 | 80.0 |
| R1234yf | mass% | 10.0 | 20.0 | 10.0 | 10.0 | 5.0 |
| R1234ze | mass% | 30.0 | 10.0 | 20.0 | 10.0 | 5.0 |
| GWP | - | 340 | 407 | 407 | 474 | 541 |
| COP ratio | % (relative to R410A) | 100.3 | 99.7 | 100.0 | 99.8 | 99.8 |
| Refrigerating capacity ratio | % (relative to R410A) | 95.3 | 103.9 | 102.4 | 108.9 | 114.1 |
| Condensation temperature glide | °C | 9.3 | 5.6 | 6.9 | 4.9 | 3.7 |

Table 16

| Item | Unit | Comp. Ex. 164 | Comp. Ex. 165 | Comp. Ex. 166 | Comp. Ex. 167 | Comp. Ex. 168 | Ex. 176 | Comp. Ex. 169 | Comp. Ex. 170 |
|---|---|---|---|---|---|---|---|---|---|
| HFO-1132a | mass% | 10.0 | 12.5 | 7.5 | 12.5 | 6.3 | 8.8 | 11.3 | 4.0 |
| R32 | mass% | 10.0 | 10.0 | 12.5 | 12.5 | 15.0 | 15.0 | 15.0 | 17.5 |
| R1234yf | mass% | 0.0 | 0.0 | 0.0 | 0.0 | 0.0 | 0.0 | 0.0 | 0.0 |
| R1234ze | mass% | 80.0 | 77.5 | 80.0 | 75.0 | 78.8 | 76.3 | 73.8 | 78.5 |
| GWP | - | 72 | 72 | 89 | 89 | 106 | 106 | 106 | 123 |
| COP ratio | % (relative to R404A) | 105.6 | 103.9 | 107.4 | 104.1 | 108.4 | 106.7 | 105.2 | 110.1 |
| Refrigerating capacity ratio | % (relative to R404A) | 66.0 | 70.0 | 65.9 | 74.2 | 67.7 | 72.0 | 76.4 | 67.6 |
| Condensation temperature glide | °C | 25.5 | 26.9 | 22.6 | 25.8 | 20.6 | 22.8 | 24.2 | 17.5 |

| Item | Unit | Ex. 177 | Ex. 178 | Comp. Ex. 171 | Comp. Ex. 172 | Ex. 179 | Ex. 180 | Ex. 181 | Comp. Ex. 173 |
|---|---|---|---|---|---|---|---|---|---|
| HFO-1132a | mass% | 6.5 | 9.0 | 11.5 | 1.5 | 4.0 | 6.5 | 9.0 | 11.5 |
| R32 | mass% | 17.5 | 17.5 | 17.5 | 20.0 | 20.0 | 20.0 | 20.0 | 20.0 |
| R1234yf | mass% | 0.0 | 0.0 | 0.0 | 0.0 | 0.0 | 0.0 | 0.0 | 0.0 |
| R1234ze | mass% | 76.0 | 73.5 | 71.0 | 78.5 | 76.0 | 73.5 | 71.0 | 68.5 |
| GWP | - | 123 | 123 | 123 | 140 | 140 | 139 | 139 | 139 |
| COP ratio | % (relative to R404A) | 108.4 | 106.8 | 105.2 | 112.0 | 110.2 | 108.6 | 107.0 | 105.5 |
| Refrigerating capacity ratio | % (relative to R404A) | 72.1 | 76.6 | 81.2 | 67.0 | 71.6 | 76.2 | 80.9 | 85.6 |
| Condensation temperature glide | °C | 20.2 | 22.1 | 23.3 | 13.6 | 17.0 | 19.5 | 21.2 | 22.3 |

| Item | Unit | Comp. Ex. 174 | Comp. Ex. 175 | Comp. Ex. 176 | Comp. Ex. 177 | Comp. Ex. 178 |
|---|---|---|---|---|---|---|
| HFO-1132a | mass% | 1.5 | 4.0 | 6.5 | 9.0 | 11.5 |
| R32 | mass% | 22.5 | 22.5 | 22.5 | 22.5 | 22.5 |
| R1234yf | mass% | 0.0 | 0.0 | 0.0 | 0.0 | 0.0 |
| R1234ze | mass% | 76.0 | 73.5 | 71.0 | 68.5 | 66.0 |
| GWP | - | 156 | 156 | 156 | 156 | 156 |
| COP ratio | % (relative to R404A) | 112.1 | 110.3 | 108.7 | 107.1 | 105.6 |
| Refrigerating capacity ratio | % (relative to R404A) | 70.8 | 75.6 | 80.3 | 85.1 | 90.0 |
| Condensation temperature glide | °C | 13.4 | 16.5 | 18.8 | 20.3 | 21.3 |

Table 17

| Item | Unit | Ex. 182 | Comp. Ex. 179 | Comp. Ex. 180 | Ex. 183 | Ex. 184 | Ex. 185 | Comp. Ex. 181 | Comp. Ex. 182 |
|---|---|---|---|---|---|---|---|---|---|
| HFO-1132a | mass% | 1.5 | 1.5 | 1.5 | 1.5 | 1.5 | 1.5 | 1.5 | 1.5 |
| R32 | mass% | 10.0 | 10.0 | 10.0 | 15.0 | 15.0 | 15.0 | 15.0 | 15.0 |
| R1234yf | mass% | 83.5 | 73.5 | 63.5 | 78.5 | 68.5 | 58.5 | 38.5 | 28.5 |
| R1234ze | mass% | 5.0 | 15.0 | 25.0 | 5.0 | 15.0 | 25.0 | 45.0 | 55.0 |
| GWP | - | 71 | 71 | 72 | 105 | 105 | 105 | 106 | 106 |
| COP ratio | % (relative to R404A) | 106.9 | 107.4 | 108.0 | 107.3 | 107.8 | 108.3 | 109.5 | 110.0 |
| Refrigerating capacity ratio | % (relative to R404A) | 70.9 | 68.7 | 66.5 | 79.2 | 76.7 | 74.2 | 69.1 | 66.5 |

(continued)

| Item | Unit | Ex. 182 | Comp. Ex. 179 | Comp. Ex. 180 | Ex. 183 | Ex. 184 | Ex. 185 | Comp. Ex. 181 | Comp. Ex. 182 |
|---|---|---|---|---|---|---|---|---|---|
| Condensation temperature glide | °C | 8.1 | 8.5 | 9.0 | 8.4 | 8.9 | 9.5 | 10.8 | 11.5 |

| Item | Unit | Ex. 186 | Ex. 187 | Ex. 188 | Ex. 189 | Ex. 190 | Ex. 191 | Comp. Ex. 183 | Comp. Ex. 184 |
|---|---|---|---|---|---|---|---|---|---|
| HFO-1132a | mass% | 1.5 | 1.5 | 1.5 | 1.5 | 1.5 | 1.5 | 1.5 | 1.5 |
| R32 | mass% | 20.0 | 20.0 | 20.0 | 20.0 | 20.0 | 20.0 | 20.0 | 25.0 |
| R1234yf | mass% | 73.5 | 63.5 | 53.5 | 43.5 | 33.5 | 23.5 | 3.5 | 68.5 |
| R1234ze | mass% | 5.0 | 15.0 | 25.0 | 35.0 | 45.0 | 55.0 | 75.0 | 5.0 |
| GWP | - | 138 | 138 | 139 | 139 | 139 | 139 | 140 | 172 |
| COP ratio | % (relative to R404A) | 107.6 | 108.1 | 108.7 | 109.3 | 109.9 | 110.5 | 111.7 | 107.8 |
| Refrigerating capacity ratio | % (relative to R404A) | 87.4 | 84.7 | 81.9 | 79.1 | 76.2 | 73.4 | 67.9 | 95.4 |
| Condensation temperature glide | °C | 8.2 | 8.8 | 9.4 | 10.2 | 10.9 | 11.7 | 13.3 | 7.6 |

| Item | Unit | Comp. Ex. 185 | Comp. Ex. 186 | Comp. Ex. 187 | Comp. Ex. 188 | Comp. Ex. 189 | Comp. Ex. 190 |
|---|---|---|---|---|---|---|---|
| HFO-1132a | mass% | 1.5 | 1.5 | 1.5 | 1.5 | 1.5 | 1.5 |
| R32 | mass% | 25.0 | 25.0 | 25.0 | 25.0 | 25.0 | 25.0 |
| R1234yf | mass% | 58.5 | 48.5 | 38.5 | 28.5 | 18.5 | 8.5 |
| R1234ze | mass% | 15.0 | 25.0 | 35.0 | 45.0 | 55.0 | 65.0 |
| GWP | - | 172 | 172 | 172 | 173 | 173 | 173 |
| COP ratio | % (relative to R404A) | 108.4 | 109.1 | 109.7 | 110.3 | 111.0 | 111.6 |
| Refrigerating capacity ratio | % (relative to R404A) | 92.5 | 89.4 | 86.3 | 83.2 | 80.2 | 77.2 |
| Condensation temperature glide | °C | 8.2 | 9.0 | 9.8 | 10.7 | 11.5 | 12.4 |

Table 18

| Item | Unit | Ex. 192 | Comp. Ex. 191 | Comp. Ex. 192 | Ex.193 | Ex.194 | Ex.195 | Comp. Ex. 193 | Comp. Ex. 194 |
|---|---|---|---|---|---|---|---|---|---|
| HFO-1132a | mass% | 1.9 | 1.9 | 1.9 | 1.9 | 1.9 | 1.9 | 1.9 | 1.9 |
| R32 | mass% | 10.0 | 10.0 | 10.0 | 15.0 | 15.0 | 15.0 | 15.0 | 15.0 |
| R1234yf | mass% | 83.1 | 73.1 | 63.1 | 78.1 | 68.1 | 58.1 | 38.1 | 28.1 |
| R1234ze | mass% | 5.0 | 15.0 | 25.0 | 5.0 | 15.0 | 25.0 | 45.0 | 55.0 |

(continued)

| Item | Unit | Ex. 192 | Comp. Ex. 191 | Comp. Ex. 192 | Ex.193 | Ex.194 | Ex.195 | Comp. Ex. 193 | Comp. Ex. 194 |
|---|---|---|---|---|---|---|---|---|---|
| GWP | - | 71 | 71 | 72 | 105 | 105 | 105 | 105 | 106 |
| COP ratio | % (relative to R404A) | 106.8 | 107.3 | 107.8 | 107.1 | 107.6 | 108.2 | 109.3 | 109.8 |
| Refrigerating capacity ratio | % (relative to R404A) | 71.5 | 69.4 | 67.2 | 79.9 | 77.4 | 74.9 | 69.7 | 67.1 |
| Condensation temperature glide | °C | 8.4 | 8.9 | 9.4 | 8.7 | 9.3 | 9.9 | 11.3 | 12.1 |

| Item | Unit | Ex.196 | Ex.197 | Ex.198 | Ex.199 | Ex.200 | Ex.201 | Comp. Ex. 195 | Comp. Ex. 196 |
|---|---|---|---|---|---|---|---|---|---|
| HFO-1132a | mass% | 1.9 | 1.9 | 1.9 | 1.9 | 1.9 | 1.9 | 1.9 | 1.9 |
| R32 | mass% | 20.0 | 20.0 | 20.0 | 20.0 | 20.0 | 20.0 | 20.0 | 25.0 |
| R1234yf | mass% | 73.1 | 63.1 | 53.1 | 43.1 | 33.1 | 23.1 | 3.1 | 68.1 |
| R1234ze | mass% | 5.0 | 15.0 | 25.0 | 35.0 | 45.0 | 55.0 | 75.0 | 5.0 |
| GWP | - | 138 | 138 | 139 | 139 | 139 | 139 | 140 | 172 |
| COP ratio | % (relative to R404A) | 107.4 | 108.0 | 108.5 | 109.1 | 109.7 | 110.3 | 111.5 | 107.7 |
| Refrigerating capacity ratio | % (relative to R404A) | 88.1 | 85.4 | 82.6 | 79.7 | 76.9 | 74.1 | 68.5 | 96.2 |
| Condensation temperature glide | °C | 8.4 | 9.0 | 9.8 | 10.5 | 11.3 | 12.2 | 13.9 | 7.8 |

| Item | Unit | Comp. Ex. 197 | Comp. Ex. 198 | Comp. Ex. 199 | Comp. Ex. 200 | Comp. Ex. 201 | Comp. Ex. 202 |
|---|---|---|---|---|---|---|---|
| HFO-1132a | mass% | 1.9 | 1.9 | 1.9 | 1.9 | 1.9 | 1.9 |
| R32 | mass% | 25.0 | 25.0 | 25.0 | 25.0 | 25.0 | 25.0 |
| R1234yf | mass% | 58.1 | 48.1 | 38.1 | 28.1 | 18.1 | 8.1 |
| R1234ze | mass% | 15.0 | 25.0 | 35.0 | 45.0 | 55.0 | 65.0 |
| GWP | - | 172 | 172 | 172 | 173 | 173 | 173 |
| COP ratio | % (relative to R404A) | 108.3 | 108.9 | 109.5 | 110.1 | 110.7 | 111.4 |
| Refrigerating capacity ratio | % (relative to R404A) | 93.2 | 90.1 | 87.0 | 83.9 | 80.9 | 77.9 |
| Condensation temperature glide | °C | 8.5 | 9.3 | 10.2 | 11.0 | 12.0 | 12.9 |

Table 19

| Item | Unit | Ex. 202 | Ex. 203 | Ex. 204 | Comp. Ex. 203 | Comp. Ex. 204 | Ex. 205 | Ex. 206 | Ex. 207 |
|---|---|---|---|---|---|---|---|---|---|
| HFO-1132a | mass% | 6.0 | 6.0 | 6.0 | 6.0 | 6.0 | 6.0 | 6.0 | 6.0 |
| R32 | mass% | 10.0 | 10.0 | 10.0 | 10.0 | 10.0 | 15.0 | 15.0 | 15.0 |
| R1234yf | mass% | 79.0 | 69.0 | 59.0 | 39.0 | 29.0 | 74.0 | 64.0 | 54.0 |
| R1234ze | mass% | 5.0 | 15.0 | 25.0 | 45.0 | 55.0 | 5.0 | 15.0 | 25.0 |
| GWP | - | 71 | 71 | 71 | 72 | 72 | 105 | 105 | 105 |
| COP ratio | % (relative to R410A) | 105.6 | 105.9 | 106.2 | 106.9 | 107.2 | 105.8 | 106.1 | 106.5 |
| Refrigerating capacity ratio | % (relative to R410A) | 78.5 | 76.2 | 73.8 | 68.9 | 66.5 | 87.2 | 84.6 | 81.9 |
| Condensation temperature glide | °C | 11.6 | 12.4 | 13.3 | 15.6 | 17.0 | 11.3 | 12.2 | 13.1 |

| Item | Unit | Ex. 208 | Ex. 209 | Ex. 210 | Comp. Ex. 205 | Ex. 211 | Ex. 212 | Ex. 213 | Ex. 214 |
|---|---|---|---|---|---|---|---|---|---|
| HFO-1132a | mass% | 6.0 | 6.0 | 6.0 | 6.0 | 6.0 | 6.0 | 6.0 | 6.0 |
| R32 | mass% | 15.0 | 15.0 | 15.0 | 15.0 | 20.0 | 20.0 | 20.0 | 20.0 |
| R1234yf | mass% | 44.0 | 34.0 | 24.0 | 4.0 | 69.0 | 59.0 | 49.0 | 39.0 |
| R1234ze | mass% | 35.0 | 45.0 | 55.0 | 75.0 | 5.0 | 15.0 | 25.0 | 35.0 |
| GWP | - | 105 | 105 | 106 | 106 | 138 | 138 | 139 | 139 |
| COP ratio | % (relative to R410A) | 106.9 | 107.2 | 107.6 | 108.4 | 106.0 | 106.4 | 106.8 | 107.2 |
| Refrigerating capacity ratio | % (relative to R410A) | 79.1 | 76.4 | 73.6 | 68.3 | 95.7 | 92.9 | 89.9 | 86.8 |
| Condensation temperature glide | °C | 14.3 | 15.5 | 16.8 | 19.7 | 10.6 | 11.5 | 12.6 | 13.7 |

| Item | Unit | Ex. 215 | Ex. 216 | Ex. 217 | Comp. Ex. 206 | Comp. Ex. 207 | Comp. Ex. 208 | Comp. Ex. 209 | Comp. Ex. 210 |
|---|---|---|---|---|---|---|---|---|---|
| HFO-1132a | mass% | 6.0 | 6.0 | 6.0 | 6.0 | 6.0 | 6.0 | 6.0 | 6.0 |
| R32 | mass% | 20.0 | 20.0 | 20.0 | 25.0 | 25.0 | 25.0 | 25.0 | 25.0 |
| R1234yf | mass% | 29.0 | 19.0 | 9.0 | 64.0 | 54.0 | 44.0 | 34.0 | 24.0 |
| R1234ze | mass% | 45.0 | 55.0 | 65.0 | 5.0 | 15.0 | 25.0 | 35.0 | 45.0 |
| GWP | - | 139 | 139 | 139 | 172 | 172 | 172 | 172 | 172 |
| COP ratio | % (relative to R410A) | 107.6 | 108.1 | 108.5 | 106.2 | 106.6 | 107.0 | 107.5 | 108.0 |

(continued)

| Item | Unit | Ex. 215 | Ex. 216 | Ex. 217 | Comp. Ex. 206 | Comp. Ex. 207 | Comp. Ex. 208 | Comp. Ex. 209 | Comp. Ex. 210 |
|---|---|---|---|---|---|---|---|---|---|
| Refrigerating capacity ratio | % (relative to R410A) | 83.8 | 80.8 | 77.9 | 104.0 | 100.8 | 97.6 | 94.3 | 91.0 |
| Condensation temperature glide | °C | 15.0 | 16.3 | 17.7 | 9.7 | 10.7 | 11.8 | 13.0 | 14.3 |

| Item | Unit | Comp. Ex. 211 | Comp. Ex. 212 |
|---|---|---|---|
| HFO-1132a | mass% | 6.0 | 6.0 |
| R32 | mass% | 25.0 | 25.0 |
| R1234yf | mass% | 14.0 | 4.0 |
| R1234ze | mass% | 55.0 | 65.0 |
| GWP | - | 173 | 173 |
| COP ratio | % (relative to R410A) | 108.5 | 108.9 |
| Refrigerating capacity ratio | % (relative to R410A) | 87.8 | 84.7 |
| Condensation temperature glide | °C | 15.6 | 17.1 |

Table 20

| Item | Unit | Ex. 218 | Ex. 219 | Ex. 220 | Comp. Ex. 213 | Comp. Ex. 214 | Ex. 221 | Ex. 222 | Ex. 223 |
|---|---|---|---|---|---|---|---|---|---|
| HFO-1132a | mass% | 10.0 | 10.0 | 10.0 | 10.0 | 10.0 | 10.0 | 10.0 | 10.0 |
| R32 | mass% | 5.0 | 5.0 | 5.0 | 5.0 | 5.0 | 10.0 | 10.0 | 10.0 |
| R1234yf | mass% | 80.0 | 70.0 | 60.0 | 40.0 | 30.0 | 75.0 | 65.0 | 55.0 |
| R1234ze | mass% | 5.0 | 15.0 | 25.0 | 45.0 | 55.0 | 5.0 | 15.0 | 25.0 |
| GWP | - | 37 | 38 | 38 | 38 | 38 | 71 | 71 | 71 |
| COP ratio | % (relative to R410A) | 104.3 | 104.4 | 104.4 | 104.6 | 104.8 | 104.4 | 104.5 | 104.6 |
| Refrigerating capacity ratio | % (relative to R410A) | 76.5 | 74.4 | 72.2 | 67.6 | 65.2 | 85.6 | 83.1 | 80.6 |
| Condensation temperature glide | °C | 13.8 | 14.9 | 16.2 | 19.2 | 20.9 | 13.8 | 14.8 | 16.0 |

| Item | Unit | Ex. 224 | Ex. 225 | Ex. 226 | Comp. Ex. 215 | Ex. 227 | Ex. 228 | Ex. 229 | Ex. 230 |
|---|---|---|---|---|---|---|---|---|---|
| HFO-1132a | mass% | 10.0 | 10.0 | 10.0 | 10.0 | 10.0 | 10.0 | 10.0 | 10.0 |
| R32 | mass% | 10.0 | 10.0 | 10.0 | 10.0 | 15.0 | 15.0 | 15.0 | 15.0 |
| R1234yf | mass% | 45.0 | 35.0 | 25.0 | 5.0 | 70.0 | 60.0 | 50.0 | 40.0 |
| R1234ze | mass% | 35.0 | 45.0 | 55.0 | 75.0 | 5.0 | 15.0 | 25.0 | 35.0 |
| GWP | - | 72 | 72 | 72 | 72 | 104 | 105 | 105 | 105 |

(continued)

| Item | Unit | Ex. 224 | Ex. 225 | Ex. 226 | Comp. Ex. 215 | Ex. 227 | Ex. 228 | Ex. 229 | Ex. 230 |
|---|---|---|---|---|---|---|---|---|---|
| COP ratio | % (relative to R410A) | 104.7 | 104.9 | 105.1 | 105.5 | 104.5 | 104.7 | 104.8 | 105.0 |
| Refrigerating capacity ratio | % (relative to R410A) | 77.9 | 75.2 | 72.5 | 67.3 | 94.6 | 91.9 | 89.0 | 86.0 |
| Condensation temperature glide | °C | 17.4 | 18.9 | 20.6 | 24.4 | 13.1 | 14.2 | 15.4 | 16.7 |

| Item | Unit | Ex. 231 | Ex. 232 | Ex. 233 | Ex. 234 | Ex. 235 | Ex. 236 | Ex. 237 | Ex. 238 |
|---|---|---|---|---|---|---|---|---|---|
| HFO-1132a | mass% | 10.0 | 10.0 | 10.0 | 10.0 | 10.0 | 10.0 | 10.0 | 10.0 |
| R32 | mass% | 15.0 | 15.0 | 15.0 | 20.0 | 20.0 | 20.0 | 20.0 | 20.0 |
| R1234yf | mass% | 30.0 | 20.0 | 10.0 | 65.0 | 55.0 | 45.0 | 35.0 | 25.0 |
| R1234ze | mass% | 45.0 | 55.0 | 65.0 | 5.0 | 15.0 | 25.0 | 35.0 | 45.0 |
| GWP | - | 105 | 105 | 106 | 138 | 138 | 138 | 139 | 139 |
| COP ratio | % (relative to R410A) | 105.3 | 105.5 | 105.7 | 104.6 | 104.8 | 105.1 | 105.3 | 105.6 |
| Refrigerating capacity ratio | % (relative to R410A) | 83.0 | 80.0 | 77.1 | 103.4 | 100.4 | 97.2 | 93.9 | 90.7 |
| Condensation temperature glide | °C | 18.2 | 19.9 | 21.6 | 12.1 | 13.2 | 14.5 | 15.8 | 17.3 |

| Item | Unit | Ex. 239 | Ex. 240 | Comp. Ex. 216 | Comp. Ex. 217 | Comp. Ex. 218 | Comp. Ex. 219 | Comp. Ex. 220 | Comp. Ex. 221 |
|---|---|---|---|---|---|---|---|---|---|
| HFO-1132a | mass% | 10.0 | 10.0 | 10.0 | 10.0 | 10.0 | 10.0 | 10.0 | 10.0 |
| R32 | mass% | 20.0 | 20.0 | 25.0 | 25.0 | 25.0 | 25.0 | 25.0 | 25.0 |
| R1234yf | mass% | 15.0 | 5.0 | 60.0 | 50.0 | 40.0 | 30.0 | 20.0 | 10.0 |
| R1234ze | mass% | 55.0 | 65.0 | 5.0 | 15.0 | 25.0 | 35.0 | 45.0 | 55.0 |
| GWP | - | 139 | 139 | 172 | 172 | 172 | 172 | 172 | 173 |
| COP ratio | % (relative to R410A) | 105.9 | 106.2 | 104.7 | 105.0 | 105.3 | 105.6 | 105.9 | 106.3 |
| Refrigerating capacity ratio | % (relative to R410A) | 87.5 | 84.3 | 111.9 | 108.5 | 105.0 | 101.5 | 98.1 | 94.6 |
| Condensation temperature glide | °C | 19.0 | 20.7 | 11.0 | 12.2 | 13.5 | 14.9 | 16.4 | 18.0 |

**Claims**

1. A composition comprising a refrigerant comprising, based on the entire refrigerant, $\geq$ 99.5 mass% in total of 1,1-difluoroethylene (HFO-1132a), difluoromethane (R32) and 1,3,3,3-tetrafluoropropene (R1234ze), wherein, when the mass% of HFO-1132a, R32, and R1234ze based on their sum in the refrigerant is respectively represented by x, y, and z, the coordinates (x,y,z) in a ternary composition diagram in which the sum of HFO-1132a, R32, and R1234ze is 100 mass% are within the range of a figure surrounded by straight lines IB, BE, EF, and FI connecting the four points I, B, E and F, or on the straight lines:

   I (10.0, 74.0, 16.0)
   B (1.5, 73.9, 24.6)
   E (1.5, 56.2, 42.3)
   F (10.0, 37.7, 52.3).

2. The composition of claim 1, which, in the ternary diagram, is within the range of

   a figure surrounded by straight lines G'B, BG, and GG' connecting the three points G', B and G, or on the straight lines:

   G' (8.6, 73.9, 17.5)
   B (1.5, 73.9, 24.6)
   G (1.5, 65.9, 32.6), or

   a figure surrounded by straight lines JB', B'E, EF, and FJ connecting the four points J, B', E and F, or or on the straight lines:

   J (10.0, 59.0, 31.0)
   B' (1.5, 58.9, 39.6)
   E (1.5, 56.2, 42.3)
   F (10.0, 37.7, 52.3).

3. The composition of claim 1 or 2, wherein the refrigerant further comprises 2,3,3,3-tetrafluoro-1-propene (R1234yf).

4. A composition comprising a refrigerant comprising, based on the entire refrigerant, $\geq$ 99.5 mass% in total of R32, R1234yf, R1234ze and HFO-1132a, wherein, when the mass% of R32, R1234yf, R1234ze and HFO-1132a, based on their sum in the refrigerant, is respectively represented by x, y, z and a, the coordinates (x,y,z) in a ternary composition diagram in which the sum of R32, R1234yf, and R1234ze is (100-a) mass% are within the range of a figure surrounded by straight lines AB, BC, CD, and DA connecting the four points A, B, D and C:

   A (74.0, -a+26.0, 0.0),
   B (73.9, 0.0, -a+26.1),
   D ($0.0098a^2$-2.1856a+39.064, 0.0, $-0.0098a^2$+1.1856a+60.936),
   C ($0.0138a^2$-1.6252a+26.785, $-0.0138a^2$+0.6252a+73.215, 0.0), or on the straight lines AB and CD (excluding the points A, B, C, and D).

5. A composition comprising a refrigerant comprising, based on the entire refrigerant, $\geq$ 99.5 mass% in total of R32, R1234yf, R1234ze and HFO-1132a, wherein, when the mass% of R32, R1234yf, R1234ze and HFO-1132a, based on their sum in the refrigerant, is respectively represented by x, y, z and a, the coordinates (x,y,z) in a ternary composition diagram in which the sum of R32, R1234yf, and R1234ze is (100-a) mass% are within the range of a figure surrounded by straight lines AB, BF, FE, and EA connecting the four points A, NB, F and E:

   A (74.0, -a+26.0, 0.0),
   B (73.9, 0.0, -a+26.1),
   F ($0.0102a^2$-2.2922a+59.604, 0.0, $-0.0102a^2$+1.2922a+40.396),
   E ($0.0208a^2$-2.0723a+47.748, $-0.0208a^2$+1.0723a+52.252, 0.0), or on the straight lines AB and FE (excluding the points A, B, F, and E).

6. A composition comprising a refrigerant comprising, based on the entire refrigerant, $\geq$ 99.5 mass% in total of R32, R1234yf, R1234ze and HFO-1132a, wherein, when the mass% of R32, R1234yf, R1234ze and HFO-1132a, based on their sum in the refrigerant, is respectively represented by x, y, z and a, the coordinates (x,y,z) in a ternary composition diagram in which the sum of R32, R1234yf, and R1234ze is (100-a) mass% are within the following ranges:

if $5.0 \geq x \geq 1.5$:
a figure surrounded by straight lines AB, BH, HG, and GA connecting the four points A, B, H and G:

A (74.0, -a+26.0, 0.0),
B (73.9, 0.0, -a+26.1),
H ($-0.1143a^2+2.3143a+62.686$, 0.0, $0.1143a^2-3.3143a+37.314$),
G ($-0.0505a^2+2.6396a+34.049$, $0.0505a^2-3.6396a+65.951$, 0.0), or on the straight lines AB and HG (excluding the points A, B, H, and G);

if $7.5 \geq x > 5.0$:
a figure surrounded by straight lines AB, BH, HG, and GA connecting the four points A, B, H and G:

A (74.0, -a+26.0, 0.0),
B (73.9, 0.0, -a+26.1),
H ($-0.072a^2+1.9a+63.7$, 0.0, $0.072a^2-2.9a+36.3$), and
G ($-0.0505a^2+2.6396a+34.049$, $0.0505a^2-3.6396a+65.951$, 0.0), or on the straight lines AB and HG (excluding the points A,
B, H, and G); or

if $10.0 \geq x > 7.5$:
a figure surrounded by straight lines AR, RG, and GA connecting the three points A, R and G:

A (74.0, -a+26.0, 0.0),
R (73.9, 1.12a-8.4, -2.12a+34.5), and
G ($-0.0505a^2+2.6396a+34.049$, $0.0505a^2-3.6396a+65.951$, 0.0), or on the straight lines AR and RG (excluding the points A and G).

**7.** A composition comprising a refrigerant comprising, based on the entire refrigerant, $\geq$ 99.5 mass% in total of R32, R1234yf, R1234ze and HFO-1132a, wherein, when the mass% of R32, R1234yf, R1234ze and HFO-1132a, based on their sum in the refrigerant, is respectively represented by x, y, z and a, the coordinates (x,y,z) in a ternary composition diagram in which the sum of R32, R1234yf, and R1234ze is (100-a) mass% are within the range of a figure surrounded by straight lines A'B', B'D, DC, and CA' connecting the four points A', B', D and C:

A' (59.0, -a+41.0,0),
B' (58.9, 0.0, -a+41.1),
D ($0.0098a^2-2.1856a+39.064$, 0.0, $-0.0098a^2+1.1856a+60.936$)
C ($0.0138a^2-1.6252a+26.785$, $-0.0138a^2+0.6252a+73.215$, 0.0), or on the straight lines A'B' and DC (excluding the points A', B', D, and C).

**8.** A composition comprising a refrigerant comprising, based on the entire refrigerant, $\geq$ 99.5 mass% in total of R32, R1234yf, R1234ze and HFO-1132a, wherein, when the mass% of R32, R1234yf, R1234ze and HFO-1132a, based on their sum in the refrigerant, is respectively represented by x, y, z and a, the coordinates (x,y,z) in a ternary composition diagram in which the sum of R32, R1234yf, and R1234ze is (100-a) mass% are within the range of a figure surrounded by straight lines A'B', B'F, FE, and EA' connecting the four points A', B' F and E:

A' (59.0, -a+41.0, 0.0),
B' (58.9, 0.0, -a+41.1),
F ($0.0102a^2-2.2922a+59.604$, 0.0, $-0.0102a^2+1.2922a+40.396$),
E ($0.0208a^2-2.0723a+47.748$, $-0.0208a^2+1.0723a+52.252$, 0.0), or on the straight lines A'B' and FE (excluding the points A', B', F, and E).

**9.** A composition comprising a refrigerant comprising, based on the entire refrigerant, $\geq$ 99.5 mass% in total of R32, R1234yf, R1234ze and HFO-1132a, wherein, when the mass% of R32, R1234yf, R1234ze and HFO-1132a, based on their sum in the refrigerant, is respectively represented by x, y, z and a, the coordinates (x,y,z) in a ternary composition

**EP 4 261 476 B1**

diagram in which the sum of R32, R1234yf, and R1234ze is (100-a) mass% are within the following ranges:

if 5.0≥x≥1.5:
a figure surrounded by straight lines A'P, PG, and GA' connecting the three points A', P and G:

A' (59.0, -a+41.0, 0.0),
P (-0.019a$^2$+0.1524a+58.714, -0.2571a$^2$+4.1571a+9.5429, 0.2761a$^2$-5.3095a+31.7431),
G (-0.0505a$^2$+2.6396a+34.049, 0.0505a$^2$-3.6396a+65.951, 0.0), or on the straight lines A'P and PG (excluding the points A' and G); or

if 10.0≥x>5:
a figure surrounded by straight lines A'P, PG, and GA' connecting the three points A', P and G:

A' (59.0, -a+41.0, 0.0),
P (59.0, -0.136a$^2$+2.94a+12.6, 0.136a$^2$-3.94a+28.4),
G (-0.0505a$^2$+2.6396a+34.049, 0.0505a$^2$-3.6396a+65.951, 0.0), or on the straight lines A'P and PG (excluding the points A' and G).

10. A composition comprising a refrigerant comprising, based on the entire refrigerant, ≥ 99.5 mass% in total of R32, R1234yf, R1234ze and HFO-1132a, wherein, when the mass% of R32, R1234yf, R1234ze and HFO-1132a, based on their sum in the refrigerant, is respectively represented by x, y, z and a, the coordinates (x,y,z) in a ternary composition diagram in which the sum of R32, R1234yf, and R1234ze is (100-a) mass% are within the following ranges:

if 1.9≥x≥1.5:
a figure surrounded by straight lines A''T, TM, and MA'' connecting the three points A'', T and M:

A'' (21.8, -a+78.2, 0.0),
T (21.5, -15.0a+28.5, 14.0a+50.0), and
M (0.0035a$^2$-0.9809a+10.358, -0.0035a$^2$-0.0191a+89.642, 0.0), or on the straight lines A''T and TM (excluding the points A'' and M); or

if 10.0≥x>1.9:
a figure surrounded by straight lines A''B'', B''L, LM, and MA'' connecting the four points A'', B'', L and M:

A'' (21.8, -a+78.2, 0.0),
B'' (0.0108a+21.473, 0.0, -1.0108a+78.527),
L (0.0098a$^2$-1.2237a+23.804, 0.0, -0.0098a$^2$+0.2237a+76.196),
M (0.0035a$^2$-0.9809a+10.358, -0.0035a$^2$-0.0191a+89.642, 0.0), or on the straight lines A''B'' and LM (excluding the points A'', B'', L, and M).

11. The composition of any of claims 1-10, which further comprises a refrigeration oil.

12. A refrigerating machine comprising the composition of any of claims 1-11 as a working fluid.

13. A method for operating a refrigerating machine, comprising circulating the composition of any of claims 1-11 as a working fluid in a refrigerating machine.

14. Use of the composition of any of claims 1-9 as an alternative refrigerant for R410A.

15. Use of the composition of claim 10 as an alternative refrigerant for R404A.

**Patentansprüche**

1. Zusammensetzung, umfassend ein Kältemittel, das, bezogen auf das gesamte Kältemittel, insgesamt ≥ 99,5 Massenprozent 1,1-Difluorethylen (HFO-1132a), Difluormethan (R32) und 1,3,3,3-Tetrafluorpropen (R1234ze) umfasst, wobei, wenn die Massenprozente von HFO-1132a, R32 und R1234ze, bezogen auf ihre Summe im Kältemittel, jeweils durch x, y und z dargestellt werden, die Koordinaten (x, y, z) in einem ternären Zusammensetzungsdiagramm, in dem die Summe von HFO-1132a, R32 und R1234ze 100 Massenprozent beträgt, innerhalb des Bereichs einer Figur liegen, umgeben von den geraden Linien IB, BE, EF und FI, die die vier Punkte I, B, E und F verbinden, oder auf den geraden Linien liegen:

I (10,0, 74,0, 16,0)
B (1,5, 73,9, 24,6)
E (1,5, 56,2, 42,3)
F (10,0, 37,7, 52,3).

2. Zusammensetzung gemäß Anspruch 1, die in dem ternären Diagramm innerhalb des Bereichs

einer Figur liegt, umgeben von den geraden Linien G'B, BG und GG', die die drei Punkte G', B und G verbinden, oder auf den geraden Linien liegt:

G' (8,6, 73,9, 17,5)
B (1,5, 73,9, 24,6)
G (1,5, 65,9, 32,6) oder

einer Figur liegt, umgeben von den geraden Linien JB', B'E, EF und FJ, die die vier Punkte J, B', E und F verbinden, oder auf den geraden Linien liegt:

J (10,0, 59,0, 31,0)
B' (1,5, 58,9, 39,6)
E (1,5, 56,2, 42,3)
F (10,0, 37,7, 52,3).

3. Zusammensetzung gemäß Anspruch 1 oder 2, wobei das Kältemittel ferner 2,3,3,3-Tetrafluor-1-propen (R1234yf) umfasst.

4. Zusammensetzung, umfassend ein Kältemittel, das, bezogen auf das gesamte Kältemittel, insgesamt $\geq$ 99,5 Massenprozent R32, R1234yf, R1234ze und HFO-1132a umfasst, wobei, wenn die Massenprozente von R32, R1234yf, R1234ze und HFO-1132a, bezogen auf ihre Summe im Kältemittel, jeweils durch x, y, z und a dargestellt werden, die Koordinaten (x, y, z) in einem ternären Zusammensetzungsdiagramm, in dem die Summe von R32, R1234yf und R1234ze (100-a) Massenprozent beträgt, innerhalb des Bereichs einer Figur liegen, umgeben von den geraden Linien AB, BC, CD und DA, die die vier Punkte A, B, D und C verbinden:

A (74,0, -a+26,0, 0,0),
B (73,9, 0,0, -a+26,1),
D (0,0098a$^2$-2,1856a+39,064, 0,0, -0,0098a$^2$+1,1856a+60,936),
C (0,0138a$^2$-1,6252a+26,785, -0,0138a$^2$+0,6252a+73,215, 0,0),
oder auf den geraden Linien AB und CD (mit Ausnahme der Punkte A, B, C und D liegen).

5. Zusammensetzung, umfassend ein Kältemittel, das, bezogen auf das gesamte Kältemittel, insgesamt $\geq$ 99,5 Massenprozent R32, R1234yf, R1234ze und HFO-1132a umfasst, wobei, wenn die Massenprozente von R32, R1234yf, R1234ze und HFO-1132a, bezogen auf ihre Summe im Kältemittel, jeweils durch x, y, z und a dargestellt werden, die Koordinaten (x, y, z) in einem ternären Zusammensetzungsdiagramm, in dem die Summe von R32, R1234yf und R1234ze (100-a) Massenprozent beträgt, innerhalb des Bereichs einer Figur liegen, umgeben von den geraden Linien AB, BF, FE und EA, die die vier Punkte A, NB, F und E verbinden:

A (74,0, -a+26,0, 0,0),
B (73,9, 0,0, -a+26,1),
F (0,0102a$^2$-2,2922a+59,604, 0,0, -0,0102a$^2$+1,2922a+40,396),
E (0,0208a$^2$-2,0723a+47,748, -0,0208a$^2$+1,0723a+52,252, 0,0),
oder auf den geraden Linien AB und FE (mit Ausnahme der Punkte A, B, F und E) liegen.

6. Zusammensetzung, umfassend ein Kältemittel, das, bezogen auf das gesamte Kältemittel, insgesamt $\geq$ 99,5 Massenprozent R32, R1234yf, R1234ze und HFO-1132a umfasst, wobei, wenn die Massenprozente von R32, R1234yf, R1234ze und HFO-1132a, bezogen auf ihre Summe im Kältemittel, jeweils durch x, y, z und a dargestellt werden, die Koordinaten (x, y, z) in einem ternären Zusammensetzungsdiagramm, in dem die Summe von R32, R1234yf und R1234ze (100-a) Massenprozent beträgt, innerhalb der folgenden Bereiche liegen:

wenn $5,0 \geq x \geq 1,5$:
einer Figur, umgeben von den geraden Linien AB, BH, HG und GA, die die vier Punkte A, B, H und G verbinden:

A (74,0, -a+26,0, 0,0),
B (73,9, 0,0, -a+26,1),
H (-0,1143a$^2$+2,3143a+62,686, 0,0, 0,1143a$^2$-3,3143a+37,314),
G (-0,0505a$^2$+2,6396a+34,049, 0,0505a$^2$-3,6396a+65,951, 0,0), oder auf den geraden Linien AB und HG (mit Ausnahme der Punkte A, B, H und G) liegen;

wenn $7,5 \geq x > 5,0$:
einer Figur, umgeben von den geraden Linien AB, BH, HG und GA, die die vier Punkte A, B, H und G verbinden:

A (74,0, -a+26,0, 0,0),
B (73,9, 0,0, -a+26,1),
H (-0,072a$^2$+1,9a+63,7, 0,0, 0,072a$^2$-2,9a+36,3) und
G (-0,0505a$^2$+2,6396a+34,049, 0,0505a$^2$-3,6396a+65,951, 0,0), oder auf den geraden Linien AB und HG (mit Ausnahme der Punkte A, B, H und G) liegen; oder

wenn $10,0 \geq x > 7,5$:
einer Figur, umgeben von den geraden Linien AR, RG und GA, die die drei Punkte A, R und G verbinden:

A (74,0, -a+26,0, 0,0),
R (73,9, 1,12a-8,4, -2,12a+34,5) und
G (-0, 0505a$^2$+2, 6396a+34, 049, 0,0505a$^2$-3,6396a+65,951, 0,0),
oder auf den geraden Linien AR und RG (mit Ausnahme der Punkte A und G) liegen.

7. Zusammensetzung, umfassend ein Kältemittel, das, bezogen auf das gesamte Kältemittel, insgesamt $\geq$ 99,5 Massenprozent R32, R1234yf, R1234ze und HFO-1132a umfasst, wobei, wenn die Massenprozente von R32, R1234yf, R1234ze und HFO-1132a, bezogen auf ihre Summe im Kältemittel, jeweils durch x, y, z und a dargestellt werden, die Koordinaten (x, y, z) in einem ternären Zusammensetzungsdiagramm, in dem die Summe von R32, R1234yf und R1234ze (100-a) Massenprozent beträgt, innerhalb des Bereichs einer Figur liegen, umgeben von den geraden Linien A'B', B'D, DC und CA', die die vier Punkte A', B', D und C verbinden:

A' (59,0, -a+41,0, 0),
B' (58,9, 0,0, -a+41,1),
D (0,0098a$^2$-2,1856a+39,064, 0,0, -0,0098a$^2$+1, 1856a+60, 936)
C (0,0138a$^2$-1,6252a+26,785, -0,0138a$^2$+0,6252a+73,215, 0,0),
oder auf den geraden Linien A'B' und DC (mit Ausnahme der Punkte A', B', D und C) liegen.

8. Zusammensetzung, umfassend ein Kältemittel, das, bezogen auf das gesamte Kältemittel, insgesamt $\geq$ 99,5 Massenprozent R32, R1234yf, R1234ze und HFO-1132a umfasst, wobei, wenn die Massenprozente von R32, R1234yf, R1234ze und HFO-1132a, bezogen auf ihre Summe im Kältemittel, jeweils durch x, y, z und a dargestellt werden, die Koordinaten (x, y, z) in einem ternären Zusammensetzungsdiagramm, in dem die Summe von R32, R1234yf und R1234ze (100-a) Massenprozent beträgt, innerhalb des Bereichs einer Figur liegen, umgeben von den geraden Linien A'B', B'F, FE und EA', die die vier Punkte A', B', F und E verbinden:

A' (59,0, -a+41,0, 0,0),
B' (58,9, 0,0, -a+41,1),
F (0,0102a$^2$-2,2922a+59,604, 0,0, -0,0102a$^2$+1,2922a+40,396),
E (0,0208a$^2$-2,0723a+47,748, -0,0208a$^2$+1,0723a+52,252, 0,0),
oder auf den geraden Linien A'B' und FE (mit Ausnahme der Punkte A', B', F und E) liegen.

9. Zusammensetzung, umfassend ein Kältemittel, das, bezogen auf das gesamte Kältemittel, insgesamt $\geq$ 99,5 Massenprozent R32, R1234yf, R1234ze und HFO-1132a umfasst, wobei, wenn die Massenprozente von R32, R1234yf, R1234ze und HFO-1132a bezogen auf ihre Summe im Kältemittel, jeweils durch x, y, z und a dargestellt werden, die Koordinaten (x, y, z) in einem ternären Zusammensetzungsdiagramm, in dem die Summe von R32, R1234yf und R1234ze (100-a) Massenprozent beträgt, innerhalb der folgenden Bereiche liegen:

wenn $5,0 \geq x \geq 1,5$:

einer Figur, umgeben von den geraden Linien A'P, PG und GA', die die drei Punkte A', P und G verbinden:

A' (59,0, -a+41,0, 0,0),
P ($-0,019a^2+0,1524a+58,714$, $-0,2571a^2+4,1571a+9,5429$, $0,2761a^2-5,3095a+31,7431$),
G ($-0, 0505a^2+2, 6396a+34, 049$, $0,0505a^2-3,6396a+65,951$, 0,0),
oder auf den geraden Linien A'P und PG (mit Ausnahme der Punkte A' und G) liegen; oder

wenn $10,0 \geq x > 5$:

einer Figur, umgeben von den geraden Linien A'P, PG und GA', die die drei Punkte A', P und G verbinden:

A' (59,0, -a+41,0, 0,0),
P (59,0, $-0,136a^2+2,94a+12,6$, $0,136a^2-3,94a+28,4$),
G ($-0, 0505a^2+2, 6396a+34, 049$, $0,0505a^2-3,6396a+65,951$, 0,0),
oder auf den geraden Linien A'P und PG (mit Ausnahme der Punkte A' und G) liegen.

10. Zusammensetzung, umfassend ein Kältemittel, das, bezogen auf das gesamte Kältemittel, insgesamt $\geq 99,5$ Massenprozent R32, R1234yf, R1234ze und HFO-1132a umfasst, wobei, wenn die Massenprozente von R32, R1234yf, R1234ze und HFO-1132a, bezogen auf ihre Summe im Kältemittel, jeweils durch x, y, z und a dargestellt werden, die Koordinaten (x, y, z) in einem ternären Zusammensetzungsdiagramm, in dem die Summe von R32, R1234yf und R1234ze (100-a) Massenprozent beträgt, innerhalb der folgenden Bereiche liegen:

wenn $1,9 \geq x \geq 1,5$:

einer Figur, umgeben von den geraden Linien A"T, TM und MA", die die drei Punkte A'', T und M verbinden:
A'' (21,8, -a+78,2, 0,0),
T (21,5, -15,0a+28,5, 14,0a+50,0) und
M ($0,0035a^2-0,9809a+10, 358$, $-0,0035a^2-0,0191a+89,642$, 0,0),
oder auf den geraden Linien A"T und TM (mit Ausnahme der Punkte A'' und M) liegen; oder

wenn $10,0 \geq x > 1,9$:
einer Figur, umgeben von den geraden Linien A"B", B"L, LM und MA", die die vier Punkte A'', B'', L und M verbinden:

A'' (21,8, -a+78,2, 0,0),
B'' (0,0108a+21,473, 0,0, -1,0108a+78,527),
L ($0,0098a^2-1,2237a+23,804$, 0,0, $-0,0098a^2+0,2237a+76,196$),
M ($0,0035a^2-0,9809a+10,358$, $-0,0035a^2-0,0191a+89,642$, 0,0), oder auf den geraden Linien A"B" und LM (mit Ausnahme der Punkte A", B'', L und M) liegen.

11. Zusammensetzung gemäß mindestens einem der Ansprüche 1 bis 10, die ferner ein Kältemaschinenöl umfasst.

12. Kältemaschine, die die Zusammensetzung gemäß mindestens einem der Ansprüche 1 bis 11 als Arbeitsfluid umfasst.

13. Verfahren zum Betreiben einer Kältemaschine, umfassend das Zirkulieren der Zusammensetzung gemäß mindestens einem der Ansprüche 1 bis 11 als Arbeitsfluid in einer Kältemaschine.

14. Verwendung der Zusammensetzung gemäß mindestens einem der Ansprüche 1 bis 9 als alternatives Kältemittel für R410A.

15. Verwendung der Zusammensetzung gemäß Anspruch 10 als alternatives Kältemittel für R404A.

**Revendications**

1. Composition comprenant un réfrigérant comprenant, sur la base de l'ensemble du réfrigérant, ≥ 99,5 % en masse au total de 1,1-difluoroéthylène (HFO-1132a), de difluorométhane (R32) et de 1,3,3,3-tétrafluoropropène (R1234ze) , dans laquelle, lorsque le pourcentage massique de HFO-1132a, R32 et R1234ze par rapport à leur somme dans le réfrigérant est respectivement représenté par x, y et z, les coordonnées (x, y, z) dans un diagramme de composition ternaire dans lequel la somme de HFO-1132a, R32 et R1234ze est de 100 % en masse se situent dans la plage d'une figure entourée par les lignes droites IB, BE, EF et FI reliant les quatre points I, B, E et F, ou sur les lignes droites :

   I (10,0, 74,0, 16,0)
   B (1,5, 73,9, 24,6)
   E (1,5, 56,2, 42,3)
   F (10,0, 37,7, 52,3).

2. La composition de la revendication 1, qui, dans le diagramme ternaire, se situe dans la plage d'une figure entourée par les lignes droites G'B, BG et GG' reliant les trois points G', B et G, ou sur les lignes droites :

   G' (8,6, 73,9, 17,5)
   B (1,5, 73,9, 24,6)
   G (1,5, 65,9, 32,6), ou
   une figure entourée par les lignes droites JB', B'E, EF et FJ reliant les quatre points J, B', E et F, ou sur les lignes droites :

   J (10,0, 59,0, 31,0)
   B' (1,5, 58,9, 39,6)
   E (1,5, 56,2, 42,3)
   F (10,0, 37, 7, 52,3).

3. La composition selon la revendication 1 ou 2, dans laquelle le réfrigérant comprend en outre du 2,3,3,3-tétrafluoro-1-propène (R1234yf).

4. Composition comprenant un réfrigérant comprenant, sur la base de l'ensemble du réfrigérant, ≥ 99,5 % en masse au total de R32, R1234yf, R1234ze et HFO-1132a, dans laquelle, lorsque le pourcentage en masse de R32, R1234yf, R1234ze et HFO-1132a, sur la base de leur somme dans le réfrigérant, est respectivement représenté par x, y, z et a, les coordonnées (x, y, z) dans un diagramme de composition ternaire dans lequel la somme de R32, R1234yf et R1234ze est de (100-a) % en masse se situent dans la plage d'une figure entourée par les lignes droites AB, BC, CD et DA reliant les quatre points A, B, D et C :

   A (74,0, -a+26,0, 0,0),
   B (73,9, 0,0, -a+26,1),
   D ($0,0098a^2$-2,1856a+39,064, 0,0, -
   $0,0098a^2$+1,1856a+60,936),
   C ($0,0138a^2$-1,6252a+26,785, -$0,0138a^2$+0,6252a+73,215, 0,0),
   ou sur les droites AB et CD (à l'exclusion des points A, B, C et D).

5. Composition comprenant un réfrigérant comprenant, sur la base de l'ensemble du réfrigérant, ≥ 99,5 % en masse au total de R32, R1234yf, R1234ze et HFO-1132a, dans laquelle, lorsque le pourcentage en masse de R32, R1234yf, R1234ze et HFO-1132a, sur la base de leur somme dans le réfrigérant, est respectivement représenté par x, y, z et a, les coordonnées (x, y, z) dans un diagramme de composition ternaire dans lequel la somme de R32, R1234yf et R1234ze est de (100-a) % en masse se situent dans la plage d'une figure entourée par les lignes droites AB, BF, FE et EA reliant les quatre points A, NB, F et E :

   A (74,0, -a+26,0, 0,0),
   B (73,9, 0,0, -a+26,1),
   F ($0,0102a^2$-2,2922a+59,604, 0,0, -
   $0,0102a^2$+1,2922a+40,396),
   E ($0,0208a^2$-2.0723a+47,748, -$0,0208a^2$+1,0723a+52,252, 0,0),
   ou sur les droites AB et FE (à l'exclusion des points A, B, F et E).

**6.** Composition comprenant un réfrigérant comprenant, sur la base de l'ensemble du réfrigérant, ≥ 99,5 % en masse au total de R32, R1234yf, R1234ze et HFO-1132a, dans laquelle, lorsque le pourcentage en masse de R32, R1234yf, R1234ze et HFO-1132a, sur la base de leur somme dans le réfrigérant, est respectivement représenté par x, y, z et a, les coordonnées (x, y, z) dans un diagramme de composition ternaire dans lequel la somme de R32, R1234yf et R1234ze est de (100-a) % en masse se situent dans les plages suivantes :

si $5,0 \geq x \geq 1,5$ :
une figure entourée par les lignes droites AB, BH, HG et GA reliant les quatre points A, B, H et G :

A (74,0, -a+26,0, 0,0),
B (73,9, 0,0, -a+26,1),
H (-0,1143a$^2$+2,3143a+62,686, 0,0, 0,1143a$^2$-3, 3143a+37, 314),
G (-0,0505a$^2$+2,6396a+34,049, 0,0505a$^2$-3,6396a+65,951, 0,0),
ou sur les lignes droites AB et HG (à l'exclusion des points A, B, H et G) ;

si $7,5 \geq x > 5,0$ :
une figure entourée par les lignes droites AB, BH, HG et GA reliant les quatre points A, B, H et G :

A (74,0, -a+26,0, 0,0),
B (73,9, 0,0, -a+26,1),
H (-0,072a$^2$+1,9a+63,7, 0,0, 0,072a$^2$-2,9a+36,3), et
G (-0,0505a$^2$+2,6396a+34,049, 0,0505a$^2$-3,6396a+65,951, 0,0),
ou sur les droites AB et HG (à l'exclusion des points A, B, H et G) ; ou

si $10,0 \geq x > 7,5$ :
une figure entourée par les droites AR, RG et GA reliant les trois points A, R et G :

A (74,0, -a+26,0, 0,0),
R (73,9, 1,12a-8,4, -2,12a+34,5), et
G (-0,0505a$^2$+2,6396a+34,049, 0,0505a$^2$-3,6396a+65,951, 0,0),
ou sur les droites AR et RG (à l'exclusion des points A et G).

**7.** Composition comprenant un réfrigérant comprenant, sur la base de l'ensemble du réfrigérant, ≥ 99,5 % en masse au total de R32, R1234yf, R1234ze et HFO-1132a, dans laquelle, lorsque le pourcentage en masse de R32, R1234yf, R1234ze et HFO-1132a, sur la base de leur somme dans le réfrigérant, est respectivement représenté par x, y, z et a, les coordonnées (x, y, z) dans un diagramme de composition ternaire dans lequel la somme de R32, R1234yf et R1234ze est de (100-a) % en masse se situent dans la plage d'une figure entourée par les lignes droites A'B', B'D, DC et CA' reliant les quatre points A', B', D et C :

A' (59,0, -a+41,0,0),
B' (58,9, 0,0, -a+41,1),
D (0,0098a$^2$-2,1856a+39,064, 0,0, -0,0098a$^2$+1,1856a+60,936)
C (0,0138a$^2$-1,6252a+26,785, -0,0138a$^2$+0,6252a+73,215, 0,0),
ou sur les droites A'B' et DC (à l'exclusion des points A', B', D et C).

**8.** Composition comprenant un réfrigérant comprenant, sur la base de l'ensemble du réfrigérant, ≥ 99,5 % en masse au total de R32, R1234yf, R1234ze et HFO-1132a, dans laquelle, lorsque le pourcentage en masse de R32, R1234yf, R1234ze et HFO-1132a, sur la base de leur somme dans le réfrigérant, est respectivement représenté par x, y, z et a, les coordonnées (x, y, z) dans un diagramme de composition ternaire dans lequel la somme de R32, R1234yf et R1234ze est de (100-a) % en masse se situent dans la plage d'une figure entourée par les lignes droites A'B', B'F, FE et EA' reliant les quatre points A', B', F et E :

A' (59,0, -a+41,0, 0,0),
B' (58,9, 0,0, -a+41,1),
F (0,0102a$^2$-2,2922a+59,604, 0,0, -0,0102a$^2$+1,2922a+40,396),
E (0,0208a$^2$-2,0723a+47,748, -0,0208a$^2$+1,0723a+52,252, 0,0),

ou sur les droites A'B' et FE (à l'exclusion des points A', B', F et E).

9. Composition comprenant un réfrigérant comprenant, sur la base de l'ensemble du réfrigérant, ≥ 99,5 % en masse au total de R32, R1234yf, R1234ze et HFO-1132a, dans laquelle, lorsque le pourcentage en masse de R32, R1234yf, R1234ze et HFO-1132a, sur la base de leur somme dans le réfrigérant, est respectivement représenté par x, y, z et a, les coordonnées (x, y, z) dans un diagramme de composition ternaire dans lequel la somme de R32, R1234yf et R1234ze est de (100-a) % en masse se situent dans les plages suivantes :

si $5,0 \geq x \geq 1,5$ :
une figure entourée par les lignes droites A'P, PG et GA' reliant les trois points A', P et G :

A' (59,0, -a+41,0, 0,0),
P (-0,019a$^2$+0,1524a+58,714, -0,2571a$^2$+4,1571a+9,5429, 0,2761a$^2$-5,3095a+31,7431),
G (-0,0505a$^2$+2,6396a+34,049, 0,0505a$^2$-3,6396a+65,951, 0,0),
ou sur les droites A'P et PG (à l'exclusion des points A' et G) ; ou

si $10,0 \geq x > 5$ :
une figure entourée par les droites A'P, PG et GA' reliant les trois points A', P et G :

A' (59,0, -a+41,0, 0,0),
P (59,0, -0,136a$^2$+2,94a+12,6, 0,136a$^2$-3,94a+28,4),
G (-0,0505a$^2$+2,6396a+34,049, 0,0505a$^2$-3,6396a+65,951, 0,0),
ou sur les droites A'P et PG (à l'exclusion des points A' et G).

10. Composition comprenant un réfrigérant comprenant, sur la base de l'ensemble du réfrigérant, ≥ 99,5 % en masse au total de R32, R1234yf, R1234ze et HFO-1132a, dans laquelle, lorsque le pourcentage en masse de R32, R1234yf, R1234ze et HFO-1132a, sur la base de leur somme dans le réfrigérant, est respectivement représenté par x, y, z et a, les coordonnées (x, y, z) dans un diagramme de composition ternaire dans lequel la somme de R32, R1234yf et R1234ze est de (100-a) % en masse se situent dans les plages suivantes :

si $1,9 \geq x \geq 1,5$ :
une figure entourée par les lignes droites A''T, TM et MA'' reliant les trois points A'', T et M :

A'' (21,8, -a+78,2, 0,0),
T (21,5, -15,0a+28,5, 14,0a+50,0), et
M (0,0035a$^2$-0,9809a+10,358, -0,0035a$^2$-0,0191a+89,642, 0,0),
ou sur les droites A"T et TM (à l'exclusion des points A" et M) ; ou

si $10,0 \geq x > 1,9$ :
une figure entourée par les droites A''B'', B''L, LM et MA'' reliant les quatre points A", B'', L et M :

A'' (21,8, -a+78,2, 0,0),

B" (0,0108a+21,473, 0,0, -1,0108a+78,527),
L (0,0098a$^2$-1,2237a+23,804, 0,0, -0,0098a$^2$+0,2237a+76,196),
M (0,0035a$^2$-0,9809a+10,358, -0,0035a$^2$-0,0191a+89,642, 0,0),
ou sur les lignes droites A"B" et LM (à l'exclusion des points A'', B'', L et M).

11. Composition selon l'une quelconque des revendications 1 à 10, qui comprend en outre une huile réfrigérante.

12. Machine frigorifique comprenant la composition selon l'une quelconque des revendications 1 à 11 en tant que fluide de travail.

13. Procédé pour faire fonctionner une machine frigorifique, comprenant la circulation de la composition de l'une quelconque des revendications 1 à 11 en tant que fluide de travail dans une machine frigorifique.

14. Utilisation de la composition de l'une quelconque des revendications 1 à 9 en tant que réfrigérant alternatif pour le R410A.

**15.** L'utilisation de la composition de la revendication 10 en tant que réfrigérant alternatif pour le R404A.

Fig.1

Fig.2

Fig. 3

Fig. 4

Fig. 5

Fig. 6

Fig. 7

Fig. 8

Fig. 9

Fig. 10

Fig. 11

Fig. 12

Fig. 13

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2015141678 A
- WO 2015125874 A
- WO 2020035690 A